# EUROPEAN PATENT APPLICATION

(11) **EP 3 249 893 A1**
(43) Date of publication of application: **29.11.2017**
(21) Application number: 17181180.5
(22) Date of filing: 03.06.2009
(51) Int. Cl.: H04L 29/08, G06F 9/44, G06F 11/263, H04L 12/28

(54) **APPLIANCE DEVELOPMENT TOOLKIT**

(30) Priority: 03.06.2008 US 58440 P
(62) Divisional of application: 09759378.4
(71) Applicant: Whirlpool Corporation, Benton Harbor, MI 49022 (US)
(72) Inventor: Argue, Paul R., Buchanan, MI Michigan 49107 (US); Ebrom, Matthew P., Holland, MI Michigan 49423 (US); Glotzbach, Patrick J., St. Joseph, MI Michigan 49085 (US); McCoy, Richard A., Stevensville, MI Michigan 49127 (US); Radford, Brian N., St. Joseph, MI Michigan 49085 (US)
(74) Representative: Schaumburg und Partner Patentanwälte mbB

(57) **Abstract**

In one aspect, the disclosure relates to an appliance configured to perform a cycle of operation on a physical article comprising at least one control board having control software to control the cycle of operation, a graphical user interface in communication with the at least one control board for allowing a user to observe and interact with the appliance regarding the cycle of operation, and a software framework configured to run in a processor having memory in communication with the graphical user interface. Aspects of the disclosure are further characterized by the software framework having theme definitions, access to a builder content information containing information with which the software framework associates a theme definition with at least one resource, and a theme manager configured to change at least one theme to at least one different theme in response to a user selection of a theme definition or sensing of the information by at least one sensor. The software framework dynamically renders the graphical user interface at runtime based on the at least one resource in response to the user selection of theme or the sensing so that a user can cause the control board to control the cycle of operation via the selected theme in the graphical user interface.

## Description

### CROSS REFERENCE TO RELATED APPLICATIONS

This application claims priority from U.S. Application Serial No. 61/058,440 filed June 3, 2008.

### Field of the Invention

The invention relates to tools for editing software associated with the operation of household appliances.

### Description of the Related Art

Household appliances typically comprise one or more components responsible for the electromechanical operations of the appliance. For example, an oven can include an appliance management component having a printed circuit board (PCB) with memory, as well as a user-interface component, such as a control panel or keypad, for a user to issue commands to the oven. As another example, a washing machine can include an appliance management component, a user-interface component, and a motor control component that controls a motor of the washing machine.

Typically, discrete circuits couple the internal components of an appliance, with each discrete circuit responsible for individual communication between related components. The circuits communicate with each other over an internal network that traditionally is implemented by hard-wired ribbon cables or other connectors or harnesses between the components. The hard-wired connectors form a closed system or network that is difficult or not possible to modify. For example, because the closed network relies on hard-coded or hard-wired network solutions, it is not practical to couple additional external components or additional internal components to the appliance to expand the capability or function of the appliance. The closed network cannot easily be adapted for communication with the additional external/internal components and therefore limits the potential of the appliance.

In some instances, service personnel can access the interior of an appliance and connect an external device to the internal network in order to modify the operation of or otherwise interact with the internal components of the appliance. However, scheduling appointments with service personnel can be inconvenient, and accessing the interior of the appliance can require the use of specialized tools and can potentially damage the appliance in the process. In addition, due to the limited potential of the internal components, the user of the appliance is unable to thoroughly personalize the operation of the appliance in order to tailor the appliance to his or her particular needs.

### SUMMARY OF THE INVENTION

In accord with the invention, an appliance development toolkit enables creation of content to affect operation of a component in a communicating appliance or to affect user interaction with an appliance. The toolkit includes a system configurator having an editor to create the content including at least one of appliance user domain data and control system domain data, and a viewer. It also includes a communication driver to establish a link between the system configurator and one or more control boards in an appliance or simulation thereof. And it includes software configured to command operation of the control board and to generate data in the viewer based on the operation. It finally includes an appliance simulator or an appliance where a user can observe the data in the viewer and create or modify the content using the editor in response to communication over the link.

The toolkit can also have a smart coupler in the link. Preferably, the viewer has a command window where a user can define and initiate a command for operation of the at least one control board.

The toolkit can also have a sequence model useable by the editor to create the content including instances of cycle data for the appliance. Preferably, the editor can create instances of cycle definitions for the appliance so that a user can use the command window to establish a portion of the cycle data by observing one of the data in the viewer and the appliance contemporaneously with initiating the command and use the editor to include the portion in the content. The content then preferably includes a cycle definition, a cycle structure, information about a cycle structure, a paired element, source identification information, a message data payload structure, and/or information about a consumable.

In another aspect, the toolkit can have access to a datastore and credentials for writing information into the datastore where the content can be stored in the datastore for later retrieval for use with the appliance. In one embodiment, the datastore is a consumable information holder.

As well, the viewer can include a data analyzer configured to display the useable data from the communication link with non-usable data describing the useable data wherein a user can understand the meaning of the useable data. Preferably, the data analyzer is configured to accept other content including a portion of the useable data and a portion of the non-useable data associated with the portion of the useable data wherein the association enables the display without specific coding of the data analyzer with respect to the useable data.

In another aspect, the appliance development toolkit has access to a plurality of user interface control definitions, access to renderable assets or identifiers thereof, an editor configured to create at least one instance derived from the plurality of user interface control definitions, to associate at least one renderable asset or identifier thereof with the at least one user interface control definition instance, to create at least one locator object having addressing information for locating the renderable asset at runtime, and to associate the at least one renderable asset or identifier thereof to the at least one locator object, a graphical user interface for viewing and using the editor wherein information is derived from the creating and the associating, and at least one converter for generating a builder file from at least a portion of the information, wherein the builder file can be exported to an appliance to enable the appliance to create a dynamic user interface at runtime.

Preferably, the locator object is of the form of a URI, URN, URL, UUID, arbitrary alpha-numeric identifier, or a unique addressing path. It can also have addressing information. If so, the addressing information can likewise be in the form of a URI, URN, URL, UUID, arbitrary alpha-numeric identifier, or a unique addressing path.

The converter is preferably configured to export the builder file in the form of at least one of xml, html, relational database, text, and a binary file. It can be a simple converter. As well, the editor can be configured to create at least one renderable asset where it forms part of the information.

### BRIEF DESCRIPTION OF THE DRAWINGS

In the drawings:
Fig. 1 Fig. 1 is a schematic diagram showing the environment of an appliance development toolkit according to the invention.
Fig. 2 is a schematic diagram showing elements of an appliance development toolkit according to the invention.
Fig. 3 is a schematic diagram showing relationships among elements of the system configurator in the appliance development toolkit of Figs. 1 and 2.
Fig. 4 is a diagram showing the functional relationship among some of the elements of Fig. 3.
Fig. 5 is a screen shot of an editor and a content viewer of an appliance development toolkit according to the invention.
Fig. 6A shows a first embodiment of a user interface as a result of using an appliance development toolkit according to the invention.
Fig. 6B shows a second embodiment of a user interface as a result of using an appliance development toolkit according to the invention.
Fig. 6C shows a third embodiment of a user interface as a result of using an appliance development toolkit according to the invention.
Fig. 7 is a screen shot of two editor windows in an appliance development toolkit according to the invention and a cycle structure for an appliance.
Fig. 8 is a schematic diagram showing the flow of information between an appliance and the system configurator in an appliance development toolkit according to the invention.
Fig. 9 is a schematic diagram showing the relationships of the control structure of an appliance to the system configurator of Fig. 8.
Fig. 10 is a screen shot of an editor in an appliance development toolkit according to the invention with a sequence model instance for a fault tree being created.
Fig. 10A is a screen shot of an attribute editor in an appliance development toolkit according to the invention showing the creation of a portion of the instance of Fig. 10.
Fig. 11 is a screen shot of an editor in an appliance development toolkit according to the invention with a sequence model instance for a fault tree being created.
Fig. 11A is a screen shot of a viewer in an appliance development toolkit according to the invention showing how the content resulting from the editor will appear.
Fig. 12 is a screen shot of the editor of Figs. 10 and 11, and a screen shot of a graphical user interface in an appliance displaying a portion of the content from the editor.
Fig. 13A is a screen shot of the editor of Figs. 10 and 11, and a screen shot of a graphical user interface in an appliance displaying another portion of the content from the editor in a query.
Fig. 13B is a screen shot of the editor of Figs. 10 and 11, and a screen shot of a graphical user interface in an appliance displaying related portion of the content from the editor responsive to the query of Fig. 13A.
Fig. 14 is a screen shot of a viewer in an appliance development toolkit according to the invention showing a flow chart of the content in Figs. 12 -13B.
Fig. 15 illustrates an interaction between the content of Figs. 12 -13B and a user.
Fig. 16 is a screen shot of an editor in an appliance development toolkit according to the invention with a message data payload model instance being created
Fig. 17 is a schematic diagram showing the use of the message data payload model instance of Fig. 16 in an appliance.
Fig. 18 is a screen shot of a viewer in a target application showing the message traffic of the message data payload model instance of Fig. 16
Fig. 19 is a screen shot of a model instance editor in an appliance development toolkit according to the invention showing a step in the creation of a message data payload.
Fig. 20 is a screen shot of a model instance editor in an appliance development toolkit according to the invention showing another step in the creation of a message data payload.
Fig. 21 is a screen shot of a model instance editor in an appliance development toolkit according to the invention showing another step in the creation of a message data payload.
Fig. 22 is a screen shot of a model instance editor in an appliance development toolkit according to the invention showing another step in the creation of a message data payload.
Fig. 23 is a screen shot of a model instance editor in an appliance development toolkit according to the invention showing another step in the creation of a message data payload.
Fig. 24 is a schematic diagram showing a binding between appliance user domain data and control system domain data created by an editor in an appliance development toolkit according to the invention.
Fig. 25 is a schematic diagram showing use of a constrained appliance development toolkit according to the invention.
Fig. 26 is a schematic diagram showing a constrained appliance development toolkit according to the invention.
Fig. 27 is a screen shot of a model instance editor in an appliance development toolkit according to the invention showing aspects of a message data payload.
Fig. 28 is a schematic diagram showing elements of an appliance development toolkit according to the invention and an appliance that uses content from the appliance development toolkit in creating themes and animations.
Fig. 29 is a schematic diagram showing multiple bindings created by an appliance development toolkit according to the invention for user interface controls in an appliance.
Fig. 30 is a schematic diagram showing the message structure of forking elements in an appliance development toolkit according to the invention.
Fig. 31 is a screen shot of a model instance editor in an appliance development toolkit according to the invention showing a step in the creation of a message data payload with a forking element.
Fig. 32 is a screen shot of a model instance editor in an appliance development toolkit according to the invention showing another step in the creation of a message data payload with a forking element.
Fig. 33 is a screen shot of a model instance editor in an appliance development toolkit according to the invention with a properties viewer and information about it.
Fig. 34 is a screen shot of a model instance editor in an appliance development toolkit according to the invention with information about it.
Fig. 35 is a screen shot of a model instance editor in an appliance development toolkit according to the invention showing a step in the creation of a message data payload using holders.
Fig. 36 is a screen shot of a model instance editor in an appliance development toolkit according to the invention showing another step in the creation of a message data payload using holders.
Fig. 37 is a schematic diagram showing the use of holders in different a variable model according to the invention.
Fig. 38 is a schematic diagram showing a first scenario showing the relationships of variables.
Fig. 39 is a schematic diagram showing a second scenario showing the use and relationships of holders.
Fig. 40 is a schematic diagram showing a third scenario showing the use and relationships of holders.
Fig. 41 is a schematic diagram showing the use of paired elements in stain treatment in an appliance according to the invention.
Fig. 42 is a schematic diagram showing the use of development toolkits according to the invention with an appliance in the creation of cycle instances for the appliance.
Fig. 43 is a schematic diagram of a substitution model instance created according to the invention.
Fig. 44 is a schematic diagram showing the relationship between a cycle outcome model instance and sequence model instance according to the invention.
Fig. 45 is a schematic diagram showing the relationship among instance variants, user interface controls, and models according to the invention.
Fig. 46 is a schematic diagram showing a dynamic rendering of a graphical user interface in response an appliance receiving data from a sender according to the invention.
Fig. 47 is a schematic diagram showing the use of a test engine to diagnose an appliance according to the invention.
Fig. 48 is a schematic diagram showing the use of sequence model instances and cycle outcome model instances in meal planning according to the invention.
Fig. 48A illustrates a sequence model instance for recipes in Fig. 48.
Fig. 48B illustrates a sequence model instance for substitutions in Fig. 48.

### DESCRIPTION OF EMBODIMENTS OF THE INVENTION

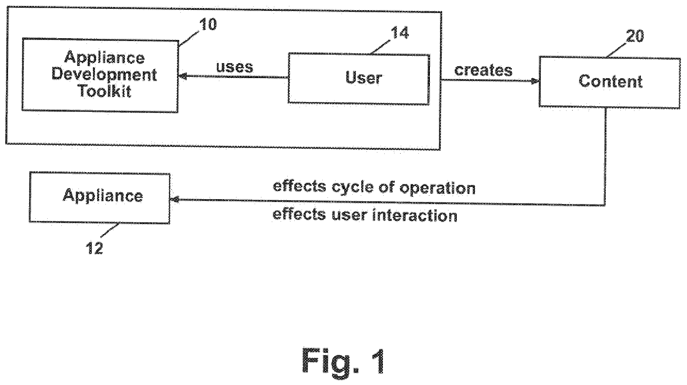

Referring to the drawings and to FIG. 1 in particular, an appliance development toolkit 10 according to the invention, which will be referred to hereinafter as the toolkit 10, is configured to enable the creation and modification of content 20 to affect and/or effect operation of one or more components associated with an appliance 12 so as to affect and/or effect interaction between a user 14 and the appliance 12 and/or a cycle of operation of the appliance 12. The toolkit 10 can be used with different appliances 12 without requiring the recoding of software of the toolkit 10. The user 14 can be a consumer, a salesperson, a manufacturer, a product engineer, or any other individual capable of using the appliance 12 and/or the toolkit 10.

The appliance 12 can be any suitable appliance, such as a household appliance. Examples of household appliances include, but are not limited to, clothes washing machines, clothes dryers, ovens, dishwashers, refrigerators, freezers, microwave ovens, trash compactors, and countertop appliances, such as waffle makers, toasters, blenders, mixers, food processors, coffee makers, and the like.

The appliance 12 can be configured to perform a cycle of operation to complete a physical domestic operation on an article. Examples of the physical domestic operations include a food preparation operation, a food preservation operation, a fluid treatment operation, a cleaning operation, a personal care operation, a fabric treatment operation, an air treatment operation, and a hard surface treatment operation. The air treatment operation can comprise, for example, air purification, air humidification, air dehumidification, air heating, and air cooling. The food preparation operation can comprise, for example, food cleaning, food chopping, food mixing, food heating, food peeling, and food cooling. The food preservation operation can comprise, for example, food cooling, food freezing, and food storage in a specialized atmosphere. The fluid treatment operation can comprise, for example, fluid heating, fluid boiling, fluid cooling, fluid freezing, fluid mixing, fluid whipping, fluid dispensing, fluid filtering, and fluid separation. The cleaning operation can comprise, for example, dishwashing, fabric washing, fabric treatment, fabric drying, hard surface cleaning, hard surface treatment, hard surface drying, carpet cleaning, carpet treatment, and carpet drying. The personal care operation can comprise, for example, hair treatment, nail treatment, body massaging, teeth cleaning, body cleaning, and shaving.

The components associated with the appliance 12 can include any devices, parts, software, and the like that participate in the operation of the appliance 12, either directly or indirectly. Some of the components have a corresponding controller (main controller, motor controller, user interface, etc.), which can be a simple microprocessor mounted on a printed circuit board (a control board), while other components can have no controller. The components can comprise one or more devices that are controlled by the controller. Typically, the controller components in cooperation, either directly or indirectly, through other components, control the operation of all of the components and the associated devices to implement a cycle of operation for the appliance 12.

The one or more components affected/effected by the toolkit 10 can comprise another appliance 12, one or more components on the appliance 12 or in another appliance 12, or an accessory device or component thereof for use with the appliance 12. For purposes of describing the invention, it will be understood that when reference is made herein to the use of the toolkit 10 in conjunction with the appliance 12, the same applies to the use of the toolkit 10 in conjunction with another appliance 12, with one or more components of the appliance 12 or of the other appliance 12, and with an accessory device or component(s) thereof for use with the appliance 12.

The appliance 12 can be communicatively coupled to the toolkit 10 via a communications network 18 existing at least partially within the appliance 12 and/or at least partially external to the appliance 12 as appropriate. The communications network 18 comprises all of the coupling elements communicatively linking the various parts of the toolkit 10 and the appliance 12, as well as any coupling elements communicatively linking additional devices or resources to the toolkit 10 and/or appliance 12 (e.g. a coupling element connecting the appliance 12 with an accessory). For example, the communications network 18 can comprise an internal communications network of the appliance 12 enabling communication between the various components within the appliance 12, an external communications network connected to the toolkit 10, and a coupler for communicatively coupling the two networks. The coupler can comprise a communication driver configured to establish a communications link between the toolkit 12 and the appliance 12. The communication driver can be a smart driver 56 having expanded functionality enabling the smart driver 56 to create, modify, and/or interpret content 20. The communications network 18 can further comprises an additional communications connection between the appliance 12 and/or toolkit 10 and one or more additional devices, such as the accessory, an external network, a second appliance 12 or accessory, or one or more components thereof. As a non-limiting example, the additional communications connection can be to the Internet. The communications network 18 can comprise, at least in part, a smart coupler 56 as is disclosed in International Patent Application Publication No. 2009/058770, which is incorporated by reference herein in its entirety. The smart coupler 56 can incorporate the communications driver, which can be the smart driver 54.

The toolkit 10 enables a user 14 to create content 20 that can be provided to or otherwise obtained by one or more content targets 22 to affect the functionalities of the appliance 12. Content 20 can be formatted as at least one of a relational database, XML document, CSV file, binary file, data collection, memory structure, object structure, object graph, object tree, memory heap, machine code, source code, and text file, images, text, data elements, or other type of information associated with the toolkit 10 that can be interpreted, converted, propagated, created, modified, or otherwise used for some purpose by the toolkit 10, the appliance 12, or an associated device. Examples of content 20 include but are not limited to a cycle structure, a custom cycle, a branded cycle, user attached data about appliance control functionality, a fault tree, a diagnostic test, an appliance user interface, appliance network communication, routing tables for appliance network communication, stain treatment, cooking, cooking algorithms, cooking vessels, meal preparation, dish preparation, recipes, units conversion, ingredients, ingredient substitution, dietary needs, appliance use and care, appliance FAQ, consumables meta data, and information associated with consumable, a cycle definition, cycle structure information, a paired element, source identification information, a message data payload structure, an electronic document that is human-readable, machine-readable, a communications specification/protocol, and information about a consumable. A content target 22 comprises any entity that receives content 20.

Content 20 can comprise various forms of data, including appliance user domain data, control system domain data, and source identification domain data. Appliance user domain data includes information related to a user's use of an appliance. It includes such things as washing and cooking preferences, recipes, user demographics, choices and selections that user makes, and the like. Control system domain data includes information related to the control and operation of an appliance. It includes such things as cycle structures, cycle definitions, message payloads, communication protocols, and the like. Source identification domain data includes information related to the sources of goods and services and includes things such as trademarks, brand names, service marks, jingles, and the like. User interface domain data includes information related to interacting with a user interface, preferably a graphical user interface. It includes such things as widgets, animation definitions, buttons, bars, sliders, knobs, and the like, whether real or virtual.

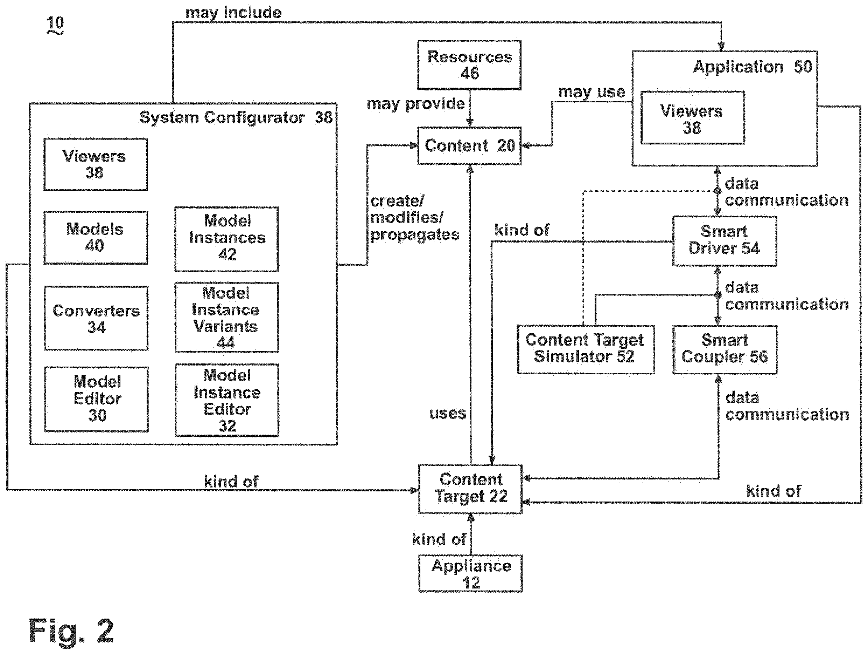

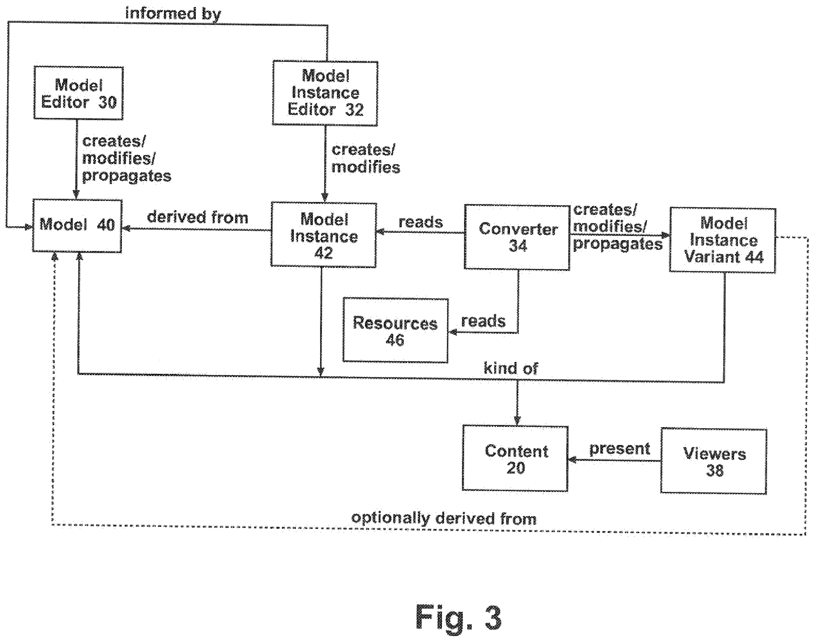

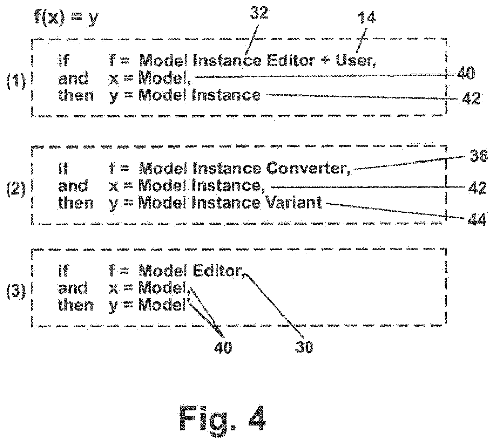

As shown in FIGS. 2-4, the toolkit 10 comprises a system configurator 28 having a model editor 30, a model instance editor 32, and one or more converters 34 configured to enable a user 14 to create, modify, and/or propagate content 20, such as models 40, model instances 42, and model instance variants 44, respectively. The toolkit 10 can further comprise one or more viewers 38 that function as content targets 22 and provide a visual display corresponding to the received content 20. The communications network 18 is configured to establish a communicative link between the system configurator 28 and at least one component associated with the appliance 12.

Non-limiting examples of different content targets 22 include an appliance control system 90, a user interface 64, a web browser or web page, a personal computer 70, an application, a computer program, a handheld device, a remote client 72 such as a cell phone, or a printer.

Different content targets 22 can use the same content 20 for different purposes. For example, a model instance editor 32 that receives content in the form of a model instance 42 will provide a visual diagram of the model instance 42 and enable the user 14 to edit the model instance 42. However, if the same model instance 42 is sent to the appliance 12, the appliance 12 can be enabled with new operational capabilities, such as new cycles of operation. Viewers 38 in particular can produce a variety of different displays or views ranging from schematic diagrams to code to images.

Converters 34 can enable this flexibility by converting data elements created by one of the editors 30, 32 into content 20 of a form suitable for use by a particular content target 22. For example, a type of converter 34 called a model instance converter is configured to produce a model instance variant 44 based on a model instance 42. Another type of converter 34 called a simple converter can simply propagate data elements or a file stored in memory and comprising data elements created by the toolkit 10 without having to substantially convert the data elements. Simple converters are best used when the content target 22 can operate directly on the data elements created by editors 30, 32, such as a content target 22 in the form of a viewer 38 included in the system configurator 28. Converters 34 are typically used to enable the transfer of data elements amongst the various entities of the toolkit 10 and appliance 12. A converter can potentially also act as an exporter, which is similar to propagating. The toolkit 10 can also include an encoder to encode content 20 onto a consumable information holder.

The system configurator 28 can optionally further comprise one or more applications 50, which can also include one or more viewers 38 and can use content 20 provided by the system configurator 28. One or more applications 50 can also be communicatively coupled to but not included within the system configurator 28. Content 20 provided by the system configurator 28 can optionally be supplemented by content 20 provided by or created using resources 46, which can include any entities capable of producing content 20 or being used by another entity to generate content 20.

Alternatively, such as for testing, diagnostic, and engineering purposes, the link can be established between the system configurator 28 and a content target simulator 52. The content target simulator 52 typically comprises software and is intended to provide a realistic simulation of the operation of the appliance 12. The toolkit 10 thus comprises software configured to enable a user 14 to effectively command operation of the appliance 12 or of an appliance simulator and to create data or data elements for display to a user 14 as content 20 in a viewer 38 of the toolkit 10 based on the operation of the appliance 12. The user 14 can observe the content 20 in the viewer 38 and create or modify the content 20 using the toolkit 10 in response to communication over the communications network 18 and communications link.

A model 40 is a very robust, thorough, and thoroughly-vetted collection of data elements or structures equivalent to a UML class diagram. A model consists of a plurality of class definitions where each class has a plurality of properties and each class can reference other classes a minimum and maximum number of times, which may be infinite. Classes can reference other classes via a named property. Classes can also, in effect, serve as extensions of other classes in order to inherit their functionalities, property definitions, and references. Classes can implement interfaces, which are definitions of collections of functions each having a set of arguments, wherein each argument can be set to one of a set of valid values. The purpose of the class definition is to provide rules or constraints for creating model instances 42 and model instance variants 44, which are, in essence, runtime instances of the model 40. Thus, the toolkit 10, in effect, enables users 14 to create runtime instances of a class diagram and is configured to create, manage, and/or edit models 40, model instances 42, and model instance variants 44, as well as data elements or information associated therewith, that are configured to effect the functionality of one or more components associated with the appliance 12.

The model editor 40 is typically used by a user 14 associated with the manufacturer of the toolkit 10 or of the appliance 12, such as an engineer or software developer, to refine and constrain models 40 prior to the models 40 being made available to users 14 external to the manufacturer. The provides the manufacturer with the ability to control the specific toolkit 10 functionalities available to users 14 outside the company, and, in doing so, provides the ability for the manufacturer to offer and sell licenses for the toolkit 10 that enable users 14 access to only certain levels of functionality. Each particular model 40 in essence is a template or a plurality of constraints defining at least part of the functionality of the system configurator 28. Each model 40 enables at least one model instance editor 42 and defines the functionalities of the model instance editor 42. Thus, n models can be used with the toolkit 10 to generate n instances of data elements derived therefrom. An exemplary data element can comprise at least one representation of a portion of a message data payload to be sent across the communications network 18.

The model instance editor 42 creates instances of data elements that comprise a model instance and that are related to appliance 12 functionality and derived from the appliance user domain data model. The model instance editor 42 is configured at least in part by the appliance user domain data model irrespective of the appliance 12 so that the toolkit 10 can be used with different appliances 12. Validation rules, which essentially comprise a communications protocol, for the content 20 can be derived from the appliance user domain model. The model instance 42 can comprise a hierarchical data structure, a graph, a fault tree, or a relational database and can be configured or developed by a user interacting with the user interface.

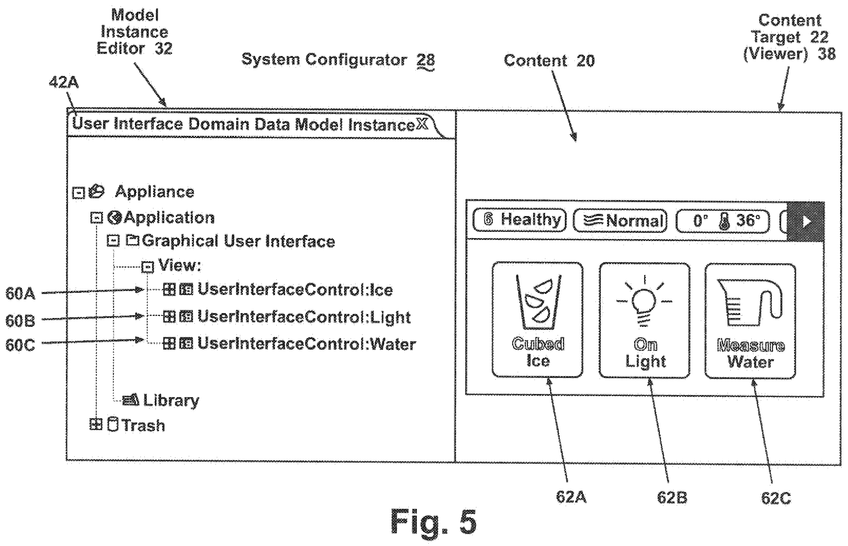

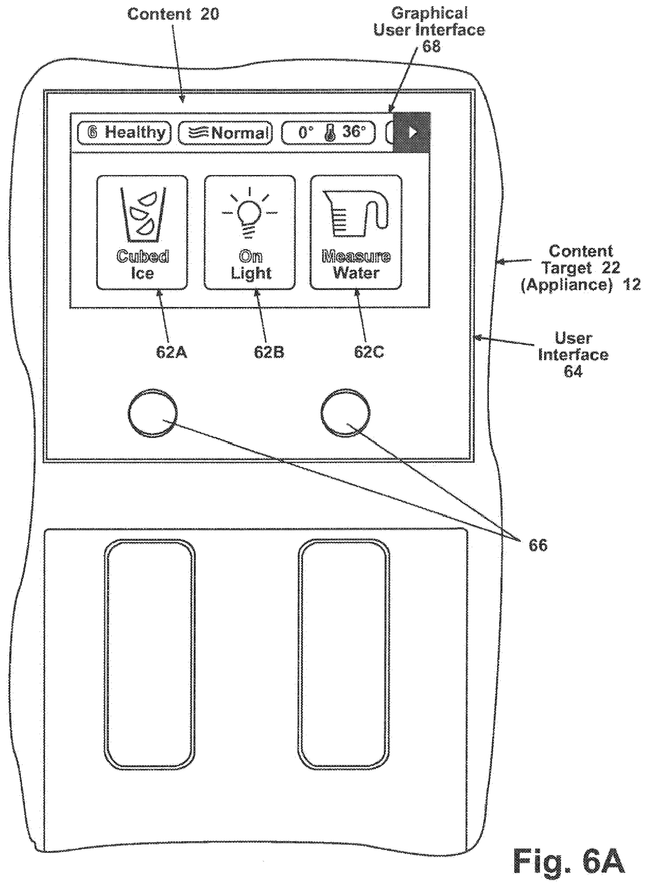

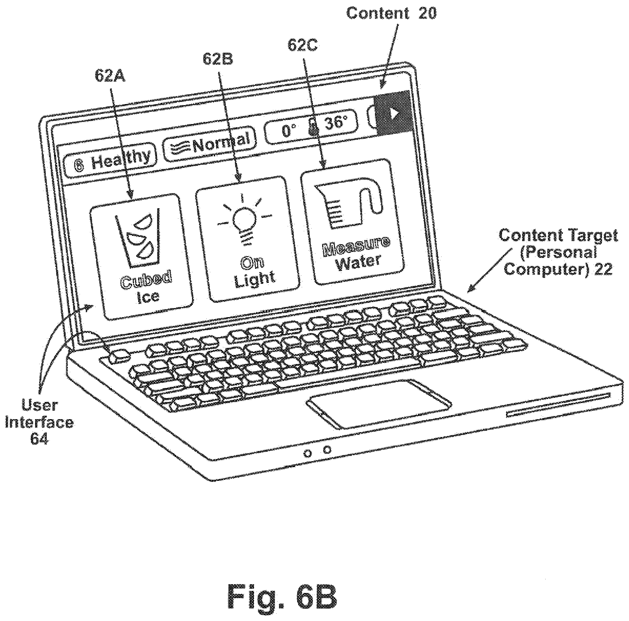

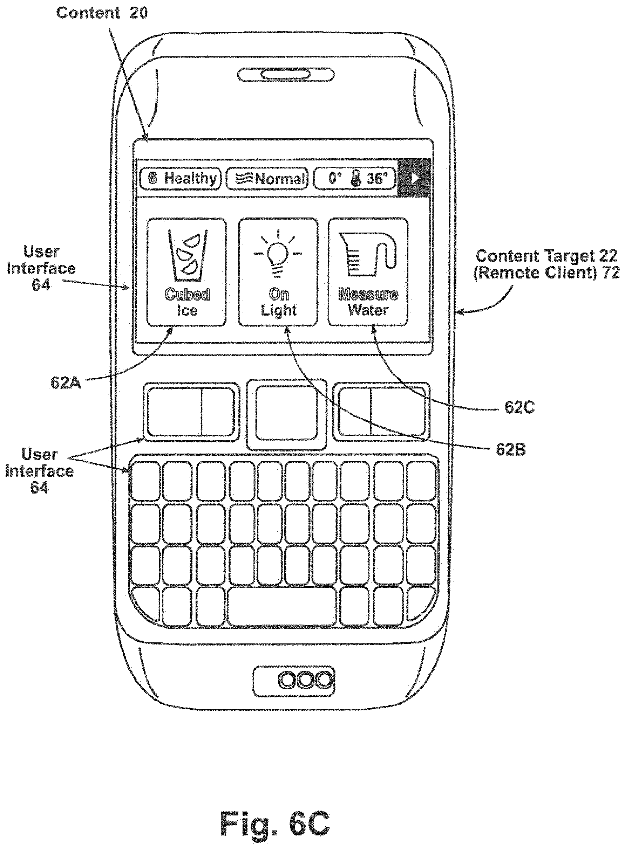

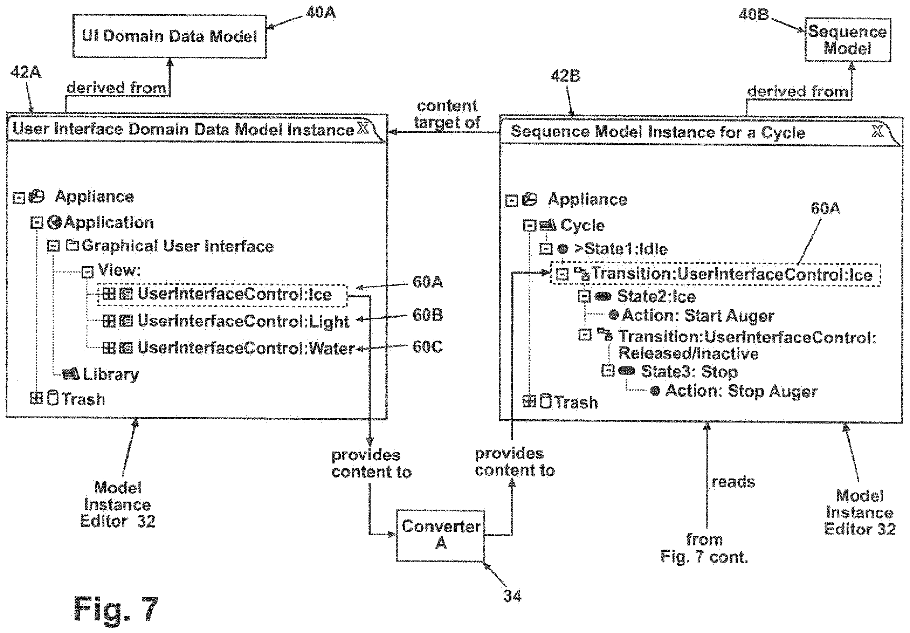

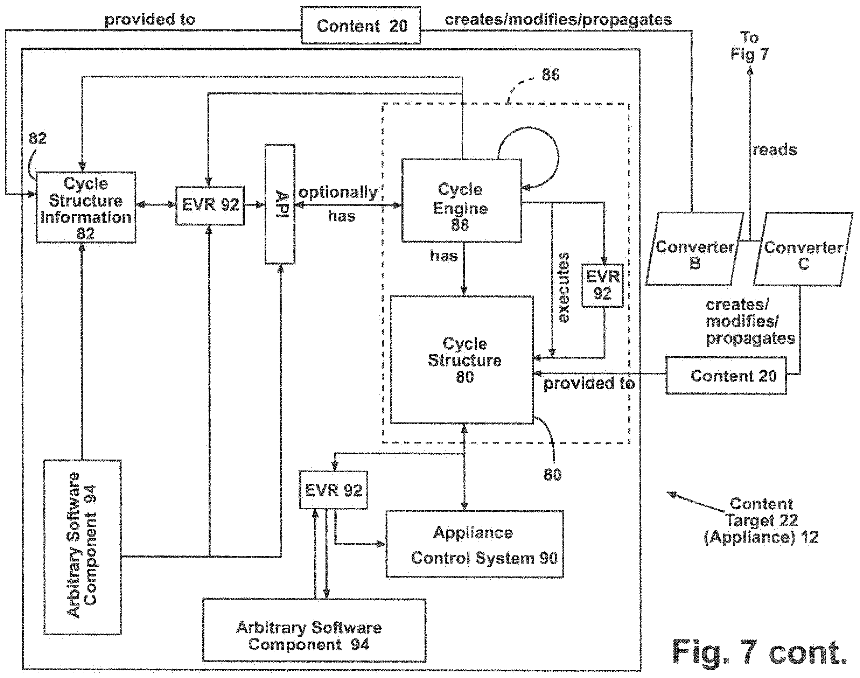

Referring now to FIGS. 5-7, models 40 can be grouped into a variety of types based on the function of the model 40 and model instances 42 created therefrom. A user interface domain data model 40A can be used to create user interface domain data model instances 42A, such as that illustrated in FIGS. 5 and 7, which are used to control the functionality of a user interface 64 of the appliance 12, which can be a graphical user interface 68. In this example, the user interface domain data model instance 40A includes user interface control objects 60A-C displayed in the model instance editor 32 and corresponding to each of three user interface controls 62A-C to be displayed on the user interface 64 of the appliance 12. The user interface control objects 60A-C are converted or propagated by a converter 34 included in the system configurator 28 into content 20, which is sent to the content target of the system configurator 28, the viewer 38. Looking now to FIG. 6A, the viewer 38 then creates a rendering of the user interface 64 as it would appear on the appliance 12 if the user interface domain data model 40A is sent to the appliance 12 as content 20. This simulation enables the user 14 to observe and, if desired, modify the appearance of the user interface 64 without having to repeatedly reprogram the appliance itself. As illustrated in FIGS. 6B and 6C, the user interface domain data model instance 42A can also be sent to other content targets 20, such as a personal computer 70 or a remote client 72, as content 20 to enable the user 14 to visualize the user interface 64 and tailor the user interface 64 to his or her particular needs and tastes.

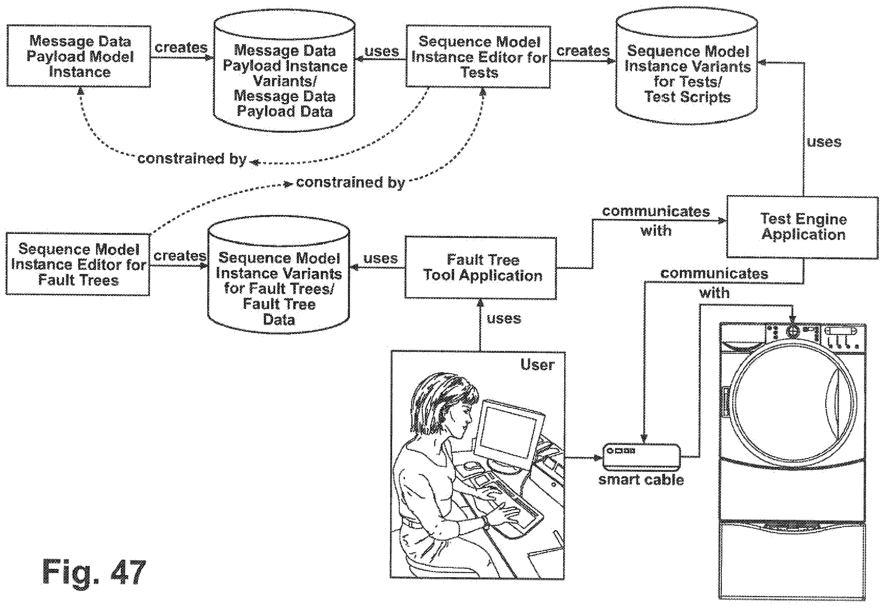

A sequence model 40B as shown in FIG. 7 is another type of model 40 that can be used to create cycles, fault trees, recipes, and tests (see also FIG. 47). A sequence model instance for a cycle 42B that is derived from the sequence model 40B is illustrated as a content target 22 of the user interface domain data model instance 42A. In this example, an object 60A of the sequence model instance for a cycle 42B corresponding to a user interface control 62A for dispensing ice is converted by a converter A 34 into the appropriate format, if necessary, and is provided to the sequence model instance for a cycle 42B.

Due to this binding of user interface domain data of 42A and the control system data of 42B, when a user 14 actuates the user interface control 62A, the transition will be initiated, and the cycle specified by 42B and created in the manner explained below will be carried out to produce ice.

Objects can be composed of a plurality of other objects according to the objects field definitions. If an object comprises a method which has executable software to set the value of a field defined to hold an object, then that object can be reconfigured by changing the value of the a field from a first object to a second object. This reconfiguration can then result in a different composite or overall appliance control system behavior. There are many useful purposes for an appliance control system 90 whose behavior can be changed by changing the values in a first objects field to a third object from a second object. For example, a cycle accessory could use this technique to change a cycle structure 80. Likewise, both a consumables reader and a recipe book wand could use these techniques to customize the behavior of the appliance control system 90 according to appliance user domain data, source identification domain data, user interface domain data the data about the cycle, the data about a consumable, and the like.

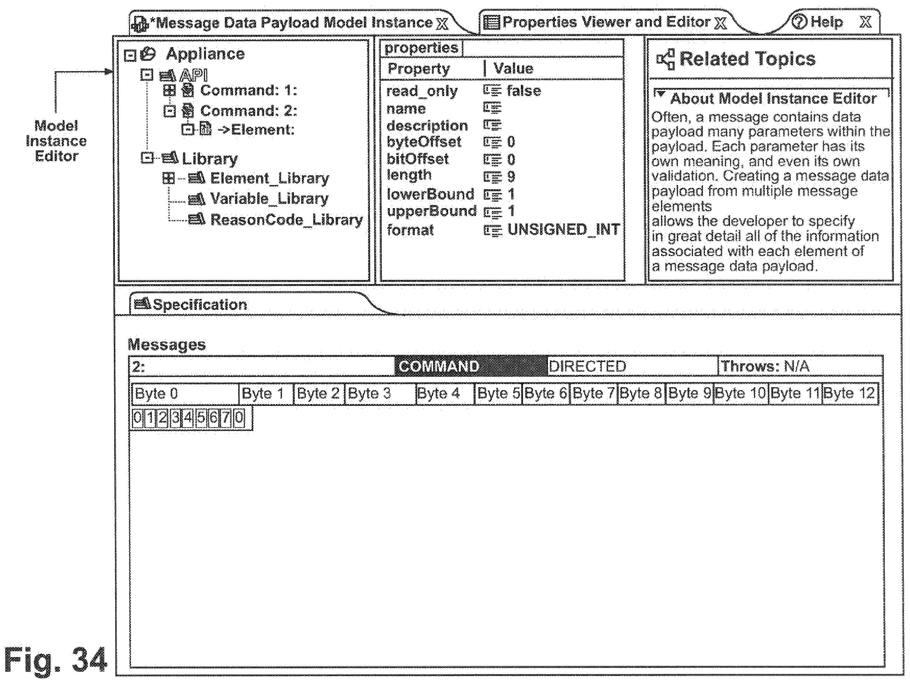

There are many mechanisms which can initiate and manage the dynamic configuration of an appliance control system 90. However, these mechanisms (see Fig. 34) will need a common design framework with which to accomplish the dynamic configuration. And some portions of the dynamic configuration can be accomplished during the compile process while other portions may be accomplished at post-compile time (also known as runtime).

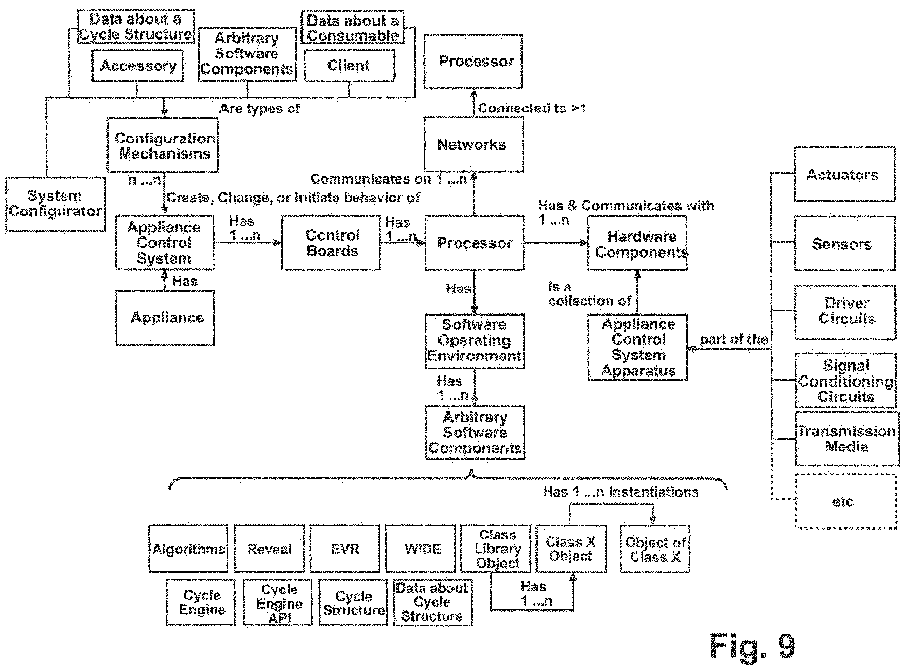

Fig. 7 illustrates several ways that the appliance 12 can obtain information necessary to carry out appliance operation, including information about cycles of operation, and generate a cycle structure to perform a cycle of operation. Here, cycle structure information 82 represents information about or associated with a cycle structure 80 to be produced by the cycle engine 88. Cycle structure information 82 can include modifications to be made to an existing cycle structure 80, information to be used to create a new cycle structure 80, or a cycle structure requiring conversion or some sort of manipulation into a cycle structure 80 suitable for use with the particular appliance 12. Cycle structure 80 represents a set of instructions for use by an appliance control system 90 of the appliance 12 for carrying out a cycle of operation. An exemplary appliance control system is illustrated in FIG. 9 and is described in detail by International Patent Application Publication No. 2006/135758, which is incorporated by reference herein in its entirety. In one embodiment, the cycle structure 80 can be created by using messaging for communicating the cycle structure information 82 to the cycle architecture 86 via the communications network 18 of the appliance 12, at which point the cycle engine 88 can discover information for creating or modifying cycle structure 80 for use by the appliance control system 90. The cycle engine 88 then proceeds to build a new or modified functional cycle structure 80. Optionally all messages can be routed through an embedded virtual router 92, which results in the cycle engine 88 using its own configuration API for building the new or modified cycle structure 80. The execution by the cycle engine 88 to create or modify the cycle structure 80 can also be accomplished through the EVR.

An arbitrary software component 94 in communication with the cycle engine 88 or in communication with the cycle architecture 86 can also be used to create a new or modified cycle structure 80. The arbitrary software component 94 can reside in a variety of locations with respect to a controller component 16 comprising the cycle architecture 86. Hence, all messages between the arbitrary software component 94 and the cycle architecture 86 can be optionally routed through an EVR 92 across the communications network 18. As well, the cycle architecture 86 can optionally communicate with the appliance control system 90 through an EVR 92.

In another scenario, an operational cycle accessory, such as the toolkit 10, can be communicatively coupled to the communications network 18, discover the cycle architecture 86, and send the cycle architecture 86 messages to affect its structure and, ultimately, its execution. In this case, the operational cycle accessory would typically include a combination of software and data to accomplish the configuration of the cycle architecture 86. Alternately, the aforementioned cycle architecture might send a discovery message seeking identification of all sources of the cycle structure 80. Sources of the cycle structure may be in ROM, Flash, EE Prom, an operational cycle component, and/or an external source connected to the communications network 18. Once the cycle structure information 82 located and retrieved, the cycle engine 88 can commence modifying its own cycle structures 80 according to the new cycle structure data. As shown in FIG. 7, when converters B and C 34 read the sequence model instance for a cycle 42B, converter B converts the sequence model instance for a cycle 42B into cycle structure information 82, and converter C 34 converts the cycle 42B directly into a cycle structure 80. Both the cycle structure information 82 and the cycle structure 80 generated by the converters B, C 34, respectively, are generated based on the same content 20 comprising the sequence model instance for a cycle 42B.

In another embodiment of a cycle architecture 86, a first portion of the cycle structure information 82 is compiled and a second portion is made available at runtime. The second portion can include a plurality of cycle structure data, either in direct or indirect form, which can be combined with the first portion such that the cycle engine 88 operates on the aggregate of the first and second portions for a new operational cycle execution software. The second portion may represent differences in the first portion where differences may be additions, deletions, or modifications to elements, their relative orders, or their relative relationships within the cycle structure. The cycle engine 88 could appropriately apply the differences represented in the second portion by looking at the identifiers of the elements of the first portion of the cycle structure information 82 and the identifiers of the elements of the second portion of the cycle structure information 82. The advantage of this embodiment of a cycle architecture 86 is that changes to the aggregate cycle structure can be made while preserving the first portion such that subsequent corruption or absence of the second portion would not effect the integrity of the first portion, thus enabling the operation cycle execution software to revert to compiled default state, such as might be supplied at the factory. A second advantage of this embodiment is that specialized variants of the first portion can be designed which can accommodate the constraints presented by the appliance process control apparatus 14 and more specifically the controllers 68 such as limited memory and also provide capability for receiving and adapting to a second portion providing flexibility and configurability within the constraints for the cost of the specialized variants. For appliances, this can be an important requirement in some cases.

Alternatively, when an operation cycle accessory is disconnected from the cycle engine 88, the data of the second portion can be optionally removed by the cycle engine 88 causing a reversion to the factory default state. This is a form of anti-piracy protection in that the operation cycle accessory must be present for the additional functionality represented by the accessory to be available to the appliance. Optionally, the connection between the appliance and the operation cycle accessory can include a transfer of the first portion into a memory in the appliance. In this case, additional operation cycles can be retained without the permanent presence of the operational cycle accessory. It should also be noted that an operation cycle accessory can be virtual in that the software and data and ability to communicate with the cycle engine may reside on an external device connected to the cycle engine 88 via at least one network and not physically attached to the containing appliance 12.

It is to be noted that an operational cycle component can have other elements that are not the aforementioned operation cycles or constituent data and complied portions. For example, the operational cycle component can include software code to configure a cycle engine 88 for communication and other functions or code to put software architecture into an alternate mode for the purpose of diagnostics or changing memory.

An appliance cycle of operation performed by the appliance process control apparatus 14 can be optimized by information associated with the consumables on which the appliance process control apparatus is operating. For example, the cycle structure 80 could be built specifically to accommodate some properties or attributes of the consumable 24 or to accommodate some properties or attributes of the consumable holder 16. The body or bodies that comprise information, identifiers of functionalities, properties, attributes, and property and attribute values related to consumables can be referred to as sources of information about a consumable or "consumable information holders." Examples of consumable information holders include the consumable itself, a data pod, the consumable holder 16, a user interface, and a tag. The consumable holder can be a sensing consumable holder that might use a lid sensor, for example, for sensing attributes about the consumable contained therein. These attributes could then be used by the electronics 30 to further refine operation of the consumable holder. For example, if the consumable holder were to dispense 2 ounces, a lid with an amount sensor could be configured with an analog circuit coupled to the electronics 30 to provide a level or volume feedback so that the electronics can dispense exactly 2 ounces rather than a time-based approximation.

Information associated with a consumable can include amount and/or composition or other attributes that would characterize the magnitude of the usefulness of the consumable. In this case, the cycle architecture 86 may adapt itself based on the information. For example, if the consumable were a dishwashing rinse aid and the consumable holder 16 had only 90% of the standard dose, the cycle architecture 86 might adapt itself to this condition by increasing the time of the rinse phase to compensate for the lack of rinse aid. Information associated with a consumable can also include parameters of an operating cycle such as personal preferences of a user (e.g., doneness or crispiness preferences), and data about the consumable holder 16, the appliance 12, or other accessories or components thereof.

In a laundry example, the appliance control system 90 may provide information to the cycle architecture 86 about process variables like soil level, load size, soil type, etc. Based on this information associated with a consumable, including the process variable information, the cycle architecture 86 or an arbitrary software component in conjunction with a cycle engine 88 can reconfigure the cycle structure 80 to adapt to the process variable information. The consumable holder may comprise the arbitrary software component and be able to reconfigure the cycle structure 80 to adapt to the process variable information. As shown in Fig. 5, reconfiguration can be accomplished in at least two ways. In one way, the arbitrary software component can read the cycle structure 80 and communicate with the cycle engine 88. In a second way, arbitrary software component can be preconfigured and communicate that configuration to or instruct the cycle engine 88 about the configuration.

One example of commands associated with an operating cycle is a collection of key value pairs. Keys comprise parameter names having a meaning, wherein the meaning is known by the cycle engine 88 such that values associated with the keys are thereby associated with the meanings. This enables the values to be used in the contexts of the meanings to modify and/or control the cycle of operation of the appliance.

Another example of commands associated with an operating cycle is a byte array representing a message packet for a network. In one embodiment of this example, the byte array could be arranged according to the packet definition disclosed in WO2006135726 comprising a functional identifier, an op code, and a payload, wherein the identifier and op code relate to an executable function or method implemented by the cycle engine and or cycle engine API. Further, the arguments or parameters of the function or method correspond to the data elements contained in the payload of the message packet.

The consumable holder, therefore, can contain all the functionality of and participate in all the embodiments that an operational cycle accessory in communication with an appliance having a cycle architecture 86 can. Therefore in one embodiment, a consumable holder is an operation cycle accessory that further physically contains and may also further be enabled to directly actuate the introduction of a consumable into an appliance 12.

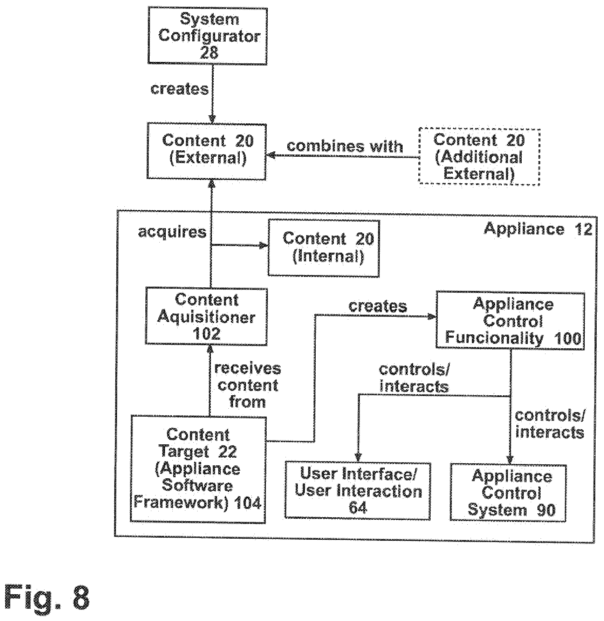

As seen in FIG. 8, content 20 can be derived from or provided by resources outside the appliance 12 (external content 20) or from memory or other information contained within the appliance 12 (internal content 20) and acquired by a content acquisitioner 102. Appliance software framework 104, which includes the appliance software framework of FIG. 7, receives the content 20 and creates appliance control functionality 100. The appliance control functionality 100 provides and controls the user interface 64 and user interaction, as well as provides and controls the appliance control system 90. As an example, FIG. 9 also illustrates the appliance control system disclosed in International Patent Application Publication No. 2006/135758 and further includes the system configurator 28 for managing the functionality thereof.

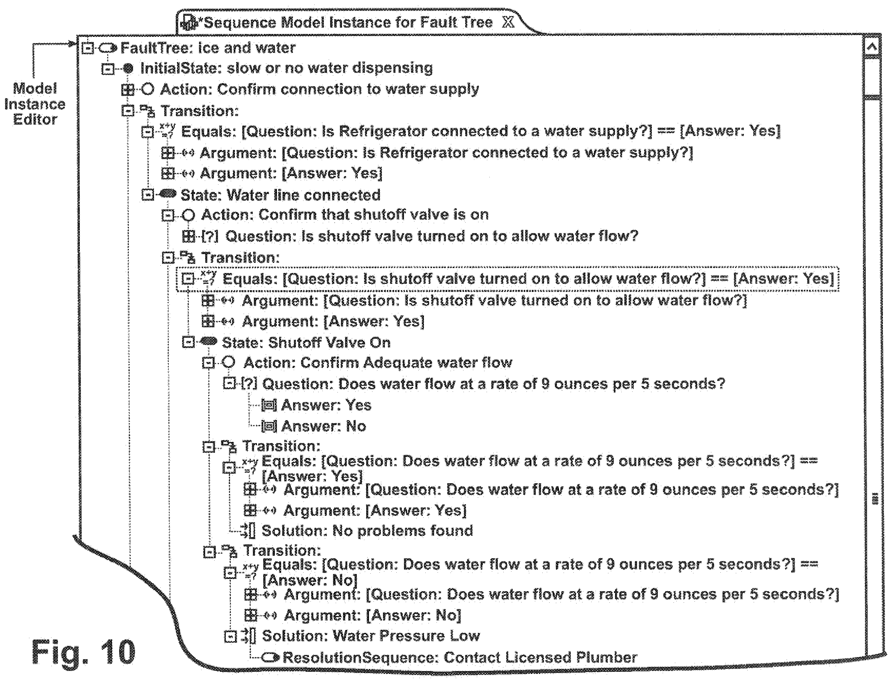

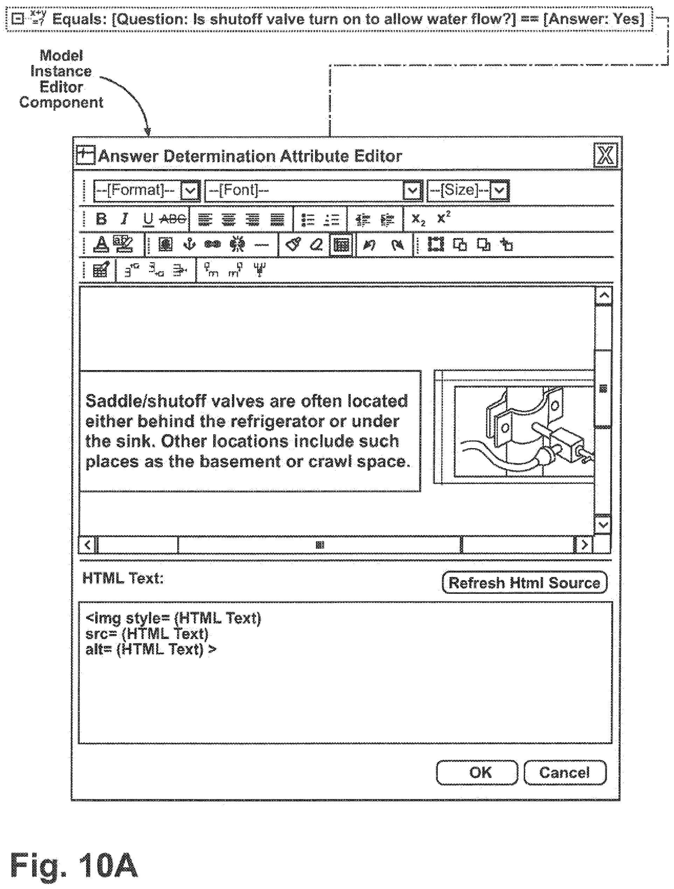

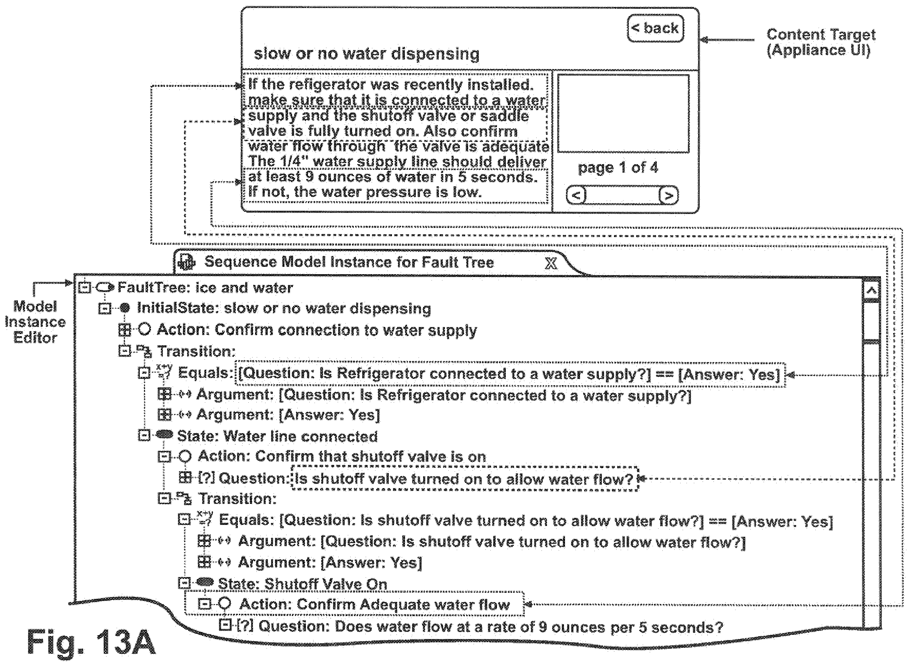

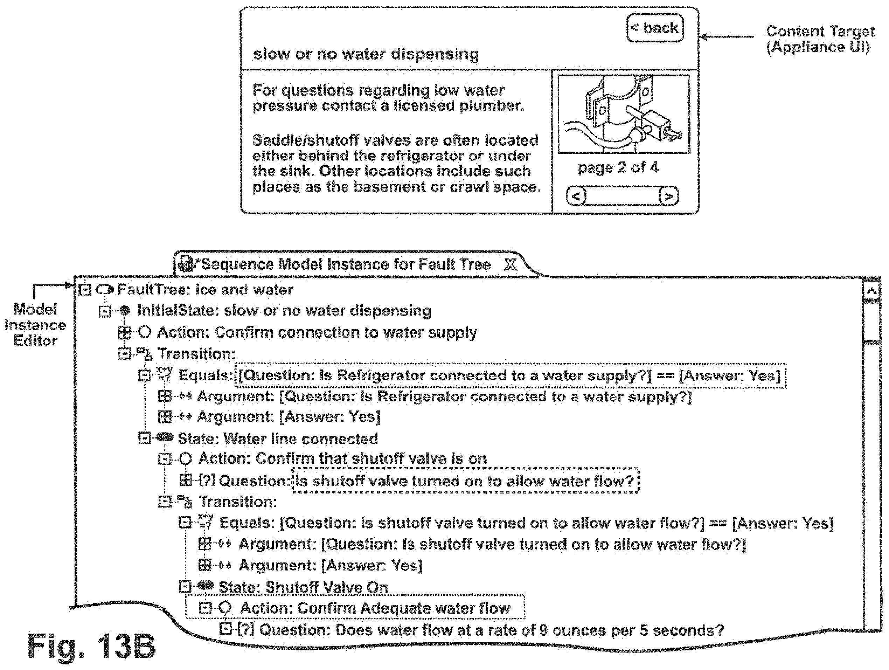

As shown in FIGS. 10-15, a sequence model can also be used to generate a sequence model instance for a fault tree. Appliances are often diagnosed and serviced using a fault tree, and the sequence model instance for a fault tree serves to present a user 14 with various displays on the user interface 64 informing the user 14 of possible problems and solutions. The initial step of an appliance fault tree will normally be associated with a symptom of failure in the appliance. Each step of a fault tree, including the initial step will have associated actions. Actions are things that should be done in the step. Exemplary actions include, but are not limited to, taking measurements, asking questions, requesting user input, describing observations and the like. Transitions will be paths to other steps that are normally conditional on the result of a given step. At each step of the sequence model instance for a fault tree, a question is asked regarding operation of the appliance 12 and presented on the user interface 64. Once an answer to the question has been entered, the sequence model instance for a fault tree will transition to another action or step in the fault tree. As shown in FIG. 10A, an answer determination attribute editor, which is also a model instance editor component, can be used to edit the content 20 displayed to the user 14 at a given transition corresponding to a given question and a given answer.

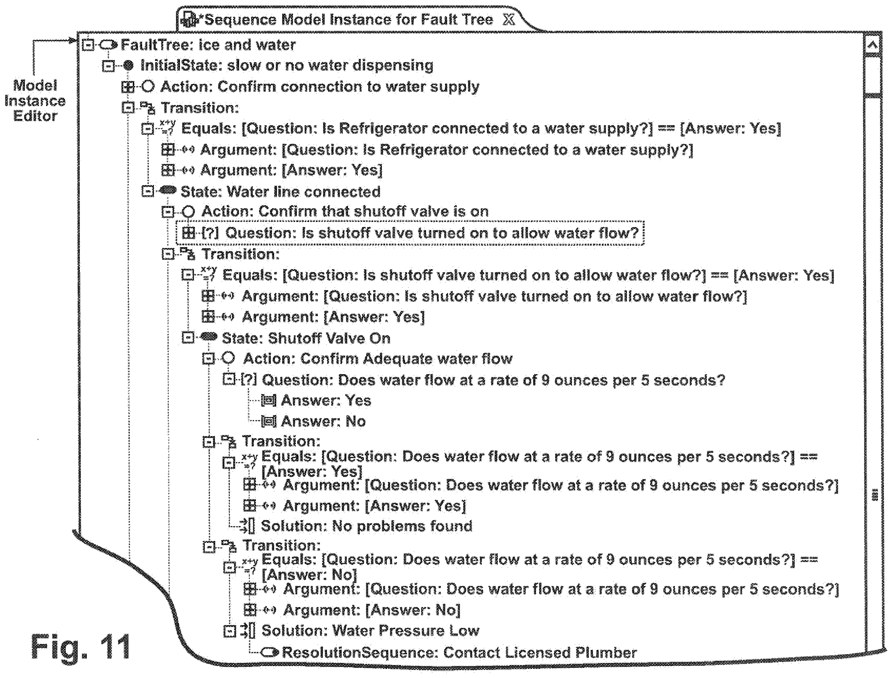

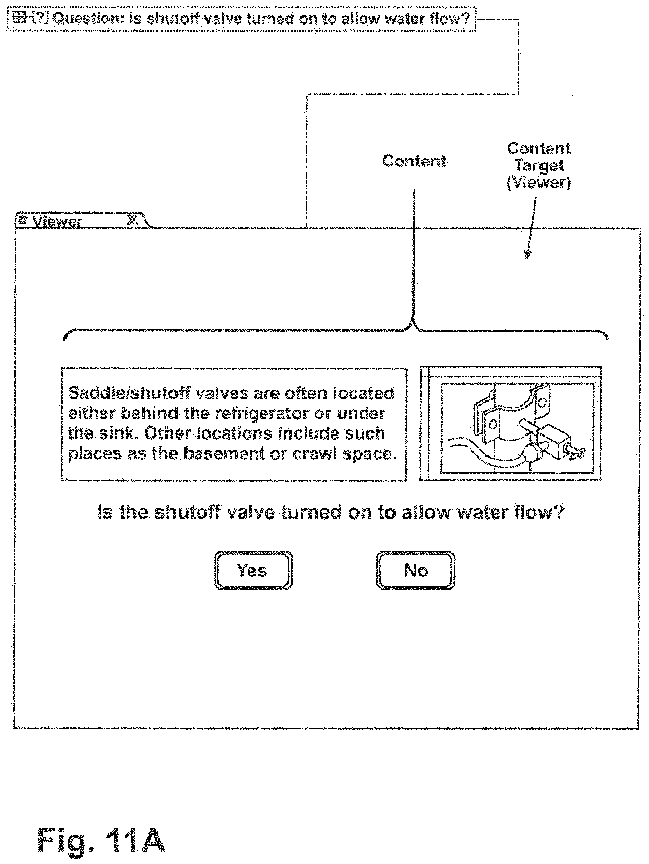

As shown in FIG. 11A, each question will also have corresponding content 20 that is displayed on the user interface 64. Typically, question-based content 20 will include buttons or other user interface controls that will enable the user 14 to input an answer to the question. Alternatively, the appliance 12 can automatically determine the answer to the question using various components, such as sensors.

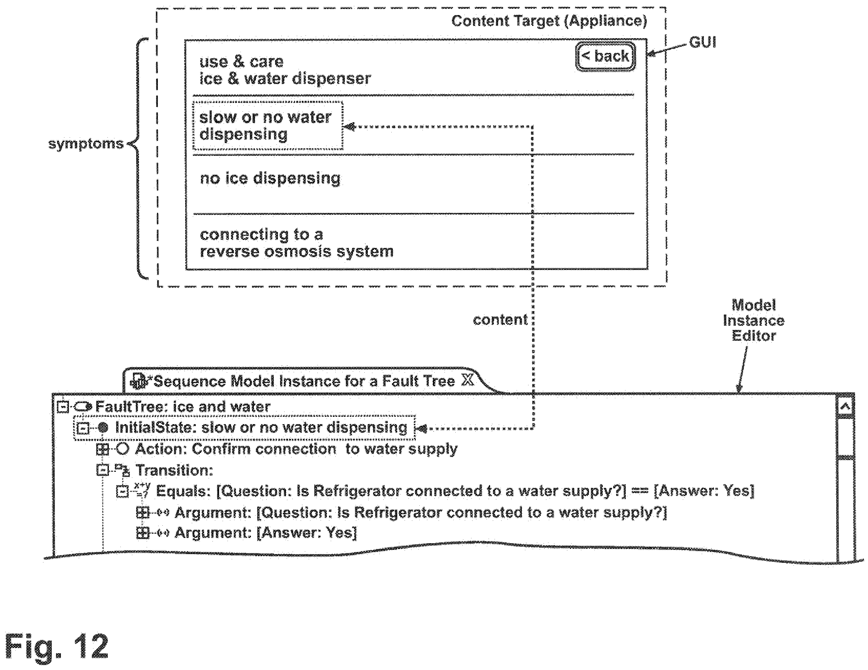

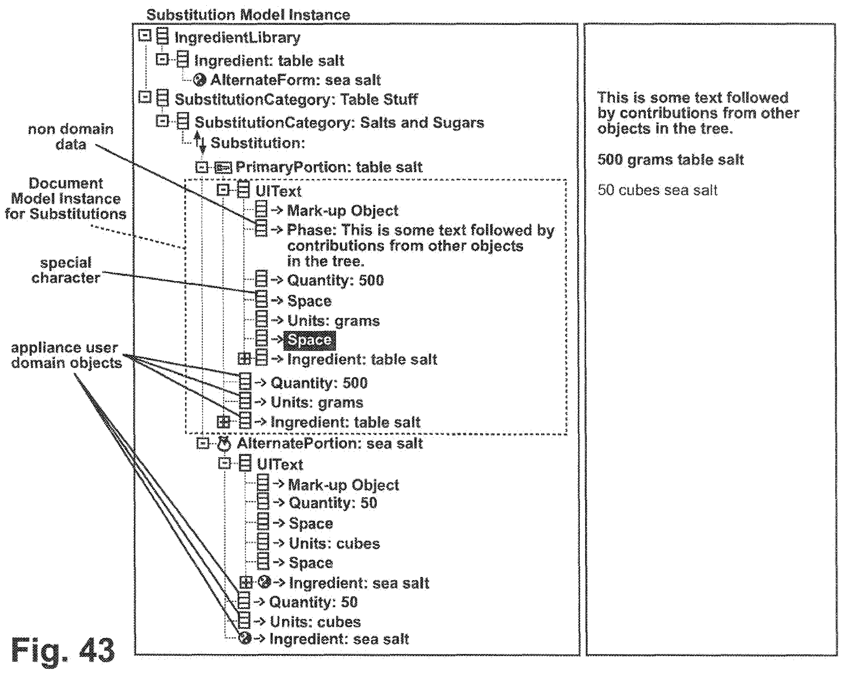

As shown in FIGS. 12-15, the sequence model instance for a fault tree can also be used to present a use and care guide to the user 14 via the user interface 64. Content 20 comprising text to be displayed to the user 14 can be created using a document model (FIG. 43), which specifies content 20 can be displayed on the user interface 64 that enables a user 14 to select a symptom. The selection of a symptom can automatically bias the user 14 to an entry point in the sequence model instance for a fault tree so that the user 14 does not have to waste time looking through irrelevant symptoms. In addition, it may be that a given appliance will have more than one fault tree associated with it. For example, there may be a fault tree associated with different components or different subsystems in the appliance. Or there may be different fault trees associated with accessories connected to the appliance, and each fault tree has an initial step A that would normally serve as the starting point for entry into the respective fault tree. It may be, and often is the case, that any given fault tree for an appliance might have multiple entry points. Further, a transition is not limited to transitioning to a sequential step within the same fault tree. For example, a transition from a first step on a fault tree may lead to a second step on another fault tree.

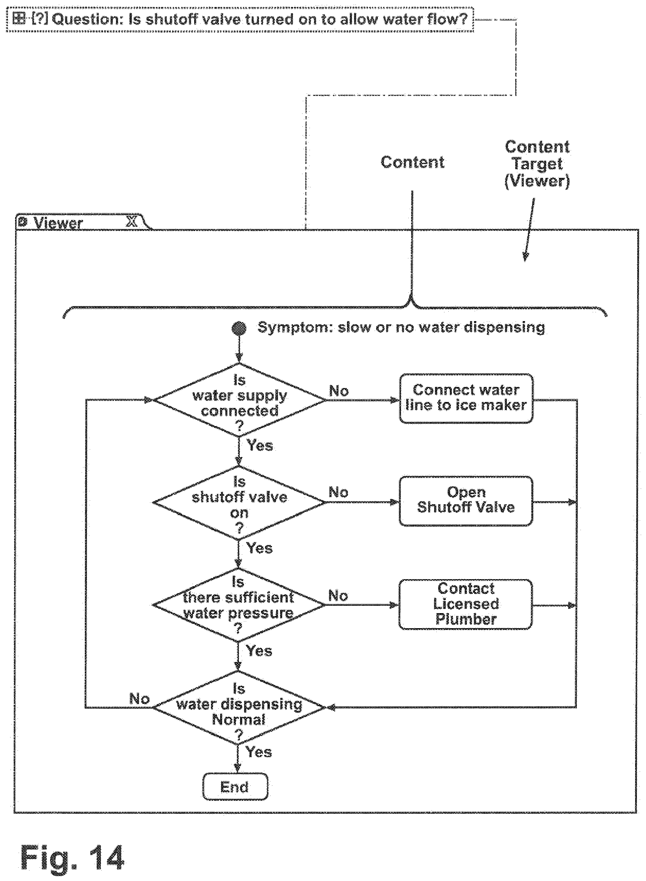

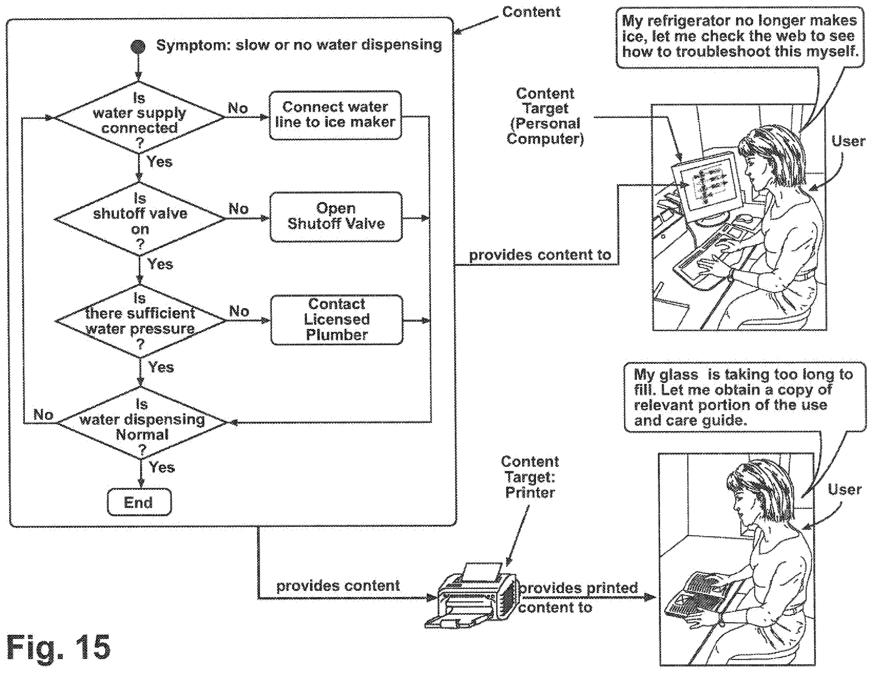

The fault tree and/or use and care guide provided by the sequence model instance for a fault tree can also be presented in a viewer 38 as content 20 in the form of a diagram as shown in FIGS. 14 and 15. The user 14 can troubleshoot problems by simply using a content target 22 capable of presenting the content 20. For example, as shown, a user 14 can use a personal computer to view a web page including the information, or the user can use a printer to print out a copy of the diagram. In either instance, the sequence model instance for a fault tree can be used to diagnose problems and potentially find a solution without requiring a visit from a serviceperson.

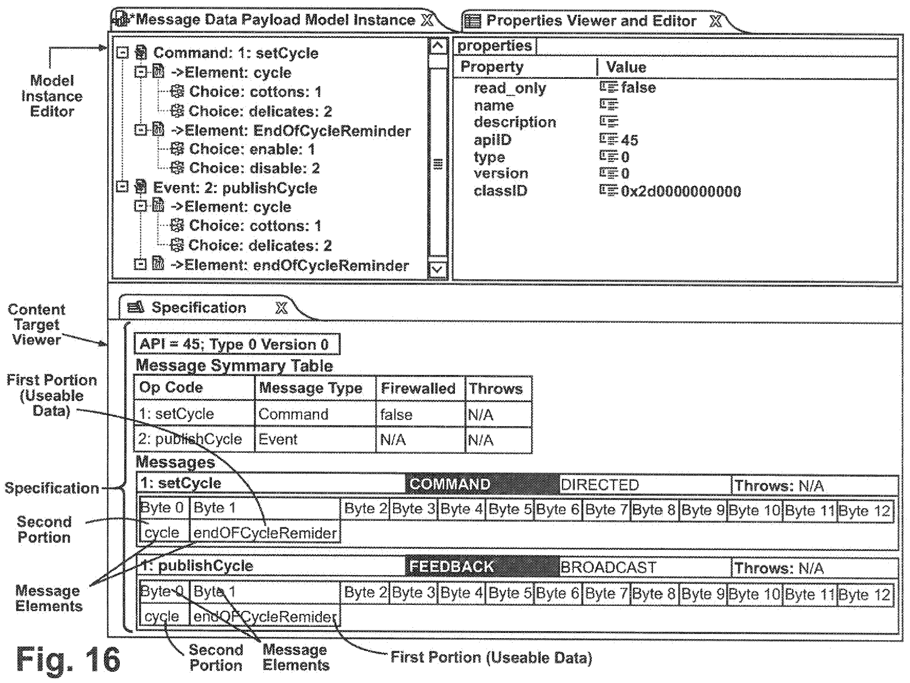

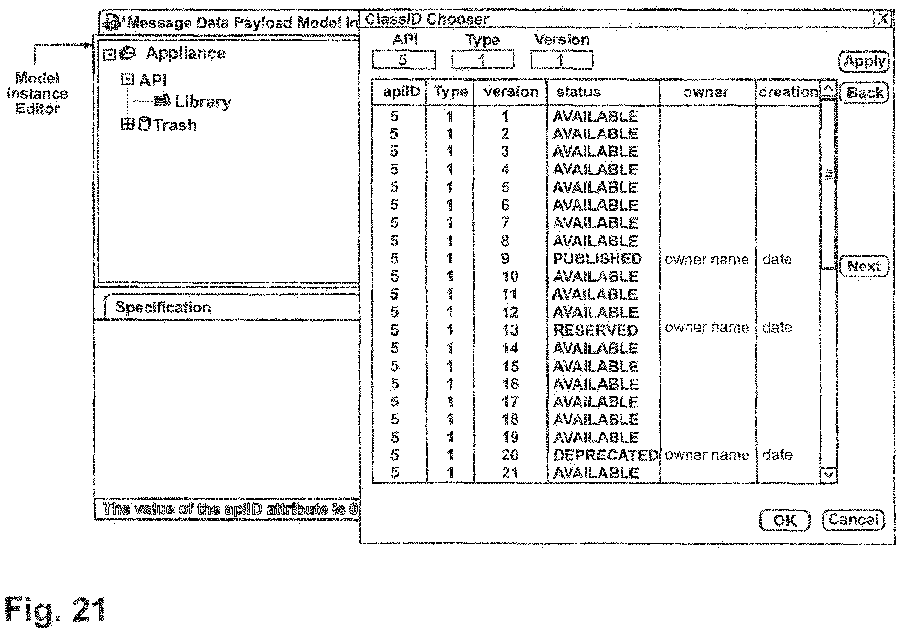

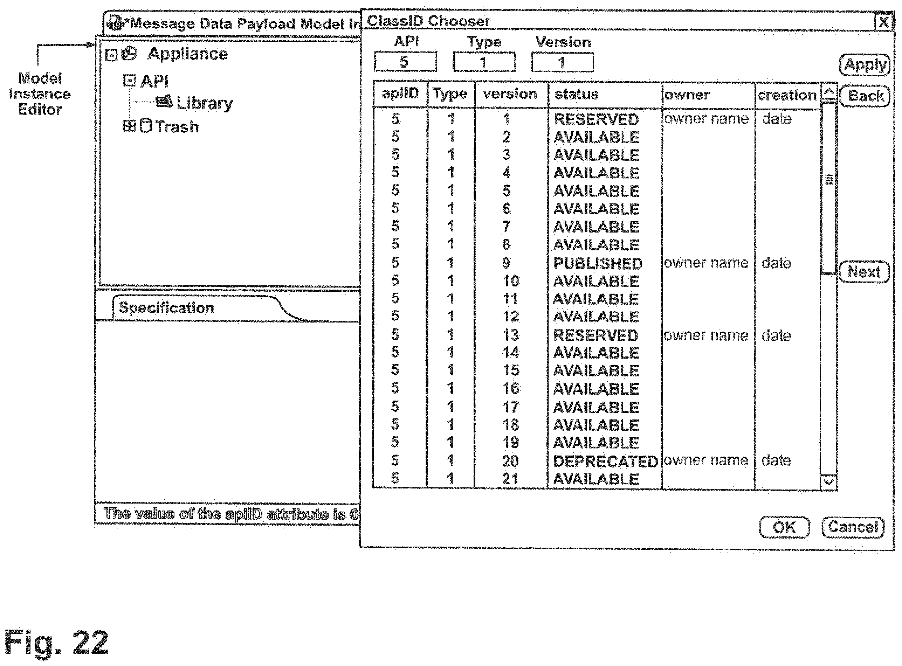

Looking now to FIGS. 16-23, a message data payload comprises a first portion having usable data and a second portion having information to describe the usable data. The first and second portions can comprise an ordered collection of message elements or at least one message element. One of the first and second portions can have a direct or indirect reference to the other of the first and second portions, which can effectively bind the portions. The constraints defined by the model 40 can be used within the model instance editor 42 to create the association between the first and second portions. Various message elements can be compiled to create a portion using the model instance editor 42 during creation of the message data payload and can comprise meaningful text describing the meaning of the message element. Usable data from the communication link with non-usable data describing the usable data wherein a user can understand the meaning of the usable data. Based on the message data payload model instance and the properties, the viewer will display a complete specification that updates in real time as the user 14 edits the message data payload model instance and properties.

Specifically, FIGS. 16-18 show the creation and advantages of useable network message data in an appliance development toolkit of the invention. The editor displays a message data model instance window, a properties and viewer window, and specification window. Elements and choices of a command structure or sequence arc created in the message data model instance window as an instance of a message data payload. A first portion of a message element comprises useable data and is set in byte 1. A second portion identifies the first portion and is set in thus example in byte 0. The editor can have constraints that limit or guide what a use can do in creating message payloads. In any event, the editor creates an association between the first and second portions where rules for data representation provided by the communications network over which the message payload is to be sent provide the constraints.

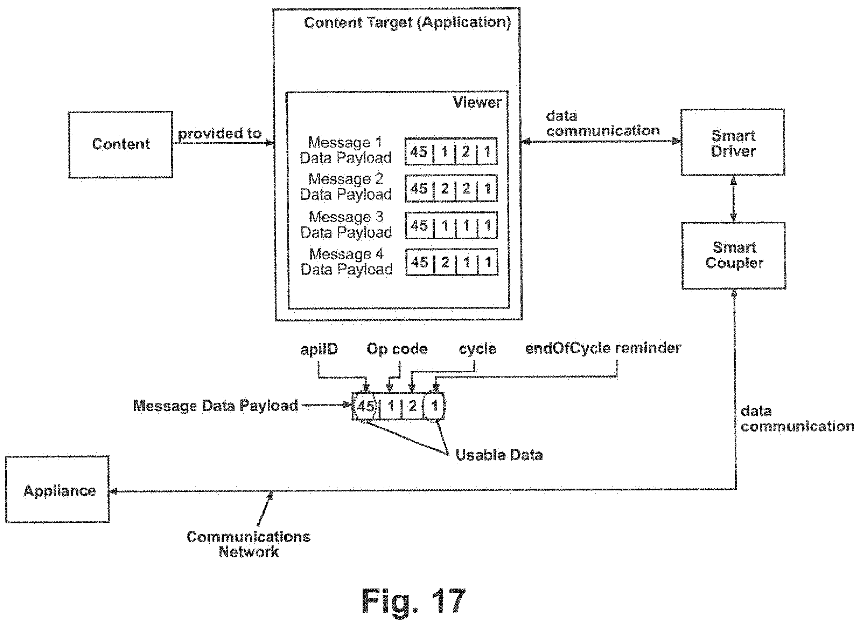

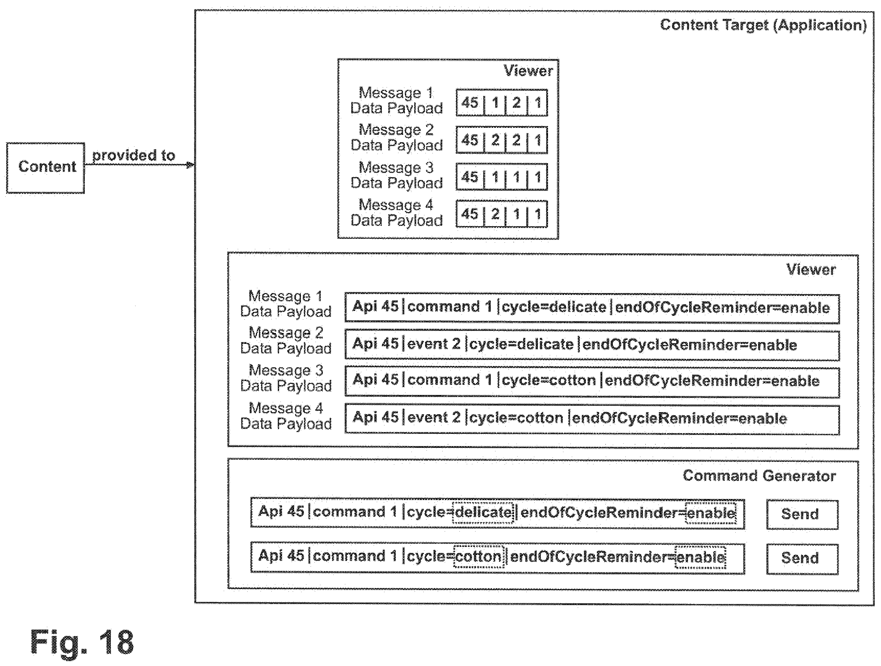

A user interface or viewer will display a visualization of the message data payload from the editor so that a user can conveniently create the message data payload for immediate use and see a graphical representation of the message data payload as it is created. An example of that display is seen in Figs. 17 and 18. In Fig. 17, a viewer in an application can display relevant data including the identifiers (second portion). As shown in FIG. 18, a specialized viewer 38 included in an application or, alternatively, incorporated directly into the system configurator 28 can also take the form of a command window including a command generator that enables the user 14 to define and initiate the sending of a command/message data payload to affect the operation of the appliance 12.

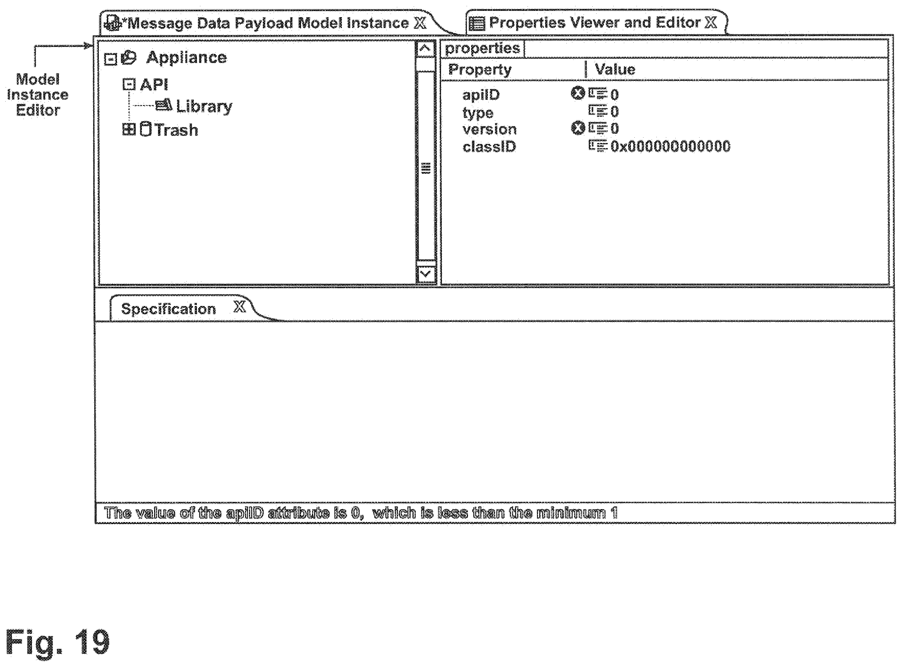

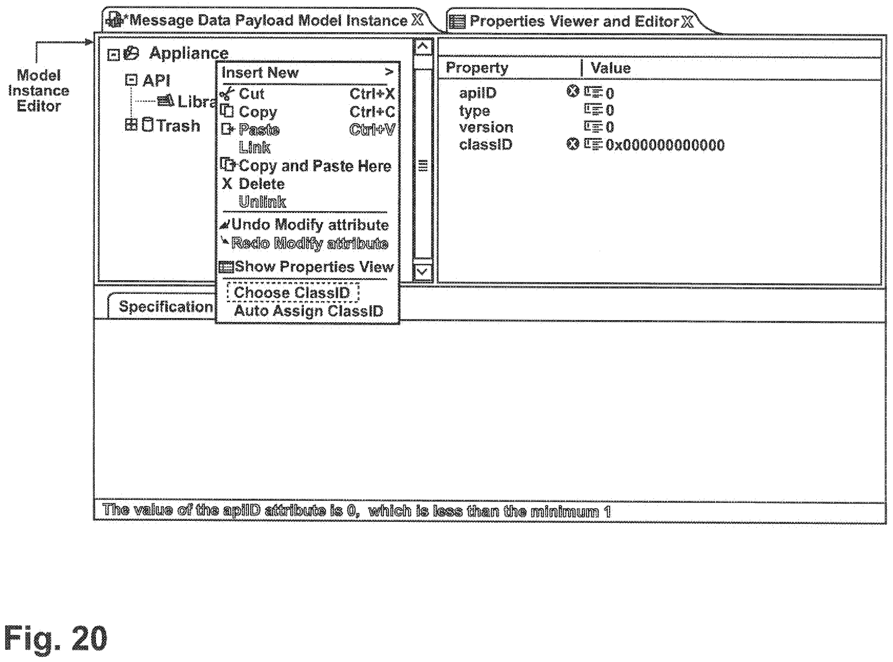

Figs. 19-23 show in steps the creation of a message data payload instance using variables, values, and value holders. See the description of holders, infra. As well, Fig. 20 shows the use of menu selections for which constraints can guide or limit a user in the creation process.

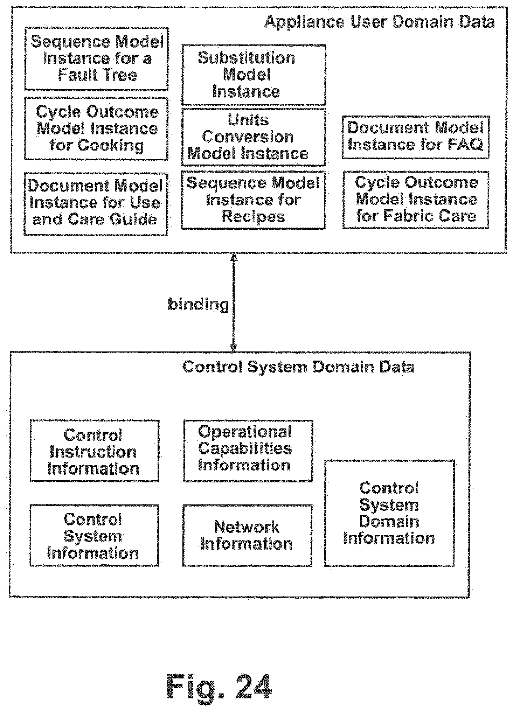

Fig. 24 illustrates the types of instances that can be associated or bound by the editor of the appliance development toolkit of the invention. Essentially anything in the different domains of data can be bound for later use. Although appliance user domain data and control system domain data are here shown, it will be understood that binding among other domains is equally within the scope of the invention, e.g., user interface domain data and/or source identification domain data.

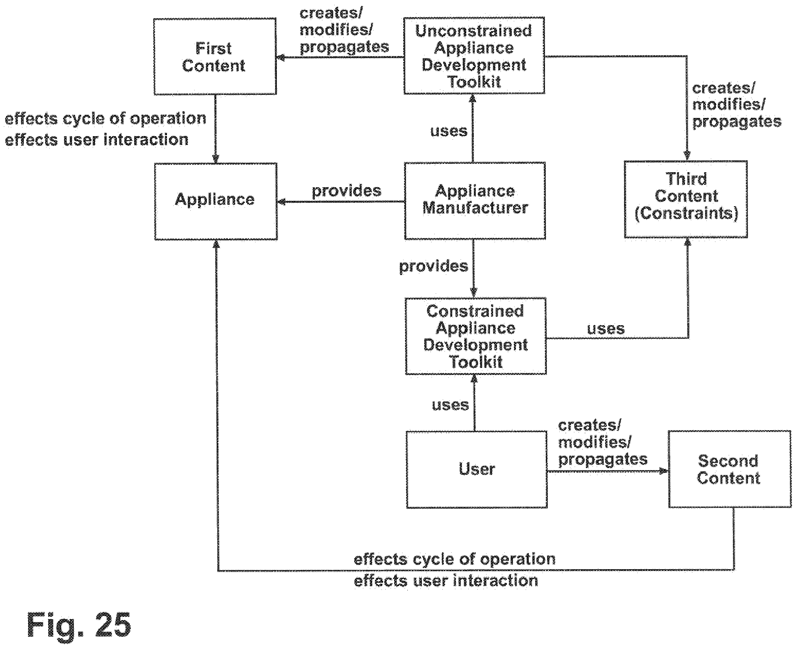

Fig. 25 illustrates the benefit of a constraint development toolkit for use by users who want to create content for effecting the cycle of operation of the user interaction of an appliance but do not have all the engineering skills or knowledge to do so. The constrained development toolkit enables a user that has less than all the required knowledge or skills to create content that effects the cycle of operation or the user interaction of an appliance wherein the effect is less than the full effect that content from an unconstrained appliance development toolkit can create.

Appliance manufactures build appliances for a competitive market. Manufactures compete on cost and on innovation and must continuously invest in new products with new technologies and new innovations while simultaneously cost reducing their variable costs and improving quality.

If an appliance manufacturer could develop a means by which to engage thousands of additional persons for the purpose of creating new product innovation without raising fixed cost, it could be a disruptive competitive advantage for that manufacturer.

The problem with engaging the thousands is that only highly trained and specialized engineers can successfully create appliance control functionality. Appliance control functionality plays a critical role in a person's everyday life. It affects the clothes people wear, the food they eat, and the air they breathe. It includes high voltage sources, high heat sources, gases, liquids, and chemicals which must be precisely managed by the specialized and intricately engineered appliance control system.

The constrained appliance development toolkit enables the thousands to create content that effects the cycle of operation or the user interaction of an appliance by providing constraining guidance so that the thousand create content that cannot effect the critical systems that manage the critical camponentry and systems relating to the integrity of the food, the clothes, the air, and the appliance core systems including the precision controls for high heat, gas, liquid, chemicals, and electricity.

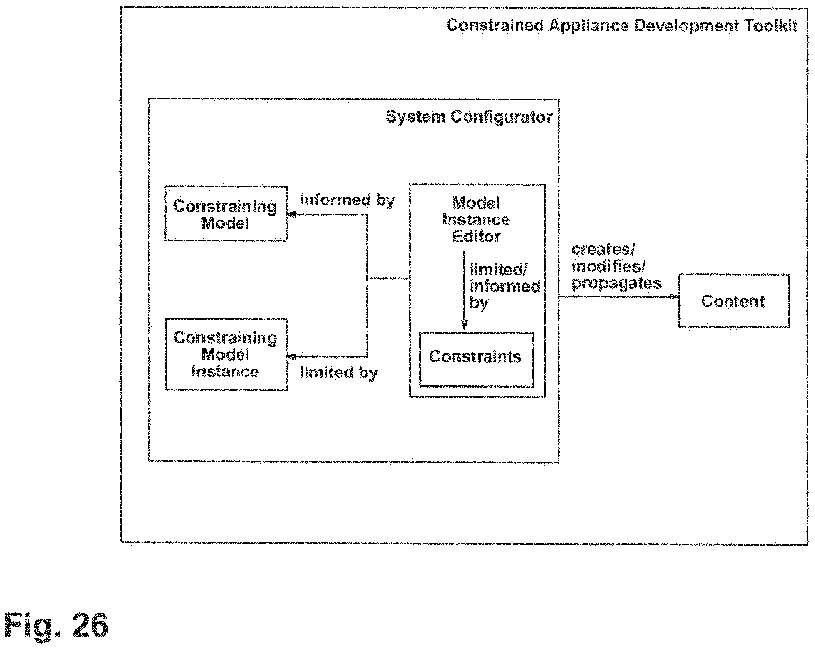

As shown in Fig. 26, there are three approaches to providing a constrained appliance development toolkit. They are through a constraining model, a constraining model instance, and hard coded constraints. Constraints define at least a portion of the functionality of the constrained appliance development toolkit. It is generally the model instance editor of the system configurator which uses the constraints to partially limit and partially control the functionality and therefore the content which the system configurator is able to create.

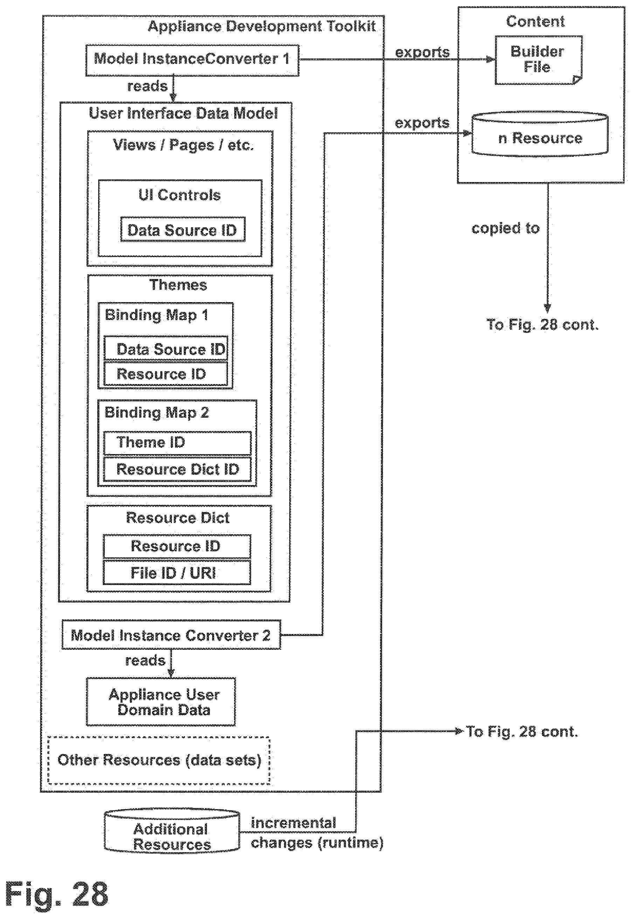

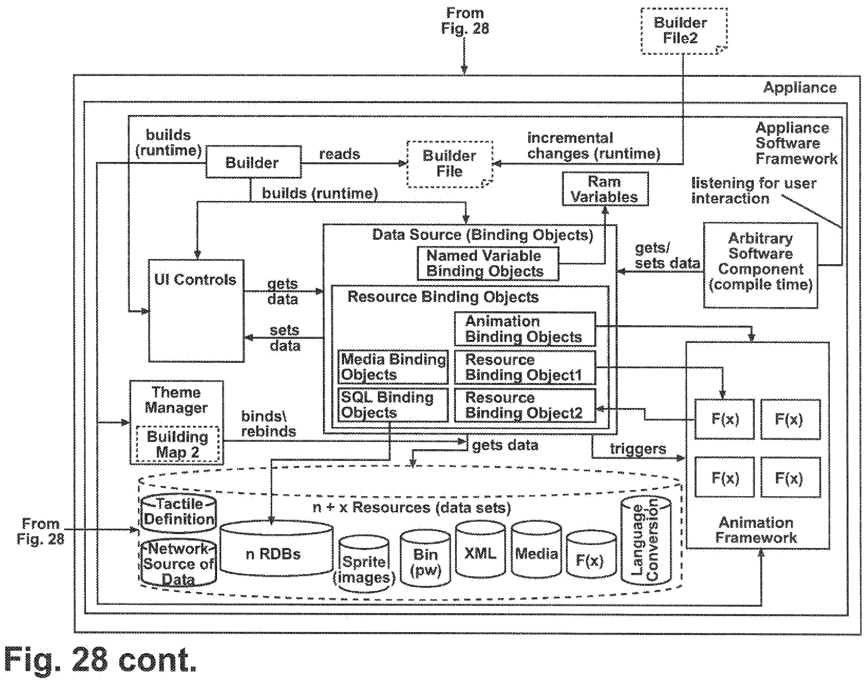

As shown in Fig. 28 and in Figs. 7 and 8, appliance control functionality can be created from content generated from an appliance development toolkit. This is also shown in Fig. 25 via the First and Second contents created by the appliance manufacturer and a user respectively.

Referring back to Fig. 25, the appliance manufacture may provide a constrained development toolkit which is hard coded. They may also use an unconstrained toolkit to create the Third content including a constraining model or a constraining model instance or both. In the latter two cases, the constrained appliance development toolkit uses the Third Content to define at least a portion of the constraints.

Referring back to Fig. 26, it is generally the model instance editor of the system configurator which uses the constraints to partially limit and partially control the functionality and therefore the content which the system configurator is able to create.

The message data payload instance may have been created by an unconstrained model instance editor or by a constrained model instance editor. The system configurator of the appliance development toolkit (unconstrained and constrained) is able to load multiple model instance files in editors for the creation of and associations between objects.

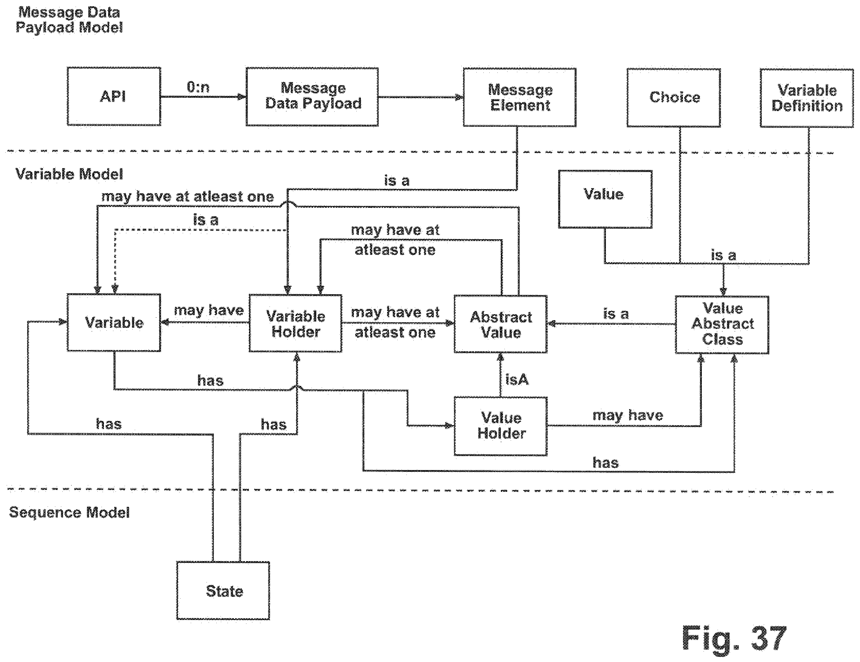

A constrained editor constrained by a model is illustrated in part by Fig. 20. The editor of Fig. 20 shows that an API object has been selected and the user has right clicked the object bringing up the context menu having an Insert New feature. Referring to the message data payload model of Fig. 37 an API is allowed to have a minimum of zero relationships with a message data payload and a maximum of n or infinite relationships with a message data payload. Therefore, if the user selects the 'Insert new' item on the context menu a submenu would appear enabling the user to choose to create a message data payload object. In this case, the editor reads the model such that it is informed by the model what the possible relationships between each current and potential objects are so that the editor can configure its functionality from the information in the model as to constrain itself according to the model. In this way, a constrained appliance development toolkit constrained by a model can limit the types of objects created and the available relationships between objects which in turn limits the content to something less than content created by an unconstrained toolkit which in turn limits the appliance control functionality to less than all possible functionality wherein the less than all possible functionality is the functionality that the appliance manufacture would like the thousands to create in order to achieve a competitive advantage.

A constrained editor constrained by hard code is shown in Fig. 26. This approach can achieve the same results as the other two approaches, but at a higher development cost over time because each new model or each new model instance interaction needs to be hand coded. The previous two approaches rely on a data driven approach with is lower cost over time.

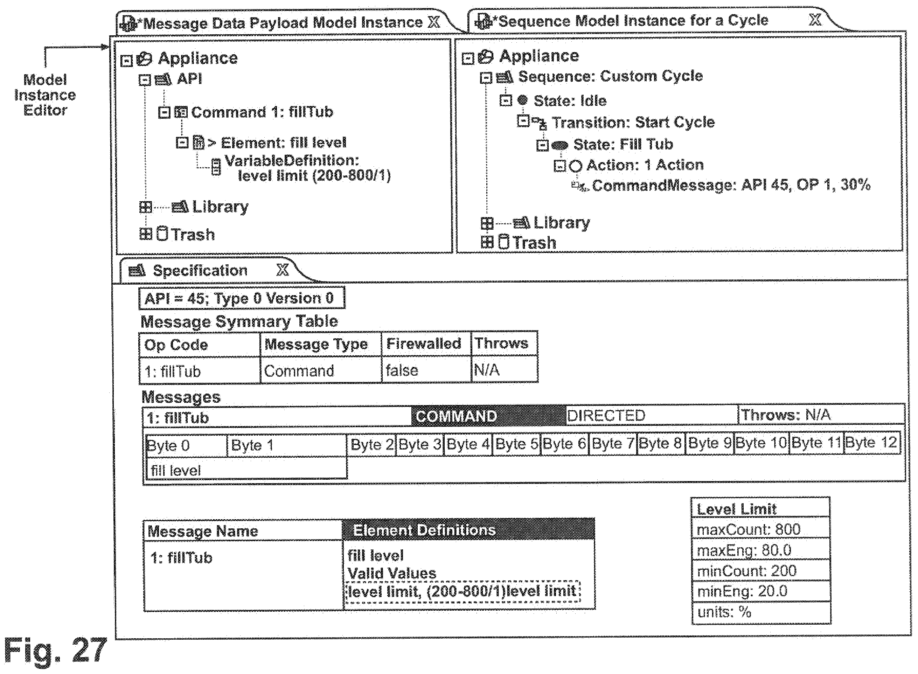

Fig. 27 includes an illustration of using a constraining model instance. On the right side of the editor is a sequence model instance for a cycle for a washing machine. As shown the editor is being used to create a custom cycle with the model instance for a cycle. As shown, the custom cycle includes a transition from the idle state to the fill tub state wherein the action object for the fill tub state is responsible for the exact control actions to be taken when the fill tub state is entered. In an unconstrained toolkit, the user could specify any control action from the universe of control actions as the action to be taken in the fill tub state. However, the constrained toolkit includes an Message Data Payload model instance (left) which provides a set of control actions less than the universe of control actions such that the user can associate at least one command from the message data payload instance with the fill tub action object(shown on right) in order to define the control action to be taken when the fill tub state is entered. Note that the level limit on the fill level message element is between 20 and 80%. This prevents the user from specifying a value for fill level either above 80% or below 20%.

Figure 28 depicts the appliance development toolkit interacting with an appliance via its appliance software framework by way of content created by the toolkit.

In this embodiment, the content is created by one or more model instance converters and includes a builder file and a plurality of resources. A resource is a data set containing data. A resource can be a file or collection thereof, a database, a stream of streaming data, an event source, a network connection for communicating data and the like. In all cases, the nature of the data for a resource ranges from images and videos to XML, relational databases, language conversions, and animation definitions.

Consumers enjoy dynamic user interfaces, especially graphical user interfaces. Even better are multi-media interfaces that combine audio, visual, and tactile stimuli to create the ultimate user experience. However, consumers keep their appliances for 10-12 years and as such it is desirable to provide a variety of user experiences over time to keep the consumer engaged and excited about the user experience of the appliance.

The capability to update and transform a multi-media user interface on an appliance is desirable. Themes are collections of resources which can be applied to the components or controls of a multi-media user interface through a mapping at runtime. Themeing is the application of themes to the multi-media user interface at runtime such that that the interface transforms dynamically in response to the application.

Similarly, the capability to create a very dynamic user experience wherein a plurality of user interface stimuli cause a plurality of user interface stimuli to trigger is desirable. Moreover, an additional feature is to have the different pluralities of user interface stimuli related through a mapping so that when the mapping changes, the user experience also changes. An animation framework includes animation execution software and animation definitions connected to other components of the Appliance Software Framework including properties of the UI controls so that the rendering of the UI controls is affected by the animation execution software operating on the animation definition.

In both cases of themeing and animations, creating associations between resources, animations, themes, and user interface controls is essential and complex. The appliance development toolkit of Fig 28 is configured to create the necessary object representations and associations therebetween in order to generate the content necessary for the appliance software framework to build the objects at runtime including UI control objects, animation definitions (i.e. objects), data objects from resources, and objects which associate or bind the aforementioned together to achieve the dynamic graphical and multi-media user interface for the appliance.

The main output of the toolkit in this embodiment is a builder file. The builder file contains information including object identifiers, object type (class) identifiers, and relationships between identifiers so that the builder in the appliance can read the file at startup or on demand and create the runtime object collections, hierarchies, graphs that control the dynamic graphical and multi-media user interface for the appliance.

The builder file is generated by a model instance converter that traverses the model instance objects resident in the toolkit memory and exports the builder file content in response.

The model instance includes instances of objects from the user interface data model which includes class definitions for pages and user interface controls and the relationship definitions therebetween.

A page contains one or more pages and a user interface control herein referred to as UI control contains one or more user interface controls. Pages are objects that display a plurality of user interface components and are generally designed to be navigated to and navigated from. UI controls are generally reusable templates of components that must be combined with data at runtime to create a useful control. UI controls are things like buttons, knobs, slider bars, select boxes, text boxes, check boxes, image frames, movie frames, input windows, and the like. UI controls have a plurality of properties which are named components of the UI control which either receive or emit data. It is also possible to think of a UI control property as a variable wherein the identifier of the variable would be UI control identifier, property identifier (i.e., UI control identifier, control property identifier) Examples of UI control properties are font, color, style, size, data, shrinkable, hideable, hide, and the like.

The behavior, rendering, visualization and functionally of a UI control is affected by its properties. UI controls also emit data which can also be associated with a property. Examples of properties include current data, state, current size, current state of visibility and the like. By connecting or associating UI control properties to representations of variables known as binding objects or data source objects at runtime, the UI control is able to be affected by other actors in the appliance software framework and to be effectively rendered. Additionally, the connection to properties is able to affect other actors in the appliance control software framework which are connected to or are listening to property values of a UI control. For example, a tactile animation may be listening to a pressed property of a UI control so that when the press property is true, the tactile animation executes. The aforementioned UI controls, their properties, representations of variables, binding and actors objects and the relationships therebetween are created by the builder in response to the builder file.

To accomplish both themeing and animations the appliance development toolkit creates a representational hierarchy of objects which can be exported to the builder file and read by the builder to create the aforementioned runtime objects of the appliance software framework. First the toolkit is configured to create object representing runtime UI controls and to associate a data source identifier with certain properties of the created UI controls wherein the data source identifier is later associated with a resource identifier to create a first binding map, Binding Map 1. Next, a set of Resource Dictionaries are created each having a plurality of resource identifiers and where each resource identifier is associated with an address to a resource. The addresses can be in the form of a URI, URL, URN, path, and the like. Different Resource Dictionaries can contain the same resource identifier associated with a different address thereby creating the basis for themeing.

Next the toolkit is configured to enable the user to associate a plurality of theme identifiers each with one or more resource dictionaries in a second binding map, Binding Map 2 so that when a theme is selected at runtime, data for application to a property of a UI control can be acquired by finding the address of the data through the use of the information contained in Binding Map 2, Binding Map 1 and the Resource Dictionary.

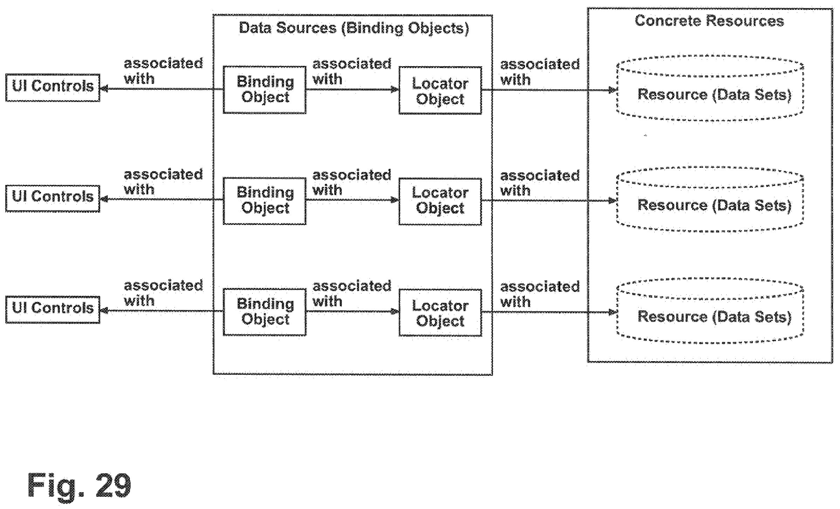

Referring to Fig. 28, at runtime, the builder reads the builder file and creates the UI control objects and associates them as shown in Fig. 29 to Data Sources (binding objects). Binding objects are created for each unique data source identifier in the builder file and locator objects are create for each unique resource identifier in the builder file. The binding objects are associated with the properties of the UI control objects according to the builder file and associated with the locator objects according to the builder file. The addresses associated with the resource identifiers in the resource dictionaries corresponding to the currently selected theme are set into the locator objects so that the locator objects can acquire the data from the resources when requested.

Using this arrangement, the theme manager applies a newly selected them by creating new locator objects and associating them with the appropriate binding objects according to the information in the builder file. In this manner, a user of the toolkit can construct multiple mappings between resource data, UI control properties, data streams, animations, media files so that changing a the maps results in a dynamic transformation to the graphical or multi-media interface of an appliance.

There can be multiple types of binding objects. An SQL binding object will know how to execute SQL against a database found at the address of its associated locator object. A media binding object may know how to un-marshal a binary media file of a certain type. There can also be binding objects pointing to appliance control system data associated with the cycle of operation enabling either the UI control objects and or the animation definitions to interact with the appliance control system software framework and cycle of operation.

A special type of resource is a language resource. By choosing a theme, the appliance user interface can transform between a first and second language. Also because of the many to many relationship between Theme identifiers and Resource Dictionaries and Resource Dictionaries and Resources identifiers themes are composable, meaning that a theme could have resources supporting a Spanish Christmas and another theme could have resources supporting a Spanish victory in the soccer World Cup wherein there would be one resource dictionary for Spanish language, one for Christmas, and one for Soccer.

Animations work the same way as do other resources. Animations have two binding points, an input and output. The output of an animation is a function of its input value determined by its binding and its f(x) function which can be any mathematical function. The binding to an animation is depicted in Fig, 28 wherein the animation is bound to two data source objects. In effect, the animation acts like a Resource of Fig. 29 having its input connected to one locator object and its output connect to anther locator object. When the theme manager changes themed animation objects it creates two new locator objects, sets an address of the new animation definitions (either input or output) into each of the new locators, and optionally loads the animation into memory for execution.

Additionally, the toolkit can construct resources for access by the appliance software framework. The appliance may also have an interface for receiving a new builder file, new resources, or both and either combine or replace the new and the existing files so that the appliance over time can be updated with new pages, new themes, new animations, and new resources.

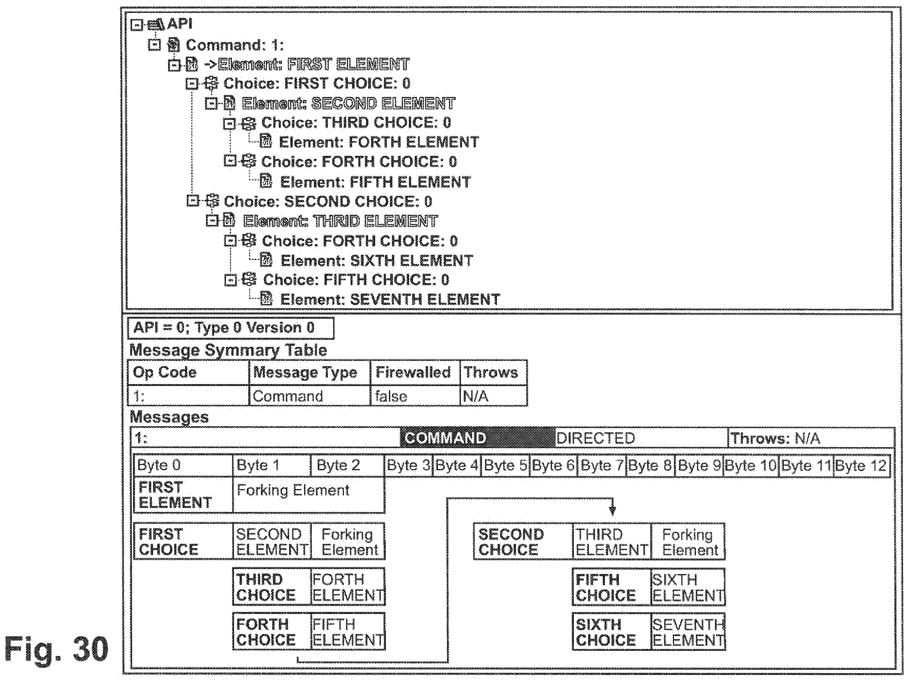

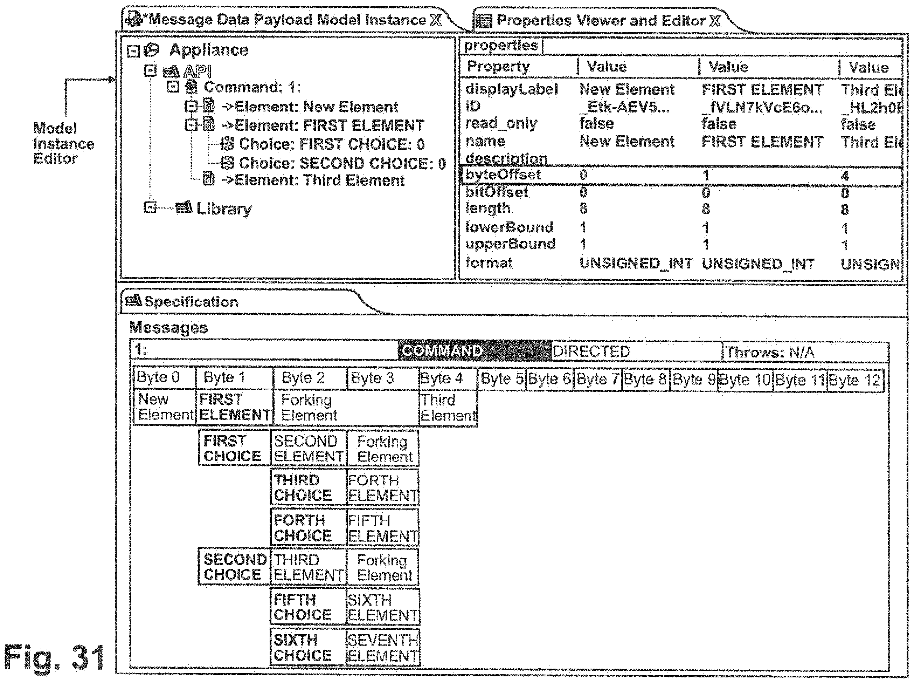

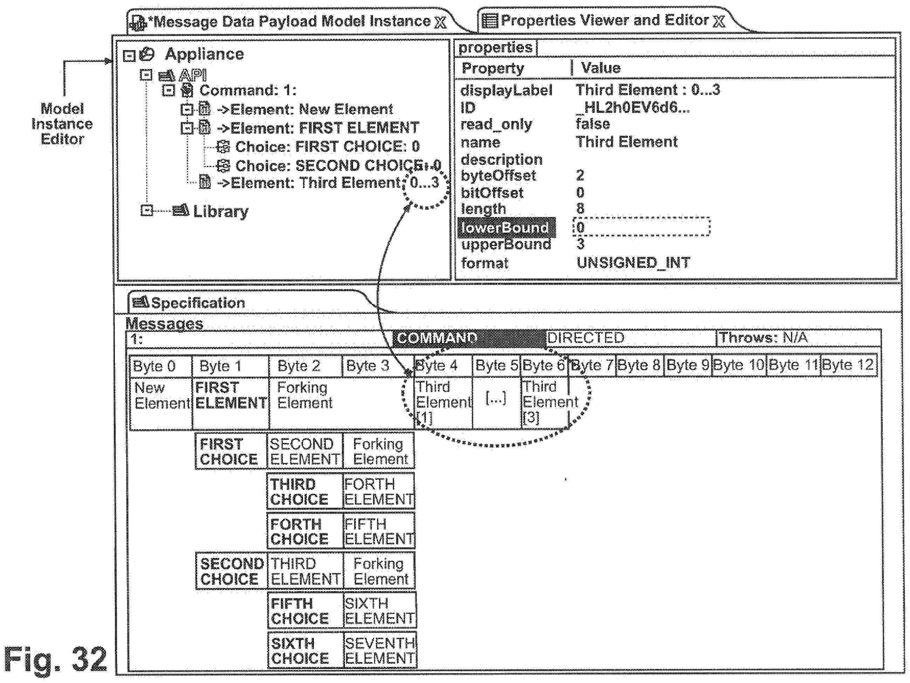

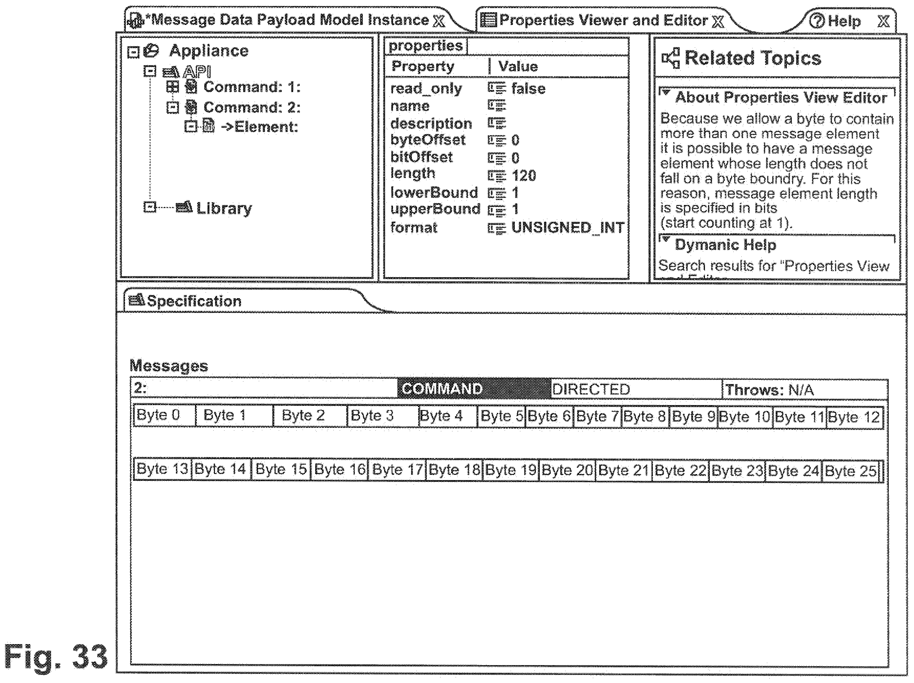

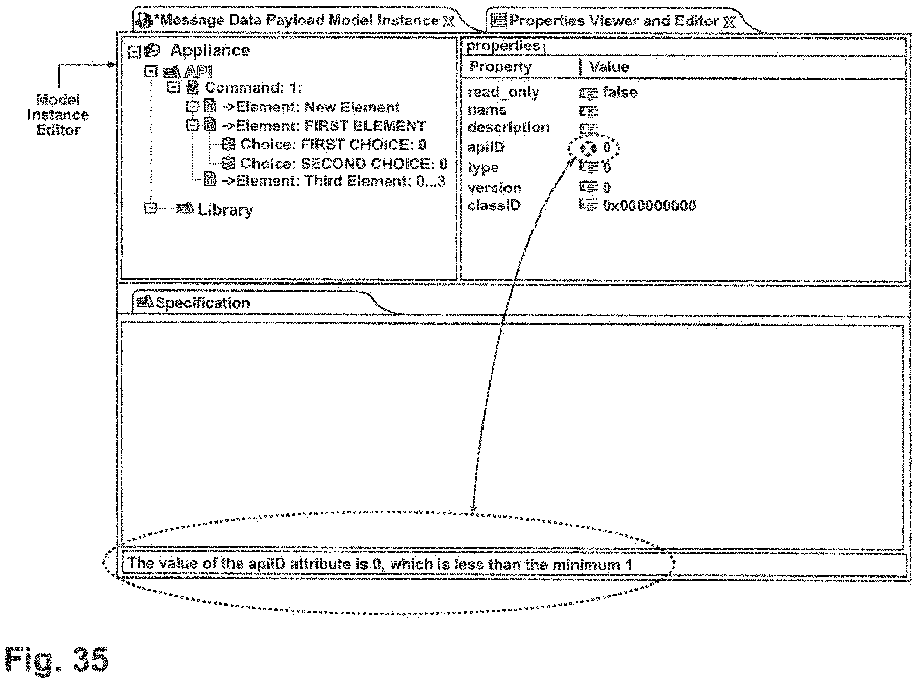

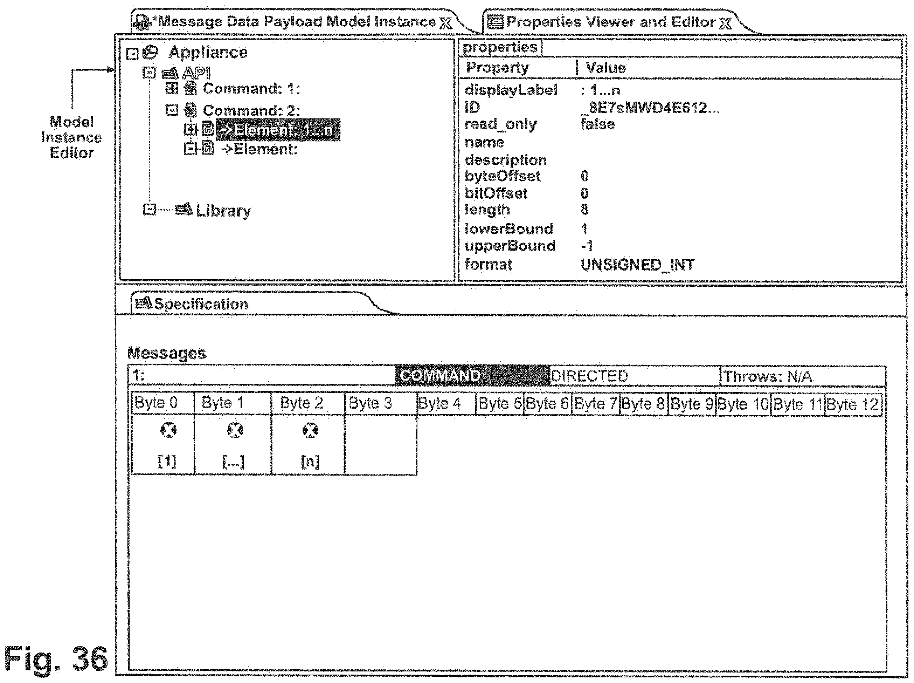

Looking now to FIGS. 30-42, in a first embodiment, a hierarchy of objects starts with a single root object that we can call "root." The root object has 0 to n children and the children may be of different types (i.e., type 1 and type 2). In turn, the 0 to n children may also have children. Therefore, an object A that is a child of root and has children of B and C is considered to be both a child and a parent and can be referred to either as a child or a parent depending on the context. Except for root, all objects in a hierarchy are a child and those with children are also parents. Root is a parent unless it has no children.

The first embodiment is a simple example of an implementation of a hierarchy wherein the parent child relationships are direct relationships. In a direct parent child relationship, the parent includes an identifier identifying each of its children. Therefore, the parent cannot be decoupled from its children because it comprises the identifiers of its children.

A second embodiment exemplifies an indirect parent child relationship wherein neither the parents nor the children include identifiers of the other. Instead, a holder object contains the identifiers of both. For example, object Q is a holder and contains an identifier of object A, object B, and object C, wherein object A is of type 1, object B is of type 2 and object C is of type 3. Objects A, B, and C do not have access to the identifiers of one another. The primary responsibility of object Q is to contain identifiers for objects A, B, and C thereby establishing that there is some type of relationship between objects A, B, and C. There are a number of ways that the nature of the relationship between A, B, and C can be ascertained. In a first example, object Q has access to information defining the possible relationships between objects of type 1,2, and 3. In this example the information would define a first relationship definition between objects of type 1 and type 2 as being a parent - child relationship wherein type 1 must be the parent and type 2 must be the child. The information would also define a second relationship definition between objects of type 1 and objects of type 3 as being a parent - child relationship wherein type I must be the parent and type 3 must be the child. With the information, object Q can interpret the relationship between object A, B, and C as a parent with two children wherein A is the parent of children B and C.

A third embodiment exemplifies an alternate approach for creating an indirect parent child relationship wherein neither the parents nor the children include identifiers of the other. In this embodiment, multiple holders are used to create a holder hierarchy. For example, object Q is a holder and contains an identifier for object A. Object Q also contains an identifier for a second holder object X. Object X contains an identifier for object B. Holder object Q is a parent holder with respect to holder object X because holder object Q contains the identifier to holder object X. Therefore the relationship between object A and object B be can be inferred as a parent child relationship when observed from the perspective of holder object Q and holder object X because holder object Q are in a direct parent child relationship. In this case, object A and object B are in an indirect parent-child relationship.

Fig 37 shows a model in the form of a simplified UML class diagram that includes examples of relationship definitions including both direct and indirect parent child relationships. It should be noted that a UML class diagram defines possible relationships between future instances of objects derived from at least one class definition by depicting an arrangement of relationship definitions used to define relationships between class definitions where the possible relationships are a function of the relationship definitions. A UML class diagram is useful because the arrangement of and relationships between each of the future instances of objects derived from at least one class definition may be verified and or at least partially predicted using the UML diagram

Generally, in an appliance runtime environment, variables are identifiers which have an associated value where different actors in the runtime system set the value of the variable. However, Fig 37 depicts additional possibilities for expanded use of variables and their values and illustrate the benefit of holders.

In some cases, a variable can have a relationship with a value where, for example, the relationship depicts a request for the variable to be set to the value at a future time. In other cases, a variable could be associated with a plurality of values in order to depict the possible values of a variable at some future time.

Yet in other cases, as in forking elements within a message data payload or a capabilities definition, values are parents of other variables. Relationships like this are useful to express hierarchies of choices, variable validation, payloads validation, command validation, user interface behavior, etc. For example a hierarchy of choice might have a root of question 1 with choices A and B as children where choice A has a child of question 2 having choices of C and D as children. This hierarchy could be used to drive a user interface wizard such that the answer to question 1 would dictate if another question would need to be asked. For example if the answer to question 1 was choice A then question 2 would need to be asked to get an answer of either choice C or choice D. However if choice B were the answer of question 1 then no further questions would be necessary. Using this technique, the behavior of the wizard could be controlled by the capability definition and an answer sheet comprising the list of questions asked and the answers given could be validated using the capability definition.

A forking element includes a hierarchy having a first parent object with at least two children where at least one of the two children has one or more second children and where the one or more second children have one or more third children. An interpreter of the first parent, the one of the two children, the one or more second children, and the one or more third children interprets the two children as valid values of the parent and interprets that the one or more second children is applicable to the hierarchy when the first parent is paired with the at least one of the two children that is the parent of the one or more second children. Figure 30 illustrates a set of direct parent child relationships having an example of a forking element as part of a message data payload model instance. The First Element of Byte 0 has two valid values, First Choice and Second Choice. Second Element is a child of First Choice and Third Element is a child of Second Choice. Given this arrangement, when a message data payload corresponding to the illustrated message data payload model instance of Fig 30 is transmitted on a network as part of a network message, the value of Byte 0 would determine the meaning of Byte 1. For example, if the useable data transmitted in Byte 0 corresponded to the first portion of useable data associated with First Choice, then an interpreter or user of the network message could ascertain that Byte 1 contained useable data associated with the second portion of the Second Element rather than Third Element.

In an extension of the first example exemplifying a nested forking element, the Second Element also has two children Third and Forth Choice respectively each having a child Forth and Fifth element respectively. Here an interpreter or user of the network message could ascertain the meaning of Byte 2 by looking at the useable data found in Byte 1 and associating the useable data of Byte 1 with corresponding second portion of Byte 2. For example if the useable data of Byte 1 corresponded to the useable data of Third Choice, an interpreter could then determine that the meaning of the useable data found in Byte 2 would correspond to the second portion of the Forth Element. A forking element comprising at least one additional forking element creates a nested forking element.

Looking again at Fig. 37, the previous example illustrated by Fig. 30 can be understood in the context of the Message Data Payload Model shown in Fig 37. Also shown is that components of the Message Data Payload model extend or inherit from class definitions in the Variable Model. Message Element can be a Variable or it can be a Variable Holder. Also, Choice and Variable Definition extend Abstract Value Class.

Using the previous example of Fig. 30 and applying it the model of Fig. 37, a forking can occur when an Abstract Value object like a Choice has a child of a Variable like a Message Element which is shown to be a potential arrangement in that Choice extends Abstract Value via Value Abstract Class and that Abstract Value may have a Variable as a child and that Message element extends or is a Message Element. These relationship definitions as shown in the simplified UML, define the possibility to have Message Elements having children of Choices those Choices having children of other Message Elements as shown in Fig. 30 which shows an instance of the message data payload model of Fig. 37.

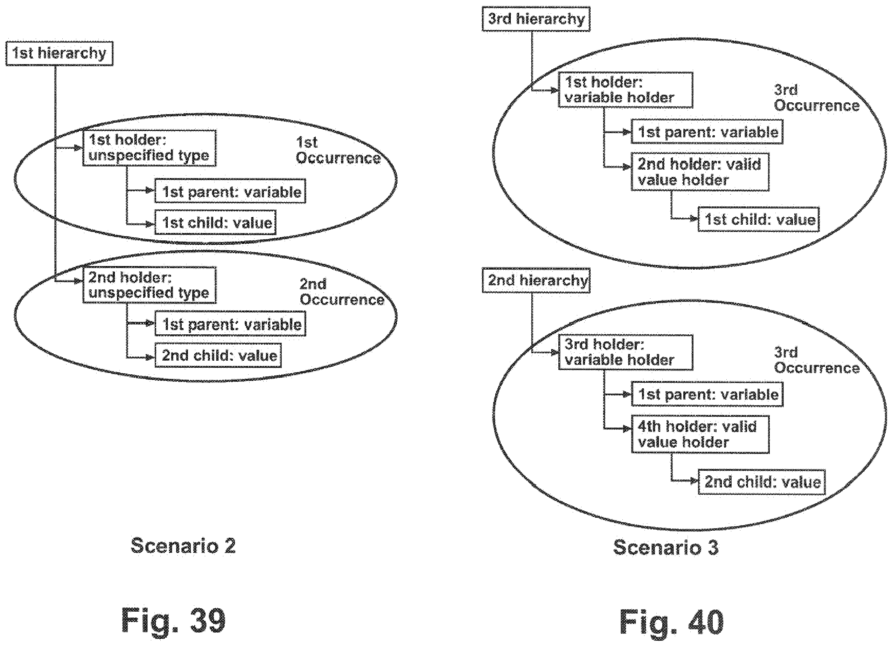

However, it can be undesirable to have direct parent child relationships between Variables and their Values as shown in Fig. 30 and as allowed by the model of Fig. 37. As shown in Fig. 37, a Variable Holder may include a reference to a Variable and a Value. In this way, an indirect parent child relationship can be formed as described in the second embodiment exemplifying an indirect parent child relationship (above) and as shown in the first and second occurrences of Fig. 39, where a first holder holds a reference to a first parent variable and a first child value and a second holder holds a reference to the first parent variable and a second child value. Fig 39 shows that by using the first and second holder objects the first parent variable can participate in two different indirect parent child relationships; one with the first child value and the other with the second child value.

Additionally, as shown in Fig. 37, another embodiment shows how an indirect parent child relationship can be formed. According to the figure, an instance of a Variable Holder may also include a reference to an instance of an object that derives from the Abstract Value class which includes Value Holder, Value, Variable Definition, and Choice. And an instance of Value Holder may include a reference to an instance of an object that derives from Value Abstract class which includes Value, Variable Definition, and Choice. In this way, an indirect parent-child relationship can be formed as described in the third embodiment exemplifying an indirect parent child relationship (above) and as shown in the third and forth occurrences of the third and second hierarchies in Fig 40, respectively, where in the third occurrence, a first variable holder has a reference to or holds a first parent variable and has a reference to or holds a second value holder which then has a reference to or holds a first child value. In this way an indirect parent child relationship is formed between the first parent variable and the first child value via the direct parent child relationship between the first variable holder and the second value holder. Likewise in the 2nd hierarchy, the first parent variable is shown for a forth time in the forth occurrence (first and second occurrences from Fig. 39) in a similar indirect parent child relationship as is shown in the third hierarchy but with a second child value. Figure 40 illustrates a variable participating in two indirect parent child relationships where each relationship involves a different child by using variable holders and value holders as prescribed by the variable model of Fig. 37.

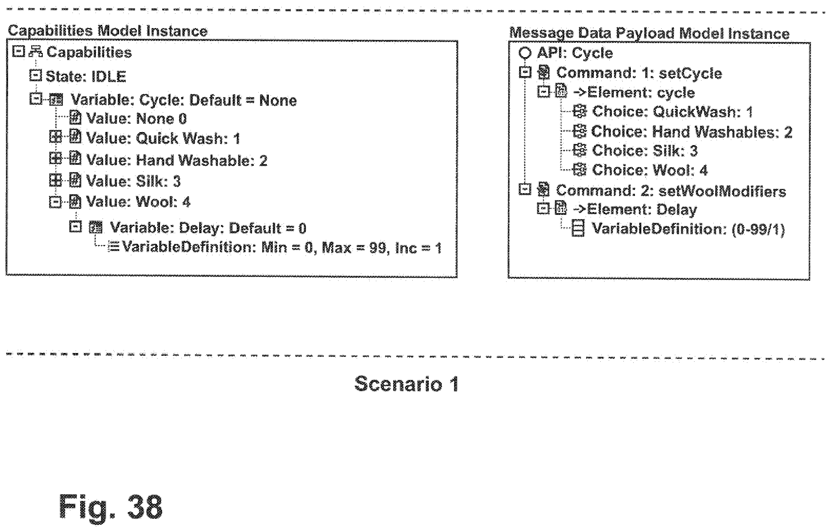

Additionally, as shown in Fig 37, the Abstract Value class is defined as having a direct parent child relationship with the Variable Holder class or the Variable class. This is the enabling model relationship definition that supports the forking element of Fig 30 as well as the relationship between Value: Wool: 4 and Attribute: Delay: Default = 0 of Fig. 38.

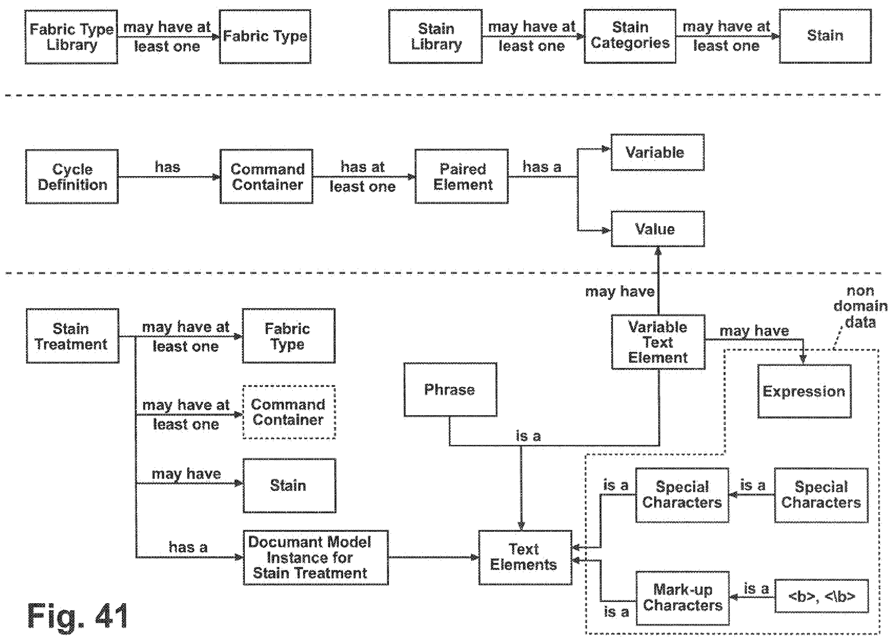

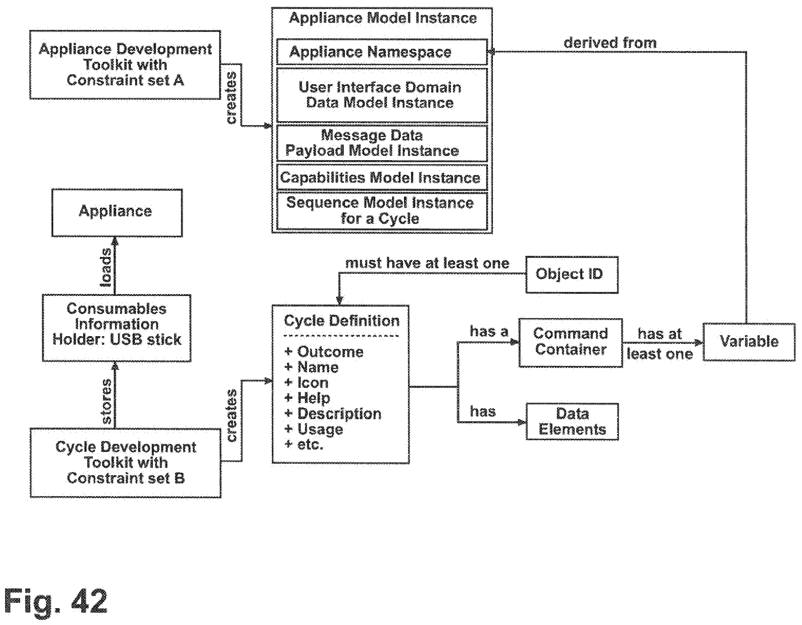

Fig. 37 also illustrates the model for the Capability Model of an Appliance. Fig 38 (left side) illustrates an instance of the Appliance Capabilities Model. Shown in Fig 38 (left side), is a hierarchy of variables to values and variables to variable definitions in repeating direct parent child relationships. This hierarchy known as a capabilities tree is a child of the state object idle, meaning that when the appliance is in idle, the hierarchy contained by state idle represents the operation capabilities of the appliance from a command and control perspective. From the command perspective, all valid commands can be derived by observing and interpreting the hierarchy. A command, in its simplest form, is a message that results in one appliance variable being set to a value. The variable and the value together are referred to as a pair element (also shown in Fig. 41). In many cases however, a valid command to an appliance includes a plurality of interdependent variables each having a value selected from a plurality of valid values and wherein the selection of the values determines a portion of the other interdependent variables that also must be specified with a value to form a well formed command. As previously describe in the hierarchy of choices example, the appliance capabilities model can be used to determine what additional interdependent variables must be included in a well formed command based on the selected value of each variable. Another term for a well formed command is a command container. Command containers have at least one paired element. A command container may be validated by traversing the capability tree to observe and verify that each of the variables or variable holders in the command container is one of a root of the tree and a parent in the tree wherein the parent is a value or value holder as part of the plurality of paired elements, to observe and verify that each paired element is located at one of the root or a direct descendent of another paired element connected to the root, and to observe and verify that at least one paired element comprises a value or value holder as a leaf node of the tree. As shown in Figs. 41 and 42, a cycle definition, then, includes a command container wherein the content of the command container affects the cycle of operation of the appliance when the appliance runtime sets the variables specified by the command container to the values specified in the command container. Other information included in the cycle definition can be used for user interface rendering and other non-control system domain purposes.

The capabilities model instance of Fig. 38 is an example of using only direct parent child relationships between variables and values. However, according to Fig. 37, a different embodiment using variable holders and value holders could be constructed (similar to Fig 40.) where the capabilities model instance would comprise variable holders, variables, value holders and values.

It is apparent, by observing Fig. 38 right side, how value and variable holders could provide improvement to the compatibility of the two instance models. Just as in Fig. 37, the variable model provides some common base classes for use by the message data payload model and the capability model, the left and right sides of Fig 38 represent content including variables and values arranged in a nested repeating hierarchy of alternate levels of variables having values and value having variables. However, because direct parent child relationships are used in the left and right instance models, herein referred to as scenario 1, there is less reuse than could be accomplished if variable and or value holders were used as in scenario 2 and scenario 3 of Figs. 39 and 40 respectively. Referring the Variable 'Cycle' on the left and the Element 'cycle' on the right it can be observed that these two information elements are the same logical entity. In both cases, the elements refer to the memory variable in the appliance runtime which corresponds to one of the selected, request, and active cycle of the appliance. However, the capabilities model on the left contains a complete validation hierarchy as exemplified by the 'Delay' variable underneath the 'Wool' value. By contrast, the message data payload instance on the right has two hierarchies one for the 'cycle' and one for the 'Delay' because the designer of this context made a choice to arrange the information into separate hierarchies. Therefore, because the information is in multiple hierarchies partitioned and organized differently the information must be duplicated in separate information elements as shown in Scenario 1.

However, if the information were created using the previously described technique of Scenario 3 of Fig. 40, the information would not require duplication and the information elements or identifiers thereof (i.e. Variables, Values, Message Elements, Choices, Variable Definitions, e.t.c.) could be re-used throughout multiple hierarchies each have a different context. Using this approach then, the multiple contexts can leverage information from the multiple contexts because there are common or shared objects within those contexts which can be used to gather information across multiple contexts by using the shared objects as navigation objects for jumping from and jumping to different contexts. This is further explained and exemplified by Fig. 40 and the description thereof.

For example, an appliance could communicate its operational capabilities to a client by sending a capabilities model instance to the client. The client could then form a command container and send that command back to the appliance. The appliance could take the variables from the paired elements of the command container and validate the command by traversing the capabilities tree as previously described. Once validated the appliance could automatically convert the command container into one or more message data payloads for constructing network messages to execute the command container across multiple control boards communicating on the network. This automatic conversion and validation is enabled by using variable and value holders to construct the capabilities and message data payload model instances.

When variable and values participate in more than one hierarchy wherein each hierarchy has a context different from the other hierarchies it is difficult to only use direct parent child relationships. For this reason, the UML class diagram of Fig 37 depicts a variable model wherein a user can use either of the at least one variable holder and the at least one value holder in creating at least one hierarchy of elements for content independent of any relationship that may otherwise exist between the variable and other elements and between the value and other elements so that the variable and the value can be used in different contexts with different relationships while maintaining their relationship with each other via the at least one variable holder and the at least one value holder.

Figure 42 depicts the use of an appliance development toolkit a first set of constraints creating a first set of content with which a second user using an appliance development toolkit having a second set of constraints could use to create a cycle definition. As previously described a cycle definition includes a command container with at least one pair element derived from a collection of appliance variables and values. The appliance namespace includes a collection of uniquely identifiable and meaningful variables for an appliance. Therefore the user of the toolkit with the second set of constraints could create a cycle definition by selecting data from the appliance model instance shown in FIG. 42 and specifically from the appliance namespace. As the user constructs the cycle definition, the toolkit could validate the cycle definition using the capabilities model instance. The user could associate data about the cycle definition including source identification data which includes brand emblems and other licensable data or other data including usage text, help, and one or more identifiers of persons, consumables, and articles, and the like.

Fig. 43 illustrates the use of a document model instance within a domain model instance interacting with a converter to create content for display in a viewer (right). The purpose of the document model is to allow a user to use the editor to create and view content associate with a domain model within the system configurator before final export to a content target. In a sense, the viewer is a content target simulator.

A domain model is an abstraction or model associated with real world constructs like cars, buildings, trees, law, language, media, finance, and just about any topical concept imaginable without respect to non-domain concerns like formatting, language, style, persistence form and the like.

In Fig. 43 the domain model is an ingredient substitution model and the non-domain model is the contained document model shown in the dashed box. As shown, the document model is an arrangement of objects (shown under the UIText object) including markup objects for formatting, special objects for creating spaces or punctuation, text objects for creating static content, and domain objects able to contribute content based on their properties, functionality, and composition.

A converter traverses the arrangement to create html content for the internet browser based viewer on the right. In this way, a user can specify the behavior of the content target with respect to the content by creating data for simulation of the content target. Additionally, the content view aids the user in understanding the meaning of the domain object model in that a portion of the viewable content is a function of the domain model. Therefore the content viewer helps the user validate and verify the composition of the domain model.

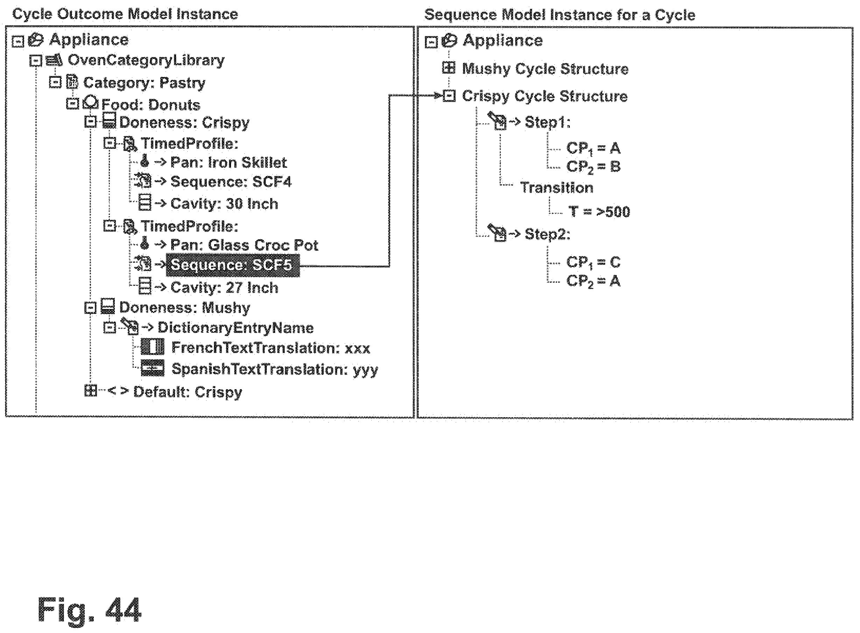

Figure 44 depicts binding between appliance user domain data and appliance control system domain data. As shown, a cooking cycle outcome model instance comprising a food identifier, a vessel identifier and a doneness identifier is bound to a cycle structure identified by SCF5 wherein when the content is generated for the appliance from the cycle outcome model instance and the sequence model instance for a cycle and appliance control functionality of FIG. 8 is created by the appliance software frameworks of FIG. 7 and FIG. 28 a user can affect the cycle of operation by selecting elements of the user domain data rendered on the user interface and bound to the cycle structure identified by SCF5.

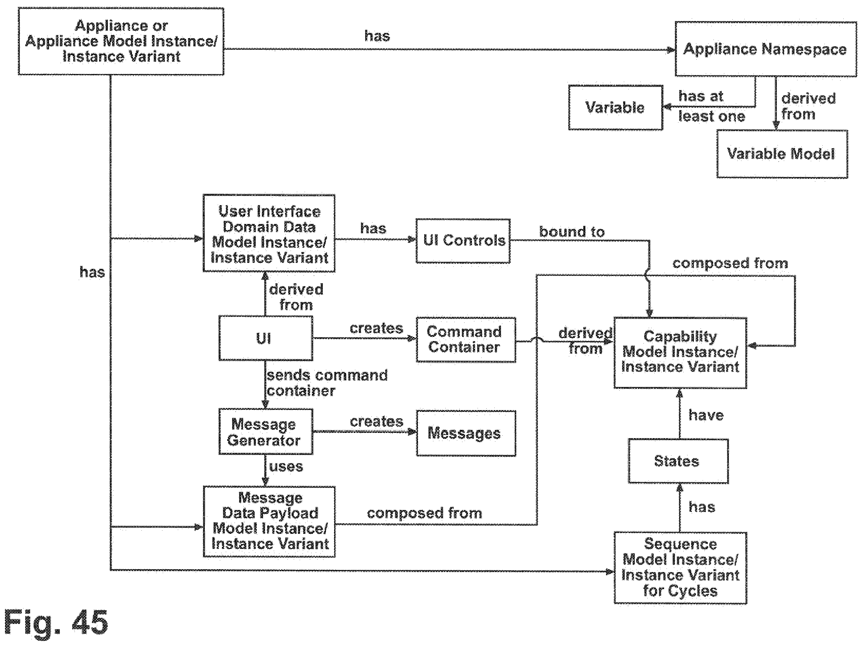

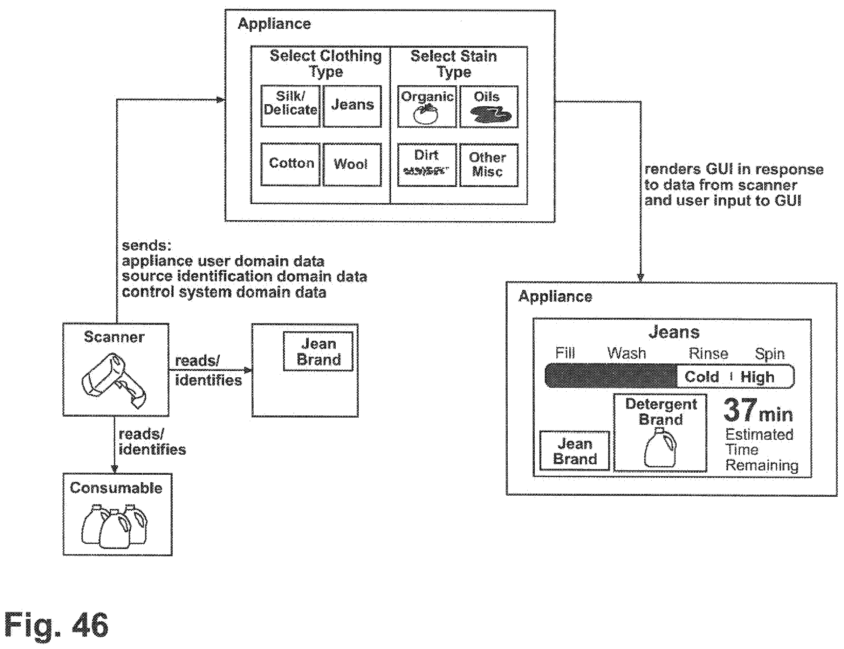

In this way, the user interface of FIG. 46 could display the identification data and other data on the user interface of the appliance in response to the identifiers either sensed from a sensor like a scanner or selected from an appliance user interface. Moreover, as previously discussed, the cycle definition can be automatically translated into transmittable network messages by the message generator of figure 45 using the message data payload model instance of FIG. 42 and FIG. 45.

Fig. 47 shows an example of how an appliance development toolkit according to the invention is used in interaction with a user and an appliance to diagnose an appliance. It further shows additional examples of the use of a constrained editor using model instances as the constraining component. The editor in the toolkit is configured to create one or more test scripts having at least two steps, each step being separated from its adjacent steps by a transition condition that includes a logic expression resolvable to a boolean transition value, at least one command statement associated with one of the at least two steps that instructs what should happen when the at least one step is the current step so that a test engine can execute the at least one command statement contemporaneous with the transition of the at least one step from the current step to the next step. The toolkit also provides information associated with at least one message element in a message data payload so that the message data payload is uniquely identifiable within a universe of pre-defined message data payloads for the appliance. (See the foregoing discussion of identifiers) A converter will place the test script into a form to be readable or at least useable in diagnosing an appliance.

There will be associations of command statements and message elements created by editor so that a test engine application can create a well formed command based on the test script. Command statements will include such things as questions to a user such as shown in Figs. 11-15. Holders as discussed elsewhere are useful tools for the editor to effect flexibility in creating command sequences for the test script. The test engine is configured to observe subsequent network messages and relate those to a transition logic in the test script, and to evaluate the logic for transition to the next step as it traverses a hierarchy in the test script.

In one embodiment, a second a communications driver can be configured to establish a communication link with the test engine, and a fault tree execution engine is configured to access one or more fault trees, to construct a well formed message based on instructions in the fault tree or trees, and to convey the well formed message to the test engine via the second communication link during execution of a command statement in the fault tree.

So it can be seen that a message data payload model instance editor creates the data upon which a sequence model instance editor creates the test script (which is a sequence model instance). The test engine uses the test script in communication with a smart cable to talk with the appliance and with the user. Meanwhile a sequence model instance editor creates a sequence model instance of a fault tree that a fault tree application uses in interaction with the user.

A sequence model editor for test is similar to other instances using the sequence model in that it allows the user to create a set of steps separated by transition conditions having logic to drive the condition where each step has an associated action specifying the tasks to be done in that step. A sequence model instance editor for appliance tests would use instances of the message data payload model as constraining elements for the actions in each step. This is accomplished in a similar fashion previously described for Fig. 27 wherein instances of the message data payload are used to constrain a sequence model for a cycle.

Referring back to Fig. 47, the sequence model for fault trees is constrained as well using the instance of the sequence model for tests wherein each test in the instance for sequence model tests might have an identifier or an identifying test object that could be bound to the action of a step in the sequence model for a fault tree at tool time such that when the fault tree application reached a step wherein a test should be executed, it could communicate with the test engine application to invoke the test corresponding to the identification of the test object at runtime.

The test engine, having been previously constrained by elements from the message payload model instance and having actions of steps bound to message payload instances can use the binding to automatically construct and transmit useable messages from the test engine application to the appliance using the method as previously described for cycle definition translation to message data payloads.

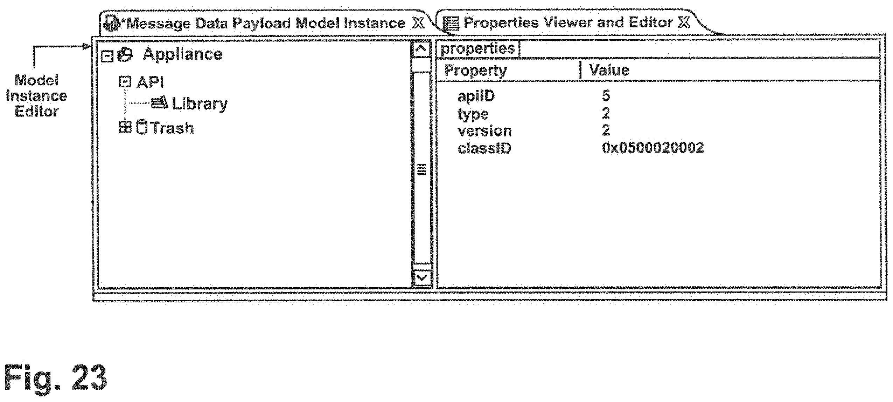

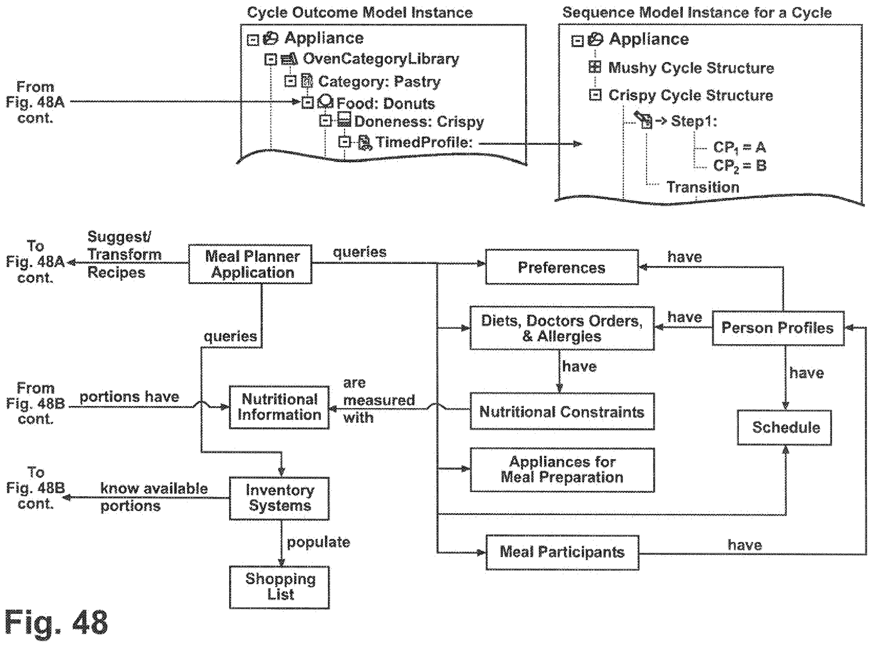

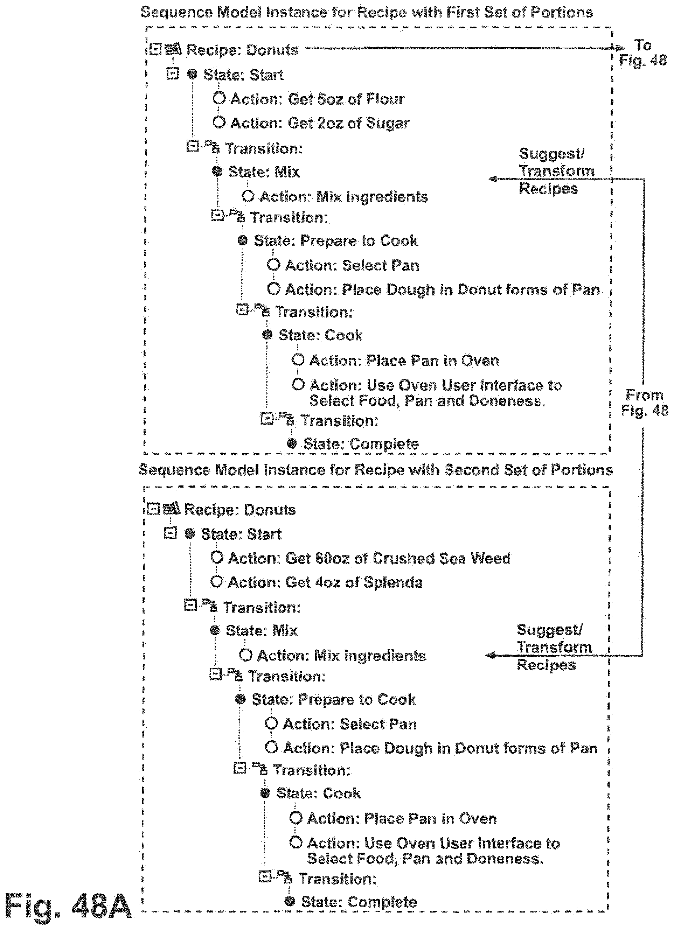

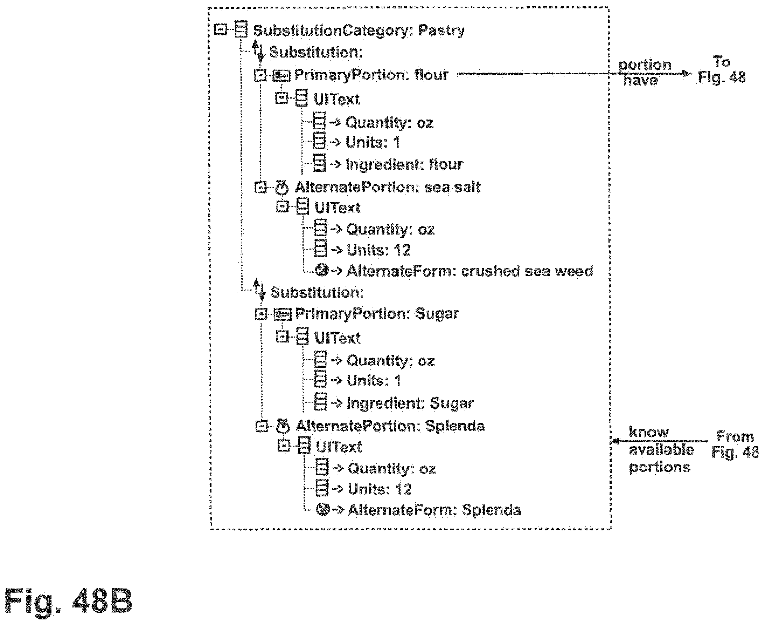

FIGS. 48, 48A, and 48B illustrate binding between multiple instances of user domain data to control system domain data, which is illustrated at a high level in FIG. 23. The control system domain data comprises a cycle outcome model instance and a sequence model instance for a cycle that can be used for a cycle structure for a cooking appliance. To achieve a desired outcome, a set of cooking profiles (FIG. 44) are created each having multiple components specifying various parameters associated with the cooking cycle.

To get the doneness of crispy donuts, the profiles in FIG. 44 indicate that the a user 14 needs to use an iron skillet in a 30" cavity, and in the other case we have a glass crock pot in a 27" cavity; thus, a user 14 can cook those donuts differently to achieve the same outcome, and the desired cycle outcome will point to the specific sequence for the cycle. Different profiles and different cycle structures can therefore achieve the same outcome given a set of appliance user domain elements like the food type, cavity size, and the pan.

In the recipe, the user 14 first gets the ingredients: get 5 ounces of flour, 2 ounces of sugar. The recipe then transitions to the next state called mix. The user 14 then mixes the ingredients and transitions to the next state to cook. The user 14 puts the mix in the pan and form the dough,, we get our pan, we place the dough in the donut forms in the pan and then we go into state cook, where we place the pan in the oven, and use the oven user interface to select the food pan and doneness to select the cycle.

The ingredients substitution model and instance of that model are both appliance user domain data. For a portion of flour, there is an alternate portion of crushed seaweed, and the substitution object holds the primary and alternate portion and enable a user 14 to substitute one for the other and still complete the desired cooking cycle.

Likewise, we have a second substitution that shows a substitution between sugar and Splenda. So the arrows between the ingredients and the alternate portions and the substitution window point up to both the first recipe and the second recipe, and as seen in the second recipe, the ingredients automatically changed out the ingredients from 5 ounces of flour to 60 ounces of crushed seaweed and from 2 ounces of sugar to 4 ounces of Splenda. This relationship between these models/model instances enables the user 14 to fluidly accommodate issues that arise during cooking.

The portion and an alternate portion can also have nutritional information associated therewith so that as recipes call for certain portion substitutions, the nutritional information is derived from the portions and then compared that to the constraints from the meal planner discussed below, allowing the meal planner to then actually achieve the substitutions based on nutritional constraints.

This ability to transform and suggest a recipe comprises a meal planner that can query other smart agents of information to figure out how to best plan the meal. The meal can also be a combination of multiple recipes, such as a lasagna followed by donuts for dessert. The meal planner will thus query for the participants in the meal, each person schedules, the profiles of the participates to note food preferences, allergies, diets, and doctor's orders that would create constraints on the meal planner. The meal planner will then use the information garnered from these queries to select either certain recipes or certain ingredients for recipes to conform to the preferences of the people, the schedules of the people, or the nutritional constraints that people might have based on their diets, allergies, e.t.c.

The other constraint that a meal planner could look at would be an inventory system constraint where an inventory system actually knows the available portions that are in the house and then the meal planner could take that and select recipes or do ingredient substitutions or recipes based on the inventory at hand. It could also populate a shopping list if there were certain things that it highlighted as not being available or being in conflict with a preference of a person or a diet of a person, then it could kind of spit out a shopping list and say to the user of the meal planner, hey, we better get this. And of course it could automate that transaction by having it ordered, delivered, etc.

One of ordinary skill will appreciate at least the following inventions arising from this disclosure:

### Appliance development toolkit with data feedback

1. An appliance development toolkit to enable creation of content to affect operation of a component in a communicating appliance or to affect user interaction with an appliance, the toolkit comprising:
   a system configurator having an editor to create the content including at least one of appliance user domain data and control system domain data, and a viewer,
   a communication driver to establish a link between the system configurator and at least one control board in an appliance or simulation thereof,
   software configured to command operation of the at least one control board in the appliance or simulation thereof and to generate data in the viewer based on the operation, and
   one of an appliance simulator and an appliance wherein a user can observe the data in the viewer and create or modify the content using the editor in response to communication over the link.
2. The appliance development toolkit of claim 1 further comprising a smart coupler in the link.
3. The appliance development toolkit of claim 1 wherein the viewer has a command window where a user can define and initiate a command for operation of the at least one control board.
4. The appliance development toolkit of claim 1 further comprising a sequence model useable by the editor to create the content including instances of cycle data for the appliance.
5. The appliance development toolkit of claim 3 further comprising a sequence model useable by the editor to create the content including instances of cycle definitions for the appliance wherein a user can use the command window to establish a portion of the cycle data by observing one of the data in the viewer and the appliance contemporaneously with initiating the command and use the editor to include the portion in the content.
6. The appliance development toolkit of claim 5 wherein the content includes at least one of a cycle definition, a cycle structure, information about a cycle structure, a paired element, source identification information, a message data payload structure, and information about a consumable.
7. The appliance development toolkit of claim 6 further comprising access to a datastore and credentials for writing information into the datastore wherein the content can be stored in the datastore for later retrieval for use with the appliance.
8. The appliance development toolkit of claim 7 wherein the datastore is a consumable information holder.
9. The appliance development toolkit of claim 3 wherein the viewer includes a data analyzer configured to display the useable data from the communication link with non-usable data describing the useable data wherein a user can understand the meaning of the useable data.
10. The appliance development toolkit of claim 9 wherein the data analyzer is configured to accept other content including a portion of the useable data and a portion of the non-useable data associated with the portion of the useable data wherein the association enables the display without specific coding of the data analyzer with respect to the useable data.

### Appliance development toolkit with universal editor

1. An appliance development toolkit to enable creation of content to affect operation of a component in an appliance or to affect user interaction with an appliance, the toolkit comprising:
   one of appliance user domain data and source identification domain data,
   an editor to create instances of data elements related to functionality of an appliance or to functionality of the editor derived in part from the one of the appliance user domain data and the source identification domain data,
   an interactive user interface on which the editor is displayed for use by a developer, and
   a converter to generate content using the data elements created by the instance,
   wherein the editor is configured at least in part by the one of the appliance user domain data and source identification domain data irrespective of the appliance so that the appliance development toolkit can be used for different appliances without recoding.
2. The appliance development toolkit of claim 1 wherein the one of the appliance user domain data and the source identification domain data derives from a model and the editor is a model instance editor configured to create instances of the model, wherein the editor derives constraints from the model so that the editor cannot create a model instance incompatible with the model.
3. The appliance development toolkit of claim 1 wherein the converter is an exporter to export at least a portion of the data elements as the content.
4. The appliance development toolkit of claim 1 further comprising a second one of appliance user domain data and source identification domain data wherein the editor can create second instances of data elements derived from the second one of the appliance user domain data and the source identification domain data.
5. The appliance development toolkit of claim 4 wherein the editor enables creation of associations between instances of data elements derived from the one of the appliance user domain data and the source identification domain data, and instances of elements derived from the second one of the appliance user domain model and the source identification domain data.
6. The appliance development toolkit of claim 5 wherein the converter creates content including related portions of the instances of data elements derived from the one of the appliance user domain data and the source identification domain data, and the instances of data elements derived from the second one of the appliance user domain data and the source identification domain data wherein the operation of the component in the appliance or the interaction between a user and the appliance is affected by the related portions.
7. The appliance development toolkit of claim 6 wherein the related portions include cooking vessels and a cooking outcome.
8. The appliance development toolkit of claim 6 wherein the related portions include cooking vessels and food to be cooked.
9. The appliance development toolkit of claim 6 wherein the related portions include clothes and their soil conditions.
10. The appliance development toolkit of claim 6 wherein the related portions include clothes and a cycle outcome.
11. The appliance of development toolkit 10 wherein the cycle outcome is associated with one of time, cleanliness, resource usage, and damage to the clothes during the cycle.
12. The appliance development toolkit of claim 4 wherein the second instances relate to a content target.
13. The appliance development toolkit of claim 12 wherein the content target is the appliance and the converter creates content for direct use by the appliance.
14. The appliance development toolkit of claim 2 wherein the model instance editor derives validation rules for the content from the model.
15. The appliance development toolkit of claim 2 wherein a portion of behavior of the model instance editor is derived from one of the appliance user domain data model and the source identification domain model.
16. The appliance development toolkit of claim 2 wherein the model is functionally equivalent to a UML class diagram.
17. The appliance development toolkit of claim 2 wherein the model is functionally equivalent to one of a database schema database and a database having a plurality of records.
18. The appliance development toolkit of claim 1 further comprising at least one viewer for viewing the content.
19. The appliance development toolkit of claim 1 wherein the content is formatted as at least one of at least one relational database, XML document, CSV file, binary file, data collection, memory structure, object structure, object graph, object tree, memory heap, machine code, source code, and text file.
20. The appliance development toolkit of claim 1 wherein the content is configured by the converter for a predetermined content target to use the content with the appliance when the content target is in communication with the appliance.
21. The appliance development toolkit of claim 20 wherein the content target is one of a remote client, a local client, and an internal client of the appliance.
22. The appliance development toolkit of claim 20 wherein the content target is one of the appliance, an appliance accessory and a consumable information holder.
23. The appliance development toolkit of claim 20 wherein communication between the content target and the appliance is one of continuous and momentary.
24. The appliance development toolkit of claim 1 wherein the content affects the cycle of operation of the appliance.
25. The appliance development toolkit of claim 1 wherein the content affects a user interface of the appliance.
26. The appliance development toolkit of claim 1 wherein the content is configured to be at least one of a cycle structure, a custom cycle, a branded cycle, user attached data about appliance control functionality, a fault tree, a diagnostic test, an appliance user interface, appliance network communication, routing tables for appliance network communication, stain treatment, cooking, cooking algorithms, cooking vessels, meal preparation, dish preparation, recipes, units conversion, ingredients, ingredient substitution, dietary needs, nutritional constraints, nutritional information, detergents, softeners, fragrances, clothing, stains, soils, appliance use and care, appliance FAQ, consumables meta data, meal participants, personal profiles, personal preferences, inventory information, personal schedules, identification of one of a person, article, other appliance, and a consumable, and information associated with consumables.
27. The toolkit of claim 1 further comprising an encoder for encoding content onto a consumable information holder.

### Development toolkit with editor to create usable network message data

1. A development toolkit for creating a message data payload for use on a communications network having rules for data representation, the development toolkit comprising:
   an editor configured to create a first portion of a message data payload having usable data for transmission over the communications network, to create a second portion of the message data payload having information to describe the usable data, wherein the editor comprises constraints that limit the manner in which creating the first and second portions and the association occurs, the constraints being defined in part by the rules for data representation, and
   a user interface to display a visualization of the message data payload from the editor whereby a user can conveniently create a message data payload for immediate use and see a graphical representation of the message data payload as it is created.
2. The development toolkit of claim 1 wherein the editor is further configured to create the first and second portions in a first form selected from one of a hierarchical tree structure, an object graph structure, an xml structure, a text structure, and a rows and columns cell structure, and a second form where the message data payload is arranged as at least a portion of a network message packet.
3. The development toolkit of claim 1 further comprising a model wherein one of the constraints and the rules for data representation are partially derived from the model.
4. The development toolkit of claim 3 wherein the model is one of a UML class diagram, an EMF Ecore model, a database schema, an XML schema, data in a database, and data in an XML file.
5. The development toolkit of claim 3 wherein the editor is configured to create an instance of at least a portion of the message data payload from the model.
6. The development toolkit of claim 1 wherein the rules for data representation are included in a data file and the constraints are derived from the data file.
7. The development toolkit of claim 1 wherein the references of the one of the first and second portions to the other of the first and second portions is one of direct and indirect.
8. The development toolkit of claim 1 further comprising a converter to generate content using the message data payload from the editor, and a second user interface to display the content derived from the message data payload.
9. The development toolkit of claim 8 wherein the content is a document.
10. The development toolkit of claim 9 wherein the document is one of human readable, machine readable, and a communications specification.
11. The development toolkit of claim 9 wherein the document includes a portion of the message data payload.
12. The development toolkit of claim 8 wherein the first portion is at least one bit and the second portion is scaling data.
13. The development toolkit of claim 12 wherein the at least one bit is converted into a numeric value by reference to the scaling data.
14. The development toolkit of claim 13 wherein the numeric value is one of signed and unsigned.
15. The development toolkit of claim 13 wherein the numeric value comprises engineering units having a value different from the value of the at least one bit directly converted to a signed or unsigned value.
16. The development toolkit of claim 1 wherein first portion is at least one bit and the second portion is a descriptor of the at least one bit.
17. The development toolkit of claim 1 wherein the constraints allow the editor to create a message object comprising first and second portions, to create at least one message element comprising first and second portions, and to associate the at least one message element with the message object
18. The development toolkit of claim 17 wherein when the editor creates at least two message elements and associates the at least two message elements to the message object, the constraints allow the editor to arrange the at least two message elements into an ordered collection so that the message data payload includes at least one message object and at least two message elements.
19. The development toolkit of claim 17 wherein the constraints allow the editor to create at least one value object having a value and to associate the at least one value object with the at least one message element wherein the usable data includes the value.
20. The development toolkit of claim 19 wherein the constraints allow the editor to create a forking element where at least one value object comprises a second message element different from the at least one message element wherein the second message element is applicable to the message data payload when the at least one message element has a value equal to the value of the at least one value object.
21. The development toolkit of claim 18 further comprising a converter to generate content using the message data payload from the editor, wherein the content is an electronic document and the converter is configured to arrange first and second portions of the electronic document to show the ordered collection.
22. The development toolkit of claim 18 wherein the content is an electronic document and the converter is configured to arrange the first and second portions of the electronic document to show the ordered collection of the at least one message element and each of the at least one message elements' valid values and each valid values another message element.
23. The development toolkit of claim 9 wherein the document includes data used for the construction of an electronic message for the network.
24. The development toolkit of claim 9 wherein the document further comprises data not used for the construction of an electronic message for the network.
25. The development toolkit of claim 24 wherein the data not used is documentation data describing the data used.
26. The development toolkit of claim 5 wherein the at least one model instance comprises one of a hierarchical data structure, a graph, a tree, and a relational database.
27. The development toolkit of claim 5 wherein the user interface includes gestures by which a user can build up the model instance.
28. The development toolkit of claim 5 wherein the model instance comprises at least one representation of a portion of a network message.
29. The development toolkit of claim 17 wherein the at least one message element comprises meaningful text describing the meaning of the message element.
30. The development toolkit of claim 20 wherein the constraints allow the editor to repeat the addition of value objects to elements and other elements to value objects infinitely to define nested forking elements.
31. The development toolkit of claim 5 further comprising a converter to generate content using the message data payload from the editor, and a second user interface to display the content derived from the message data payload.
32. The development toolkit of claim 31 wherein the content presented by the second user interface changes in response to the editor changing the model instance.
33. The development toolkit of claim 31 wherein the content is a human readable electronic document comprising a protocol specification having a plurality of message definitions.
34. The development toolkit of claim 31 wherein content comprises and illustrates a message definition having at least one forking element.
35. The development toolkit of claim 34 wherein the illustration includes a visual indication of sets of message elements belonging to the same forking element wherein one of the set can be included in the message data payload wherein the inclusion is a result of the value of the previous message element.
36. The development toolkit of claim 8 wherein the content is configured by the converter for a predetermined content target to use the content with an appliance when the content target is in communication with the appliance.
37. The development toolkit of claim 33 wherein the content target is the appliance.
38. The development toolkit of claim 1 further comprising an identifier assigner.
39. The development toolkit of claim 1 further comprising a data analyzer.
40. The development toolkit of claim 1 wherein the second portion is not useable on the network.
41. The development toolkit of claim 1 wherein the editor further comprises
   a first graphical user interface having a means to create the first and second portions in a first form wherein the first form is selected from one of a hierarchical tree structure, an object graph structure, an xml structure, a text structure, and a rows and columns cell structure;
   a first interface for saving the at least one instance;
   a second interface for loading the at least one instance into the editor;
   at least one third interface for changing a portion of at least one instance;
   wherein the converter creates an alternate representation of a portion of the at least one instance in a second form having information arranged as at least a portion of a network message packet; and
   a second graphical user interface for displaying the second form.
42. The development toolkit of claim 41 wherein the converter is configured to observe the operation of the editor and update display of the second form.
43. The development toolkit of claim 42 wherein the editor is configured to command the converter to update the display of the second form.
44. The development toolkit of claim 1 wherein the useable data includes one of a literal value and a position indicator for the literal value within the message data payload.
45. The development toolkit of claim 18 wherein the editor includes a command enabling a user to change the order of the ordered collection.
46. The development toolkit of claim 18 wherein the editor automatically determines the location within the message data payload of at least one element in the ordered collection.
47. The development toolkit of claim 18 wherein the editor automatically determines the location within the useable data of at least one element in the ordered collection.
48. The development toolkit of claim 47 wherein the location is one of the starting position and ending position wherein position is one of a bit count, a byte count, and a word count.
49. The development toolkit of claim 46 further comprising a converter to generate content using the message data payload from the editor, and a second user interface to display the content derived from the message data payload wherein the editor automatically determines the location within the content of at least one element in the collection.
50. The development toolkit of claim 49 wherein the content is a document and wherein the document illustrates the order of the ordered collection.
51. The development toolkit of claim 50 wherein one of the editor and the converter automatically determine the location within the message data payload of at least one element in the collection
52. The development toolkit of claim 49 wherein the content is a document.
53. The development toolkit of claim 52 wherein the editor comprises a component that can create an occurrence definition for an element within the ordered collection wherein elements within the ordered collection can be configured to one of repeat, have a maximum number of occurrences, have a minimum number of occurrences, be optional, and occur a specified number of times in response to the occurrence definition.
54. The development toolkit of claim 53 wherein the occurrence definition is determined by at least 2 properties and their respective values associated with the at least one message element.
55. The development toolkit of claim 53 wherein the document illustrates the occurrence definitions.
56. The development toolkit of claim 9 wherein the converter formats the document to illustrate the number of network messages required to get the useable data within the message data payload transmitted.
57. The development toolkit of claim 17 wherein the editor is configured to define a length parameter of the at least one message element.
58. The development toolkit of claim 57 wherein the length parameter is defined using units of bit count.
59. The development toolkit of claim 57 further comprising a converter for converting the first and second portions into a document wherein the document illustrates the length of one of the message data payload and the useable data.
60. The development toolkit of claim 59 wherein the document illustrates a message element spanning a byte boundary.
61. The development toolkit of claim 59 wherein the document illustrates a message element occupying less than a total byte.
62. The development toolkit of claim 1 wherein the user interface includes an indication describing a level of compatibility between the message data payload and the constraints.
63. The development toolkit of claim 62 wherein the indication is a message describing an incompatibility between the message data payload and the constraints.
64. The development toolkit of claim 1 further comprising a converter for converting the first and second portions into a document wherein the document illustrates an incompatibility between the message data payload and the constraints.
65. The development toolkit of claim 17 further comprising a converter for converting the first and second portions into a document wherein the document illustrates an incompatibility between the message data payload and the constraints wherein the incompatibility indicates at least two message elements having occurrence definitions which are incompatible.
66. The development toolkit of claim 65 wherein the first of the two message definitions is configured by the editor to repeat infinitely.
67. The development toolkit of claim 8 wherein the second user interface also displays information about communications in response to the transmission of the useable data over the communications network.
68. The development toolkit of claim 67 wherein the information includes the second portion.
69. The development toolkit of claim 8 wherein the second user interface also displays a command window for sending commands from the development toolkit over the communications network.
70. The development toolkit of claim 69 wherein the command window is configured to receive information included in the first portion and wherein the development toolkit automatically converts the received information into a network message including the second portion.

### Appliance development toolkit with editor for namespace allocation

1. An appliance development toolkit to enable creation of content to affect operation of a component in an appliance or to affect user interaction with an appliance, the toolkit comprising:
   an editor having a first interface element for creating information associated with the content, a second interface element to select an identifier from a namespace having a universe of identifiers, and a third interface element to associate the identifier with the information,
   an interactive user interface on which the editor is displayed for use by a developer to observe and modify the creation, selection and association, and
   a converter to generate content using the identifier,
   wherein the content identified by the identifier can be used by an appliance to affect operation of a component in an appliance or to affect user interaction with an appliance.
2. The appliance development toolkit of claim 1 wherein the identifier represents functionality.
3. The appliance development toolkit of claim 1 further comprising a persistence component for storing one of the creation, the selection, and the association for later retrieval.
4. The appliance development toolkit of claim 1 wherein the identifier has one of a plurality of states including reserved, available, proposed, approved, published, and deprecated.
5. The appliance development toolkit of claim 4 further comprising a viewer for observing at least one of the creation, the selection, the association, and the state of the identifier.
6. The appliance development toolkit of claim 1 further comprising a persistence component for storing at least one of the creation, the selection, the association, and the state of the identifier.
7. The appliance development toolkit of claim 1 wherein the interactive user interface includes viewing component for displaying at least one of the creation, the selection, the association, and the state of the identifier.
8. The appliance development toolkit of claim 1 wherein the content is the information and the converter is configured to export the content to an appliance.
9. The appliance development toolkit of claim 8 wherein the content is at least one of foods, ingredients, measurements, units, resources, resource profile contexts and functionalities, stains, and fabric types.
10. A development toolkit to enable creation of message data for a communications network, the toolkit comprising:
   an editor having a first interface element for creating message data, a second interface element to allocate an identifier from a namespace having a universe of identifiers, and a third interface element to associate the identifier with the message data for communication in a message over the communications network wherein the allocation is registered at the namespace, and
   an interactive user interface on which the editor is displayed for use by a developer to observe and modify the allocation and association of the identifier,
   wherein no other developer can use an identifier that has been allocated and wherein the message data can be uniquely identified.
11. The development toolkit of claim 10 wherein the identifier represents functionality.
12. The development toolkit of claim 10 further comprising a persistence component for storing one of the creation, the selection, and the association for later retrieval.
13. The development toolkit of claim 10 wherein the identifier has one of a plurality of states including reserved, available, proposed, approved, published, and deprecated.
14. The appliance development toolkit of claim 13 wherein the interactive user interface is configured for observing at least one of the creation, the selection, the association, and the state of the identifier.
15. The appliance development toolkit of claim 10 further comprising a persistence component for storing at least one of the creation, the selection, the association, and the state of the identifier.
16. The appliance development toolkit of claim 10 wherein the interactive user interface includes viewing component for displaying at least one of the creation, the selection, the association, and the state of the identifier.
17. The appliance development toolkit of claim 10 wherein the message data is uniquely identifiable using the registration.
18. A method of allocating identifiers from a namespace for an appliance configured to perform a cycle of operation on an article wherein the appliance has a controller, the method comprising
   providing a system comprising a database a namespace having a universe of identifiers related to the operation of an appliance,
   storing in memory a state of each identifier in the namespace,
   receiving at least one request from a source to change the state of at least one identifier,
   authenticating in the system credentials associated with the source of the at least one request,
   selecting an identifier from the namespace in response to the request, and
   changing in the memory the state of the selected identifier according to the selection in response to the authentication and the selection
   wherein the state of the selected identifier determines the availability of the identifier for use by the appliance in performing the cycle of operation.
19. The method of claim 18 wherein the receiving step includes two electronic requests initiated simultaneously.
20. The method of claim 18 wherein the state is selected from available, reserved, in use, published, and deprecated.

### Appliance development toolkit with editor to create shared variable namespace

1. An appliance development toolkit to enable creation of content to affect operation of a component in an appliance or to affect user interaction with an appliance, the toolkit comprising:
   an editor configured to enable creation of at least one variable holder, to associate the at least one variable holder with a variable, to create at least one value holder related to a valid value of the variable, and to associate the at least one variable holder with the at least one value holder,
   wherein a user can use either of the at least one variable holder and the at least one value holder in creating at least one hierarchy of elements for content independent of any relationship that may otherwise exist between the variable and other elements and between the value and other elements so that the variable and the value can be used in different contexts with different relationships while maintaining their relationship with each other via the at least one variable holder and the at least one value holder.
2. The appliance development toolkit of claim 1 wherein the at least one value holder comprises the valid value of the variable.
3. The appliance development toolkit of claim 2 wherein the at least one value holder is the valid value of the variable.
4. The appliance development toolkit of claim 3 wherein the association between the at least one variable holder with the at least one value holder defines, in part, validation information.
5. The appliance development toolkit of claim 1 wherein the association between the at least one variable holder with the at least one value holder defines, in part, validation information.
6. The appliance development toolkit of claim 5 wherein the validation information comprises validation of a message payload structure.
7. The appliance development toolkit of claim 5 wherein the validation information comprises validation of a cycle definition.
8. The appliance development toolkit of claim 5 wherein the validation information comprises validation of a well formed command.
9. The appliance development toolkit of claim 5 wherein the validation information comprises validation of a command container.
10. The appliance development toolkit of claim 1 wherein the association between the at least one variable holder with the at least one variable defines, in part, the location of a variable in a message payload structure.
11. The appliance development toolkit of claim 1 wherein the at least one hierarchy is selected from an instance of message data payloads, appliance capabilities, a cycle structure, and an appliance user domain model.
12. The appliance development toolkit of claim 1 wherein the editor is further configured to create a value holder, and to associate the value holder with the at least one value object.
13. The appliance development toolkit of claim 1 wherein the editor is further configured to create at least one instance of a cycle definition used by the appliance to affect the operation, wherein the cycle definition includes information derived from the at least one variable holder, variable, or identifier thereof and the associated at least one value holder, value, or identifier thereof to form a paired element.
14. The appliance development toolkit of claim 13 further comprising a converter to create content including the paired element, wherein the converter is configured create the content for export to a content target.
15. The appliance development toolkit of claim 13 wherein the particular content target is one of an appliance, a consumable information holder, and a performance tag.
16. The appliance development toolkit of claim 13 wherein the at least one hierarchy includes at least one message data payload definition including information comprising the paired element and wherein the content comprises both a portion of the at least one message data payload and a portion of the information to enable automatic translation between the cycle definition and the at at least one payload definition by using the content and to enable automatic construction of a network message including usable data from the content
17. The appliance development toolkit of claim 16 wherein the automatic translation and construction is in response to the cycle definition wherein a content target can automatically translate a cycle definition into at least one network message to initiate a cycle of operation on an appliance having at least one component configured to receive the at least one network message.
18. The appliance development toolkit of claim 13 wherein the editor further comprises a validator to enable validation of the cycle definition.
19. The appliance development toolkit of claim 13 wherein the editor further comprises a validator and is further configured to associate the at least one value holder with at least one other variable holder and to create a hierarchical tree structure having alternating levels of variable holders that have value holders that have variable holders, wherein the validator validates a plurality of paired elements, each paired element comprising at least one variable holder and at least one value holder, by traversing the tree structure to observe and verify that each of the variable holders in the plurality is one of a root of the tree and a parent in the tree wherein the parent is a value holder as part of the plurality of paired elements, to observe and verify that each paired element is located at one of the root or a direct descendent of another paired element connected to the root, and to observe and verify that at least one paired element comprises a value holder as a leaf node of the tree.
20. The appliance development toolkit of claim 19 wherein the plurality of paired elements includes a cycle definition and wherein the tree structure defines the operational capabilities of an appliance.
21. The appliance development toolkit of claim 20 wherein the tree structure is associated with a state of the appliance wherein the operational capabilities of the appliance are applicable only in the state.
22. The appliance development toolkit of claim 1 wherein the editor is configured to create a plurality of variables and associate the plurality with an appliance or identifier thereof to form an appliance namespace wherein the editor further comprises a validator to check that each variable is uniquely identifiable within the appliance namespace.
23. The appliance development toolkit of claim 22 further comprising a model converter to create the content wherein the content includes a portion of the appliance namespace.
24. The appliance development toolkit of claim 23 wherein the content further comprises a portion of the at least one hierarchy.
25. An appliance comprising:
   software to cause operation of a component in the appliance or to affect user interaction with the appliance
   memory containing at least one instance of a cycle definition, wherein the cycle definition includes at least one paired element comprising at least one variable holder, variable, or identifier thereof and an associated value holder, value, or identifier thereof,
   wherein execution of the cycle definition by the software will associate at least one value with at least one variable according to the at least one paired element at runtime to cause operation of the component in the appliance or to affect user interaction with the appliance.
26. The appliance of claim 25 wherein the cycle definition includes identification source domain data.
27. The appliance of claim 26 further comprising a user interface configured to render the identification source domain data contemporaneously with the operation of the component.
28. The appliance of claim 26 wherein the identification source domain data includes a licensed renderable asset.
29. The appliance of claim 25 wherein the cycle definition data includes data associated with the cycle definition other than the at least one paired element wherein the data is not useable by the software to cause the operation of the component in the appliance.
30. The appliance of claim 29 wherein the cycle definition data other than the at least one paired element includes at least one of a cycle description, a cycle icon, cycle usage instructions, and additional language translations thereof.
31. The appliance of claim 26 wherein a user selects a portion of the identification source domain data to initiate the operation of the component.
32. The appliance of claim 25 further comprising an interface for acquiring at least one of the at least one instance of a cycle definition.
33. The appliance of claim 32 wherein the interface is a network connection.
34. The appliance of claim 25 further comprising a validator to validate the at least one cycle definition.
35. The appliance of claim 34 further comprising a hierarchical tree structure having alternating levels of nested elements, the nested elements being any of variable holders, variables, and identifiers thereof, wherein the validator validates a plurality of paired elements, each paired element comprising at least one of a variable holder, a variable, and an identifier thereof, by traversing the tree structure to observe and verify that each of the elements in the plurality is one of a root of the tree and a parent in the tree, to observe and verify that each paired element is located at one of the root or a direct descendent of another paired element connected to the root, and to observe and verify that at least one paired element is a leaf node of the tree.
29. An appliance development toolkit to enable creation of content to affect operation of a component in an appliance or to affect user interaction with an appliance, the toolkit comprising:
   an editor configured to enable creation of content including at least one paired element comprising one of a variable, a variable holder and a variable identifier and one of a value, a value holder, and a value identifier, and
   a converter for preparing the content in a form usable by the appliance,
   wherein the appliance can use the content to set a memory variable associated with the one of a variable, a variable holder, and a variable identifier to a value associated with the one of a value, a value holder, and a value identifier, respectively, at runtime to affect the operation of the component in the appliance or to affect the user interaction with the appliance.
30. The appliance development toolkit of claim 29 wherein the paired element is part of one of a cycle definition and a message data payload.
31. The appliance development toolkit of claim 29 wherein the paired element includes data directly useable by the appliance.
32. The appliance development toolkit of claim 31 wherein the paired element includes an identifier.
33. The appliance development toolkit of claim 29 wherein the editor enables the creation of the at least one paired element via associating the paired element with elements from an appliance namespace.
34. The appliance development toolkit of claim 33 wherein the appliance namespace, includes a plurality of uniquely identifiable variables.
35. The appliance development toolkit of claim 34 wherein the editor is configured to create the appliance namespace.
36. The appliance development toolkit of claim 34 wherein the editor is further configured to create at least one validation hierarchy of elements including at least one of a variable, a variable holder and a variable identifier associated with the one of a value, a value holder, and a value identifier, respectively, wherein the at least one validation hierarchy, the namespace, and the pair element are associated with at least one common variable or value.

### Constrained appliance development toolkit

1. An appliance development toolkit for creation of content for an appliance configured to perform a cycle of operation on a physical article wherein the content affects the functionality of at least one component of the appliance, the toolkit comprising;
   an appliance user domain data model,
   a model instance editor to create instances of data elements related to functionality of an appliance and derived from the appliance user domain data model,
   an interactive user interface on which the model instance editor is displayed for use by a developer, and
   a model converter to generate content using the instance data from the model instance editor,
   wherein the appliance user domain data model is constrained by reference to less than all of the functionality of an appliance so that the developer's capacity to generate content is limited by the constraints of the appliance user domain data model.
2. The appliance development toolkit of clam 1 wherein the reference to less than all of the functionality is hard corded into the model instance editor.
3. The appliance development toolkit of clam 1 wherein the reference to less than all of the functionality is in the appliance user domain data model.
4. The appliance development toolkit of clam 1 wherein the reference to less than all of the functionality is in an instance of the appliance domain user model.
5. The appliance development toolkit of clam wherein the reference to less than all of the functionality is in the interactive user interface.
6. An appliance development toolkit for creation of content for an appliance configured to perform a cycle of operation on a physical article wherein the content affects the functioning of at least one component of the appliance, the toolkit comprising;
   an editor to create effective data related to the functioning of the at least one component of the appliance, wherein the editor is informed by no more than a portion of information related to at least one component,
   an interactive user interface on which the editor is displayed for use by a developer, and
   a converter to generate content using the effective data,
   wherein the portion of information is less than all information related to the at least one component and no more than the portion is available to the editor, so that the developer's capacity to create content using the toolkit is constrained by the portion of information available to the editor.
7. The appliance development toolkit of clam 6 wherein the portion of information is hard corded into the editor.
8. The appliance development toolkit of clam 6 wherein the portion of information is in the interactive user interface.
9. The appliance development toolkit of clam 6 wherein the portion of information is an instance of a model.
10. The appliance development toolkit of clam 9 wherein the model is an appliance domain user model
11. The appliance development toolkit of clam 9 wherein the model comprises a message data payload model.
12. The appliance development toolkit of clam 9 wherein the model comprises a sequencing model for creating fault tree instances wherein the instances include at least one question and at least two valid answers associated with the at least one question.
13. The appliance development toolkit of clam 9 wherein the model comprises an appliance memory variable model.
14. The appliance development toolkit of claim 13 wherein the appliance memory variable model comprises at least one identifier representing a memory variable and wherein the the at least one identifier comprises at least one identifier of a value which is the memory variable.
15. The appliance development toolkit of claim 9 wherein the model is a model comprising a sequencing model for creating a fault tree instances wherein the instances include at least one identifier of a test routine which can be executed in association with the appliance.
16. The appliance development toolkit of claim 9 wherein the model is a model comprising a sequencing model for creating cycle structure instances wherein the instances include at least one identifier of an appliance software function which can be executed in association with the appliance.
17. The appliance development toolkit of claim 6 further comprising a communication driver to establish a link with at least one control board controlling the component in the appliance or simulation thereof, and software configured to command operation of the at least one control board, wherein a user can create or modify the content using the editor in response to communication over the link.
18. The appliance development toolkit of claim 7 further comprising a smart coupler in the link.
19. The appliance development toolkit of claim 7 wherein the viewer has a command window where a user can define and initiate a command for operation of the at least one control board.
20. The appliance development toolkit of claim 7 further comprising a sequence model useable by the editor to create the content including instances of cycle data for the appliance.
21. The appliance development toolkit of claim 19 further comprising a sequence model useable by the editor to create the content including instances of cycle definitions for the appliance wherein a user can use the command window to establish a portion of the cycle data by observing one of the data in the viewer and the appliance contemporaneously with initiating the command and use the editor to include the portion in the content.
22. The appliance development toolkit of claim 21 wherein the content includes at least one of a cycle definition, a cycle structure, information about a cycle structure, a paired element, source identification information, a message data payload structure, and information about a consumable.
23. The appliance development toolkit of claim 22 further comprising access to a datastore and credentials for writing information into the datastore wherein the content can be stored in the datastore for later retrieval for use with the appliance.
24. The appliance development toolkit of claim 23 wherein the datastore is a consumable information holder.
25. The appliance development toolkit of claim 19 wherein the viewer includes a data analyzer configured to display the useable data from the communication link with non-usable data describing the useable data wherein a user can understand the meaning of the useable data.
26. The appliance development toolkit of claim 25 wherein the data analyzer is configured to accept other content including a portion of the useable data and a portion of the non-useable data associated with the portion of the useable data wherein the association enables the display without specific coding of the data analyzer with respect to the useable data.
27. The appliance development toolkit of claim 6 wherein any one of the editor, the user interface and the converter is accessible over the internet.
28. An appliance comprising the appliance development toolkit of claim 6.
29. Toolkit to create binding constraints so two apps can communicate limited by the bindings.

### Appliance development toolkit with editor for binding data

1. An appliance development toolkit to enable creation of content to affect operation of a component in an appliance or to affect user interaction with an appliance, the toolkit comprising:
   access to instances of appliance user domain data and control system domain data,
   an editor configured to associate at least one instance of appliance user domain data to at least one instance of control system domain data or at least one instance of other appliance user domain data,
   an interactive user interface on which the at least one instance of appliance user domain data and the at least one instance of control system domain data are displayed for use by a developer, and
   a model converter to generate the content using the instances from the editor,
   wherein the content is usable to affect the operation or to affect the user interaction as determined by the associations.
2. The appliance development toolkit of claim 1 wherein the at least one instance of appliance user domain data is represented by a first binding element and the at least one instance of control system domain data is represented by a second binding element and the first and second binding elements are bound to each other or to the other of the at least one instance of control system domain data or the at least one instance of appliance user domain data, respectively.
3. The appliance development toolkit of claim 1 wherein the control system domain data are selected from the appliance user domain data.
4. An appliance comprising:
   software to cause operation of a component in the appliance or to affect user interaction with the appliance
   memory containing appliance user domain data and control system domain data where at least one instance of appliance user domain data is bound to at least one instance of control system domain data or at least one instance of other appliance user domain data,
   wherein the binding occurs at runtime of the software to affect the operation of the component or to affect the user interaction.
5. The appliance of claim 4 wherein the at least one instance of appliance user domain data is represented by a first binding element and the at least one instance of control system domain data is represented by a second binding element and the first and second binding elements are bound to each other or to the other of the at least one instance of control system domain data or the at least one instance of appliance user domain data, respectively.
6. The appliance of claim 4 wherein the memory is selected from at least one of a relational database, flash, RAM, ROM, EEProm, and external memory accessed over a network.
7. The appliance of claim 4 wherein the control structure is a user interface control and the appliance user domain data includes one of an image, a sound, and a video.
8. The appliance of claim 4 wherein the binding is formed directly between the at least one instance of appliance user domain data and the at least one instance of control system domain data or at least one instance of other appliance user domain data.
9. The appliance of claim 4 wherein the binding is indirectly formed using an intermediary structure.
10. The appliance of claim 4 further comprising a content provider for acquiring at least one of the appliance user domain data and control system domain data.
11. The appliance of claim 4 further comprising a graphical user interface for displaying at least one of the appliance user domain data, control system domain data, instances thereof, and the binding thereof.
12. The appliance of claim 11 further comprising a software framework for controlling the behavior of control functionality in the appliance in response to a user interacting with the graphical user interface,
13. The appliance of claim 4 wherein at least one of the appliance user domain data and control system domain data is associated with at least one of cycle outcomes, articles, and consumables.
14. An appliance comprising:
   software to cause operation of a component in the appliance or to affect user interaction with the appliance
   memory containing at least one instance of appliance user domain data represented by a first binding element and at least one instance of control system domain data represented by a second binding element and the first and second binding elements are bound to each other or to at least one instance of control system domain data or to at least one instance of appliance user domain data, respectively,
   wherein the binding affects the operation of the component or affects the user interaction.
15. The appliance of claim 14 wherein the memory is selected from at least one of a relational database, flash, RAM, and external memory accessed over a network.
16. The appliance of claim 14 wherein the at least one instance of control system domain data is a user interface control and the at least one instance of appliance user domain data is one of an image, a sound, and a video.
17. The appliance of claim 14 wherein the binding is formed directly between the at least one instance of appliance user domain data and the at least one instance of control system domain data or at least one instance of other appliance user domain data.
18. The appliance of claim 14 wherein the binding is indirectly formed using an intermediary structure.
19. The appliance of claim 14 further comprising a content provider for acquiring at least one of the appliance user domain data and control system domain data.
20. The appliance of claim 14 further comprising a graphical user interface for displaying at least one of the appliance user domain data, control system domain data, instances thereof, and the binding thereof.
21. The appliance of claim 20 further comprising a software framework for controlling the behavior of control functionality in the appliance in response to a user interacting with the graphical user interface,
22. The appliance of claim 14 wherein at least one of the appliance user domain data and control system domain data is associated with at least one of cycle outcomes, articles, and consumables.
23. An appliance development toolkit to enable creation of content to affect operation of a component in an appliance or to affect user interaction with an appliance, the toolkit comprising:
   access to instances of source identification domain data and control system domain data,
   an editor configured to associate at least one instance of source identification domain with at least one instance of control system domain data,
   an interactive user interface on which the at least one instance of source identification domain data and the at least one instance of control system domain data are displayed, and
   a converter to generate the content using the instances and the associations from the editor,
   wherein the content is usable to affect the operation or to affect the user interaction as determined by the associations.
24. The appliance development toolkit of claim 23 wherein the at least one instance of source identification domain data includes a renderable brand.
25. The appliance development toolkit of claim 23 wherein the at least one instance of control system domain data includes operation cycle information.
26. The appliance development toolkit of claim 25 wherein the operation cycle information includes a cycle structure.
27. The appliance development toolkit of claim 25 wherein the operation cycle information includes a cycle definition.
28. The appliance development toolkit of claim 25 wherein the operation cycle information includes at least one paired element.
29. The appliance development toolkit of claim 28 wherein the at least one paired element includes an identifier of an appliance variable and an identifier of a valid value of the identifier of an appliance variable.
30. The appliance development toolkit of claim 25 wherein the operation cycle information includes at least one command container.
31. The appliance development toolkit of claim 30 wherein the data comprised by the command container is derived from an appliance taxonomy definition.
32. The appliance development toolkit of claim 25 wherein the operation cycle information includes at least one message payload or identifier thereof.
33. The appliance development toolkit of claim 25 wherein the usable data includes at least one identifier that uniquely identifies one of a person, a consumable, and an article.
34. The appliance development toolkit of claim 25 wherein the usable data includes first and second portions, each portion bound to a different instance of source identification domain data wherein the second portion depends on the first portion and affects one of the operation and the user interaction with the appliance.
35. The appliance development toolkit of claim 23 wherein the at least one instance of source identification domain data is licensed.
36. The appliance development toolkit of claim 35 wherein the license includes a royalty fee dependent on a display of the at least one instance of source identification domain data in an appliance.
37. An appliance comprising:
   software to cause operation of a component in the appliance or to affect user interaction with the appliance
   memory containing at least one instance of source identification domain data and at least one instance of control system domain data and an association effectively binding the at least one instance of source identification domain data to the at least one instance of control system domain data
   wherein the binding affects the operation of the component or affects the user interaction in the appliance.
38. The appliance of 37 wherein the source identification domain data is represented by a first binding element and the and at least one instance of control system domain data represented by a second binding element and the first and second binding elements are bound to each other or to at least one instance of control system domain data, respectively.
39. The appliance of claim 37 wherein the memory is selected from at least one of a relational database, flash, RAM, ROM, EEProm, and memory accessible over a network.
40. The appliance of claim 37 wherein the at least one instance of control system domain data is a user interface control and the at least one instance of source identification domain data is one of an image, a sound, and a video.
41. The appliance of claim 40 wherein the operation of the component is affected contemporaneously with a user selecting the user interface control in response to the at least one instance of source identification.
41. The appliance of claim 37 wherein the binding is formed directly between the at least one instance of source identification domain data and the at least one instance of control system domain data.
42. The appliance of claim 37 wherein the binding is indirectly formed using an intermediary structure.
43. The appliance of claim 37 further comprising a content provider for acquiring at least one of the source identification domain data and control system domain data.
44. The appliance of claim 37 further comprising a graphical user interface for displaying at least one of the source identification domain data, control system domain data, instances thereof, and the binding thereof.
45. The appliance of claim 44 further comprising a software framework for controlling the behavior of control functionality in the appliance in response to a user interacting with the graphical user interface,
46. The appliance of claim 37 wherein at least one of the source identification domain data and control system domain data is associated with at least one of cycle outcomes, articles, and consumables.
47. The appliance of claim 37 wherein the at least one instance of source identification domain data includes a renderable brand.
48. The appliance of claim 37 wherein the at least one instance of control system domain data includes operation cycle information.
49. The appliance of claim 48 wherein the operation cycle information includes a cycle structure.
50. The appliance of claim 48 wherein the operation cycle information includes a cycle definition.
51. The appliance of claim 48 wherein the operation cycle information includes at least one paired element.
52. The appliance of claim 51 wherein the at least one paired element includes an identifier of an appliance variable and an identifier of a valid value of the identifier of an appliance variable.
53. The appliance development toolkit of claim 48 wherein the operation cycle information includes at least one command container.
54. The appliance of claim 53 wherein the data comprised by the command container is derived from an appliance taxonomy definition.
54. The appliance of claim 48 wherein the operation cycle information includes at least one message payload or identifier thereof.
55. The appliance of claim 48 wherein the operation cycle information includes at least one identifier that uniquely identifies one of a person, a consumable, and an article.
56. The appliance of claim 48 wherein the operation cycle information includes first and second portions, each portion bound to a different instance of source identification domain data wherein the second portion depends on the first portion and affects one of the operation and the user interaction with the appliance.
57. The appliance of claim 37 wherein the at least one instance of source identification domain data is licensed.
58. The appliance of claim 57 wherein the license includes a royalty fee dependent on a display of the at least one instance of source identification domain data in an appliance.
59. The appliance development toolkit of claim 1 wherein the appliance user domain data includes a food and a vessel for cooking the food, and the appliance development toolkit associates the food and the vessel with the control system domain data so that the appliance control system domain data affects the operation of the appliance in response to the food and the vessel during the cooking.
60. The appliance development toolkit of claim 1 wherein the appliance user domain data includes a cooking outcome and a vessel for cooking a food, and the appliance development toolkit associates the cooking outcome and the vessel with the control system domain data so that the control system domain data affects the operation of the appliance in response to the outcome data and the vessel during the cooking.
61. The appliance development toolkit of claim 1 further configured to affect the appliance user domain data in response to the other appliance user domain data.
62. The appliance development toolkit of claim 61 wherein the appliance development toolkit automatically creates information in response to the other appliance user domain data.
63. The appliance development toolkit of claim 61 wherein the affect includes changing data.
64. The appliance development toolkit of claim 61 further comprising a viewer and a second converter for rendering content created by the second converter in the viewer wherein the affect includes re-rendering the content created by the second converter.
65. The appliance development toolkit of claim 61 wherein the affect is caused by the creation of an association between the appliance user domain data and the other appliance user domain data.
66. The appliance development toolkit of claim 61 wherein the appliance user domain includes a cooking domain comprising at least one of foods, cooking outcomes, and cooking vessels.
67. The appliance development toolkit of claim 61 wherein the appliance user domain includes a recipe domain comprising at least one of ingredients, preparation instructions, purchasing instructions, meal serving instructions.
68. The appliance development toolkit of claim 61 wherein the appliance user domain includes an ingredient substitution domain comprising at least two sets each having an ingredient, a quantity, and unit which are equivalent and substitutable with respect to the other of the first and second user domain.
69. The appliance development toolkit of claim 68 wherein the other appliance user domain is a recipe domain comprising at least one of ingredients, preparation instructions, purchasing instructions, meal serving instructions.
70. The appliance development toolkit of claim 61 wherein the other appliance user domain includes a nutrition domain comprising nutritional information.
71. The appliance development toolkit of claim 70 wherein the appliance user domain is a recipe domain comprising at least one of ingredients, preparation instructions, purchasing instructions, meal serving instructions.
72. The appliance development toolkit of claim 71 further comprising a third domain including an ingredient substitution domain comprising at least two sets each having an ingredient, a quantity, and unit which are equivalent and substitutable with respect to the other of the first and second user domain.
73. The appliance development toolkit of claim 72 configured to transform the recipe domain data in response to the ingredient substitution domain and in further response to the nutrition domain.
74. The appliance development toolkit of claim 61 wherein the other appliance user domain includes a medical domain comprising medical information.
75. The appliance development toolkit of claim 74 wherein the appliance user domain is a recipe domain comprising at least one of ingredients, preparation instructions, purchasing instructions, meal serving instructions.
76. The appliance development toolkit of claim 75 further comprising a third domain including an ingredient substitution domain comprising at least two sets each having an ingredient, a quantity, and unit which are equivalent and substitutable with respect to the other of the first and second user domain.
77. The appliance development toolkit of claim 76 configured to transform the recipe domain data in response to the ingredient substitution domain and in further response to the medical domain.
74. The appliance development toolkit of claim 61 wherein the other appliance user domain includes at least one of a schedule domain comprising scheduling information or participation information and a preference domain comprising personal preferences data relating to food,
75. The appliance development toolkit of claim 74 wherein the appliance user domain is a recipe domain comprising at least one of ingredients, preparation instructions, purchasing instructions, meal serving instructions.
76. The appliance development toolkit of claim 75 further comprising a third domain including an ingredient substitution domain comprising at least two sets each having an ingredient, a quantity, and unit which are equivalent and substitutable with respect to the other of the first and second user domain wherein the affect is to change the recipe in response to the information in other appliance user domain.
77. The appliance development toolkit of claim 61 wherein the other appliance user domain includes an inventory domain comprising information relating to the quantity or amount of foods and ingrediants in a home.
78. The appliance development toolkit of claim 77 wherein the appliance user domain is a recipe domain comprising at least one of ingredients, preparation instructions, purchasing instructions, meal serving instructions.
79. The appliance development toolkit of claim 78 further comprising a third domain including an ingredient substitution domain comprising at least two sets each having an ingredient, a quantity, and unit which are equivalent and substitutable with respect to the other of the first and second user domain wherein the affect is to change the recipe in response to the information in other appliance user domain.
80. The appliance development toolkit of claim 1 further configured to affect one of the appliance user domain data and the control system domain data in response to the other of the appliance user domain data and the control system domain data.
81. The appliance development toolkit of claim 80 wherein the appliance user domain includes a schedule domain including a portion of at least one schedule and the control system domain data includes meal preperation plan infomation including duration information wherein the affect is to change at least one of the portion and the plan to make the portion and the plan compatible with respect to shedule and duration.
82. The appliance development toolkit of claim 1 wherein the editor is configured to create instances of at least one of appliance user domain data and control system domain data.
83. The appliance development toolkit of claim 1 further comprising a communication driver to establish a link with at least one control board in an appliance, and software configured to command operation of the at least one component in the appliance wherein a user can create or modify the content using the editor in response to communication with a control board.
84. The appliance development toolkit of claim 23 wherein the editor is configured to create instances of at least one of source identification domain data and control system domain data.

### Toolkit for Executing Diagnostics in an Appliance

1. A toolkit for executing diagnostics in an appliance, the toolkit comprising:
   a communications driver configured to establish a communication link with the appliance,
   a test engine configured to access at least one test script, to construct a well formed message based on instructions in the test script, and to convey the well formed message to the appliance via the communication link, and
   a user interface for providing interaction between a user and the test engine,
   wherein the at least one test script includes at least two steps, each step being separated from its previous and next steps by at least one transition condition that includes a logic expression resolvable to a boolean value, at least one command statement associated with one of the at least two steps that instructs what should happen when the at least one step is the current step so that the test engine will execute the at least one command statement contemporaneous with a transition from the previous step to the at least one current step, and
   information associated with at least one message element in a message data payload wherein the message data payload is uniquely identifiable within a universe of pre-defined message data payloads for the appliance wherein the information enables the test engine to construct the well formed message for transmission to the appliance contemporaneous with the execution of the at least one command statement by the test engine,
   wherein the test engine is further configured to observe subsequent network messages and relate those to a transition logic in the test script, and to evaluate the logic for transition to the next step.
2. The toolkit of claim 1 wherein the transition value is one of true and one and false and zero.
3. The toolkit of claim 1 further comprising a smart coupler for connecting the communications driver to the appliance.
4. The toolkit of claim 1 wherein the test script further comprises a command statement for presenting a question on the user interface to a user.
5. The toolkit of claim 4 wherein the test script further comprises a transition condition including an answer to the question presented on the user interface wherein the test engine transitions to the next step in response to the value of the answer.
6. The toolkit of claim 1 wherein a step can be connected to a plurality of transition conditions.
7. The toolkit of claim 1 wherein the transition condition is selected from a selective transition condition and a concurrent transition condition.
8. The toolkit of claim 1 wherein the user interface displays information received from the appliance when the communications driver communicates with the appliance.
9. The toolkit of claim 1 wherein the information associated with the at least one message element is one of a variable, a variable holder, the at least one message element, a memory address, a function name, and an identifier thereof.
10. The toolkit of claim 1 wherein the information associated with the at least one message element is loaded into the toolkit to enable the toolkit to communicate with different appliances without recoding.
11. The toolkit of claim 1 wherein at least one of the information associated with the at least one message element and the test script is created by the toolkit.
12. The toolkit of claim 1 wherein the test engine is a sequence model instance for test.
13. The toolkit of claim 1 further comprising
   a second a communications driver configured to establish a communication link with the test engine, and a fault tree execution engine configured to access at least one fault tree, to construct a well formed message based on instructions in the fault tree, and to convey the well formed message to the test engine via the second communication link during execution of a command statement in the at least one fault tree.
14. The toolkit of claim 13 wherein the transition value is one of true and one and false and zero.
15. The toolkit of claim 13 further comprising a smart coupler for connecting the communications driver to the appliance.
16. The toolkit of claim 13 wherein the test script further comprises a command statement for presenting a question on the user interface to a user.
17. The toolkit of claim 16 wherein the test script further comprises a transition condition including an answer to the question presented on the user interface wherein the test engine transitions to the next step in response to the value of the answer.
18. The toolkit of claim 13 wherein a step can be connected to a plurality of transition conditions.
19. The toolkit of claim 13 wherein the transition condition is selected from a selective transition condition and a concurrent transition condition.
20. The toolkit of claim 13 wherein the user interface displays information received from the appliance when the communications driver communicates with the appliance.
21. The toolkit of claim 13 wherein the information associated with the at least one message element is one of a variable, a variable holder, the at least one message element, a memory address, a function name, and an identifier thereof.
22. The toolkit of claim 13 wherein the information associated with the at least one message element is loaded into the toolkit to enable the toolkit to communicate with different appliances without recoding.
23. The toolkit of claim 13 wherein at least one of the information associated with the at least one message element and the test script is created by the toolkit.
24. The toolkit of claim 13 wherein the test engine is a sequence model instance for test.

### Appliance Development Toolkit for Creating Appliance Diagnostics

1. An appliance development toolkit to enable creation of content to affect operation of a component in an appliance or to affect user interaction with an appliance, the toolkit comprising:
   an editor configured to create at least one test script having at least two steps, each step being separated from its adjacent steps by a transition condition that includes a logic expression resolvable to a boolean transition value, at least one command statement associated with one of the at least two steps that instructs what should happen when the at least one step is the current step so that a test engine can execute the at least one command statement contemporaneous with the transition of the at least one step from the current step to the next step,
   information associated with at least one message element in a message data payload wherein the message data payload is uniquely identifiable within a universe of pre-defined message data payloads for the appliance, and
   a converter for placing the test script into a form for use in diagnosing an appliance.
2. The appliance development toolkit of claim 1 wherein the editor is further configured to create at least one instance of a message data payload comprising at least one message element.
3. The appliance development toolkit of claim 2 wherein the editor is configured to associate at least one command statement with at least one message element wherein the association enables the application to construct a well formed message for transmission to the appliance.
4. The appliance development toolkit of claim 1 wherein the transition value is one of true and one and false and zero.
5. The appliance development toolkit of claim 1 wherein the test script further comprises a command statement for presenting a question to a user.
6. The appliance development toolkit of claim 5 wherein the test script further comprises a transition condition including an answer to the question.
7. The appliance development toolkit of claim 1 wherein a step can be connected to a plurality of transition conditions.
8. The appliance development toolkit of claim 1 wherein the transition condition is selected from a selective transition condition and a concurrent transition condition.
9. The toolkit of claim 1 wherein the information associated with the at least one message element is one of a variable, a variable holder, the at least one message element, a memory address, a function name, and an identifier thereof.
10. The toolkit of claim 1 wherein the information associated with the at least one message element is loaded into the toolkit to enable the toolkit to communicate with different appliances without recoding.
11. The toolkit of claim 1 wherein the information associated with the at least one message element is created by the toolkit.

### Appliance Development Toolkit with Multiple Converters

1. An appliance development toolkit for creating content associated with appliance control functionality for at least two content targets; the toolkit comprising:
   an editor for creating data associated with appliance control functionality;
   at least two model converters for creating content from the data for each of at least two content targets, respectively, wherein the content for each of the at least two content targets is different,
   wherein different content can be created for different content targets from a single data creation, and wherein the multiple contents can be updated by the converters with a single change to the data.
2. The appliance development toolkit according to claim 1 further comprising a model and wherein the data is an instance of the model.
3. The appliance development toolkit according to claim 2 wherein the data comprises two model instances, each derived from the same model.
4. The appliance development toolkit according to claim 2 wherein the data comprises two model instances, each derived from a different model.
5. The appliance development toolkit according to claim 2 wherein the data comprises one model instance derived from two different models.
6. The appliance development toolkit according to claim 1 wherein the content targets include two of a remote client, a local client, and an internal client of an appliance, an appliance, an appliance accessory, a performance tag, an object identification tag, a consumable holder, a dispenser, an appliance cycle architecture, an appliance cycle engine, and a consumable information holder.
7. The appliance development toolkit according to claim 1 wherein one of the at least two content targets is a phone, a pda, a music player, a video player, a TV, a robot, a different appliance, a computer, portable user interface, a camera, a video recorder, a dvr, a consumer electronic device, an appliance user interface, and a projector.
8. The appliance development toolkit according to claim 1 wherein the content includes at least one of recipes, ingredient information, cooking information, cycle information, cleaning information, stain treatment information, food storage information, drying information, detergent information, softener information, troubleshooting and repair information, inventory information, medical information, information about appliance users, appliance information, appliance operational capabilities, appliance frequently asked questions, and fabric care information.
9. The appliance development toolkit according to claim 1 wherein one of the at least two content targets is an appliance and at least one of the multiple contents created by one of the at least two model converters comprises at least one of a relational database and an XML file each having a first form.
10. The appliance development toolkit according to claim 9 wherein the at least one of the multiple contents includes one of recipes, ingredient information, cooking information, cycle information, cleaning information, stain treatment information, food storage information, drying information, detergent information, softener information, troubleshooting and repair information, inventory information, medical information, information about appliance users, appliance information, appliance operational capabilities, appliance frequently asked questions and fabric care information.
11. The appliance development toolkit according to claim 10 wherein the other of the at least two content targets is one of a web server and a device with a graphical user interface wherein a portion of the content is used by the other of the at least two content targets to render information on the graphical user interface and wherein at least another of the multiple contents created by the other of the at least two model converters comprises at least one of a relational database and an XML file each having a second form so that different user interface applications, each using different content, can be created for the at least two content targets based on the data associated with appliance control functionality.
12. The appliance development toolkit according to claim 1 wherein one of the at least two content targets is an appliance and at least one of the multiple contents created by one of the at least two model converters is source code.
13. The appliance development toolkit according to claim 12 wherein the source code is one of compiled and not-compiled.

### Appliance with Animation Framework

1. An appliance configured to perform a cycle of operation on a physical article comprising:
   at least one control board having control software to control the cycle of operation, and having access to memory,
   a graphical user interface in communication with the at least one control board for allowing a user to observe and interact with the appliance regarding the cycle of operation,
   a software framework in communication with the graphical user interface and the memory access, and having animation definitions and access to builder content containing instance information with which the software framework can create at least one instance of a user interface control and can associate at least one animation definition with memory information associated with at least two locations in the memory,
   wherein the software framework dynamically renders animation in the graphical user interface at runtime using the at least one animation definition, and wherein the rendering of the graphical user interface is dynamically affected by association of the at least one animation definition and the memory information.
2. The appliance of claim 1 wherein the animation definition comprises an arbitrary function having at least one input and at least one output, wherein one of the at least two memory locations is associated with the at least one input and the other of the at least two memory locations is associated with the at least one output wherein the value of the other of the at least two memory locations is set to the output of the animation in response to the value at the at least one input in response to the one of the at least two memory locations and the arbitrary function.
3. The appliance of claim 2 wherein the other of the at least two memory locations is associated with a property of at least one instance of a user interface control wherein a value of the property affects the graphical user interface.
4. The appliance of claim 3 wherein at least a portion of the rendering is a visualization of the graphical user interface.
5. The appliance of claim 3 wherein at least a portion of the rendering is audible.
6. The appliance of claim 3 wherein at least a portion of the rendering is tactile.
7. The appliance of claim 3 wherein the property is one of size, font, color, position, and style.
8. The appliance of claim 7 wherein the position is an x, y coordinate on the graphical user interface.
9. The appliance of claim 3 wherein the property is a display value.
10. The appliance of claim 9 wherein the display value includes information associated with the cycle of operation.
11. The appliance of claim 10 wherein the information includes information about at least one of temperature, speed, time, duration of time, end time, start time, delay time, cycle, cycle selection, cycle progression, cycle step, time remaining in cycle, time remaining in step, cycle step transition conditions state, cycle step transition condition logic, cycle modifiers, cycle modifier selections, cycle outcomes, energy usage, resource usage, water usage, consumables, articles, food, doneness, detergent, and softeners.
12. The appliance of claim 2 wherein the at least one input associated with at least one of the two memory locations is associated with information associated with the cycle of operation.
13. The appliance of claim 12 wherein the information includes information about at least one of temperature, speed, time, duration of time, end time, start time, delay time, cycle, cycle selection, cycle progression, cycle step, time remaining in cycle, time remaining in step, cycle step transition conditions state, cycle step transition condition logic, cycle modifiers, cycle modifier selections, cycle outcomes, energy usage, resource usage, water usage, consumables, articles, food, doneness, detergent, and softeners.
14. The appliance of claim 3 wherein the at least one input associated with at least one of the two memory locations is associated with a property of at least one instance of a user interface control.
15. The appliance of claim 14 wherein the at least one output associated with the other of the at least two memory locations is associated with a property of at least one instance of a user interface control.
16. The appliance of claim 15 wherein the input and output are associated with different properties of the same instance of a user interface control.
17. The appliance of claim 1 wherein the control board automatically affects the animation upon actuation of an appliance control event by the control software.
18. The appliance of claim 17 wherein the affect includes one of starting, stopping, pausing or resuming.
19. The appliance of claim 17 wherein the appliance control event includes one of cycle state, phase, temperature, and time.
20. The appliance of claim 1 wherein a graphical user interface event affects the animation.
21. The appliance of claim 1 wherein the graphical user interface event includes one of widget show/hide, widget enable/disable, and screen navigation.
22. The appliance of claim 1 wherein an appliance data source change event affects the animation.
23. The appliance of claim 22 wherein the appliance data source change event includes one of a change of user setting, a change of user option, and a change in cycle selection.
24. The appliance of claim 1 wherein a network message contained in the animation definition affects the animation.
25. The appliance of claim 1 having access to builder content from at least two sources, the information in the builder content including animation instances wherein the animation instances on the at last two sources are linked with each other serially or in parallel to produce a complex composite animation behavior.
26. The appliance of claim 1 wherein the information in the builder content includes multiple animation instances that are linked with each other serially or in parallel to produce a complex composite animation behavior.
27. The appliance of claim 1 wherein an animation instance created at runtime is serially linked with itself to produce a looping behavior.
28. The appliance of claim 1 wherein the animation is stored in a reusable library and referenced by multiple controls in the graphical user interface, each control using unique animation instances with unique control events.
29. The appliance of claim 1 wherein the animation is linked between distinct screens on the graphical user interface to produce screen transition effects during navigation.
30. The appliance of claim 29 wherein the effects include at least one of fade in/fade out, sliding screens, and scrolling screens.
31. The appliance of claim 1 wherein at least one of the control board and control software has parameters governing the behavior of the control software at runtime, the animation modifies at least one parameter of the control software to affect the cycle of operation at runtime, and the rendering of the graphical user interface changes in response to activation of the animation.
32. The appliance of claim 31 wherein the control board automatically affects the animation upon actuation of an appliance control event by the control software.
33. The appliance of claim 32 wherein the affect includes one of starting, stopping, pausing or resuming.
34. The appliance of claim 32 wherein the appliance control event includes one of cycle state, phase, temperature, and time.
35. The appliance of claim 32 wherein a graphical user interface event affects the animation.
36. The appliance of claim 32 wherein the graphical user interface event includes one of widget show/hide, widget enable/disable, and screen navigation.
37. The appliance of claim 32 wherein an appliance data source change event affects the animation.
38. The appliance of claim 37 wherein the appliance data source change event includes one of a change of user setting, a change of user option, and a change in cycle selection.
39. The appliance of claim 32 wherein a network message contained in the animation definition affects the animation.
40. The appliance of claim 32 having access to builder content from at least two sources, the information in the builder content including animation instances wherein the animation instances on the at last two sources are linked with each other serially or in parallel to produce a complex composite animation behavior.
41. The appliance of claim 32 wherein the information in the builder content includes multiple animation instances that are linked with each other serially or in parallel to produce a complex composite animation behavior.
42. The appliance of claim 32 wherein an animation instance created at runtime is serially linked with itself to produce a looping behavior.
43. The appliance of claim 32 wherein the animation is stored in a reusable library and referenced by multiple controls in the graphical user interface, each control using unique animation instances with unique control events.
44. The appliance of claim 32 wherein the animation is linked between distinct screens on the graphical user interface to produce screen transition effects during navigation.
45. The appliance of claim 44 wherein the effects include at least one of fade in/fade out, sliding screens, and scrolling screens.
46. The appliance of claim 32 wherein the animation modifies a property of a screen widget or a control, such as the following parameter types:
47. The appliance of claim 46 wherein the modification includes one of visibility, transparency, x screen position, y screen position, font color, font size, image sprite, or index of active layout and container.
48. The appliance of claim 32 wherein the animation produces progress indicating events that can be used by the user interface to produce time-sensitive screen behavior
49. The appliance of claim 32 wherein the animation is represented in terms of modifying a property of a user interface control over time, where time can be defined linearly, step wise, or as an arbitrary polynomial.

### Themeable Appliance

1. An appliance configured to perform a cycle of operation on a physical article comprising:
   at least one control board having control software to control the cycle of operation,
   a graphical user interface in communication with the at least one control board for allowing a user to observe and interact with the appliance regarding the cycle of operation,
   a software framework configured to run in a processor having memory in communication with the graphical user interface and having theme definitions and access to builder content containing information with which the software framework associates a theme definition with at least one resource,
   wherein the software framework dynamically renders the graphical user interface at runtime based on the at least one resource in response to selection of a theme so that a user can cause the control board to control the cycle of operation via the selected theme in the graphical user interface.
2. The appliance of claim 1 wherein the graphical user interface further comprises at least one instance of a user interface control and wherein the builder content further contains information with which the software framework creates the at least one instance of user interface control.
3. The appliance of claim 2 wherein the at least one instance comprises at least one property and the builder content further comprises information from which the software framework associates the at least one property with the at least one resource to affect visualization of the at least one instance of a user interface control in the graphical user interface in response to selection of the theme.
4. The appliance of claim 2 wherein the software framework lazy loads the at least one resource contemporaneously with the activation of a user interface control.
5. The appliance of claim 1 wherein the software framework further comprises a theme manager configured to change the at least one associated resource to at least one different resource in response to the selection of a different theme.
6. The appliance of claim 5 wherein the software framework is further configured to manage the memory of the processor in response to the selection of the theme.
7. The appliance of claim 6 wherin the management of the memory includes at least one of overwriting memory in use with the at least one different resource, allocating memory associated with the at least one resource, and deallocating memory associated with the at least one resource.
8. The appliance of claim 1 further comprising at least one sensor of information with the sensor in communication with the software framework, and binding data associating the information with the theme wherein the theme manager changes the theme in response to the sensing of the information from the at least one sensor so that the rendering of the graphical user interface changes in response to the sensing of the information at runtime.
9. The appliance of claim 8 wherein the information is an identifier.
10. The appliance of claim 9 wherein the information is an identifier of at least one of a person, a consumable, an article, and a consumable holder.
11. The appliance of claim 8 wherein the at least one sensor is a virtual sensor.
12. The appliance of claim 11 wherein the at least one sensor is one of a time observer and a date observer.
13. The appliance of claim 12 wherein rendering is in response to the sensing of one of the time of day and a day of year.
14. An appliance of claim 8 wherein the at least one sensor is configured to sense one of a consumable, an article, and a person.
15. An appliance of claim 8 wherein the sensor is a software agent configured to sense appliance control information.
16. The appliance of claim 15 wherein the appliance control information includes at least one of information associated with the cycle of operation, a selected cycle of operation, cycle modifiers or selections thereof, cycle time, delay time, cycle duration, temperature, speed, energy usage, resource usage, water usage, waste heat capture, resource recycling, waste recycling, and at least one cycle outcome.
17. The appliance of claim 11 wherein the virtual sensor senses at least one of the weather, significant days, birthdays, anniversaries, and financial market conditions and wherein the graphical user interface displays information signifying the at least one of the weather, significant days, birthdays, anniversaries, and financial market conditions in reponse to one of the selected them and the information.
18. The appliance of claim 11 wherein the virtual sensor is in communication with a social network.
19. The appliance of claim 18 wherein the rendering of the user interface changes in response to the communication.
20. The appliance of claim 11 wherein the virtual sensor is in communication with a remote data source connected via a network.
21. The appliance of claim 11 wherein the virtual sensor is in communications with a calendar application wherein data from the calendar application is acquired from the virtual sensor to affect the rendering.
22. An appliance configured to perform a cycle of operation on a physical article comprising:
   a dynamic user interface for allowing a user to at least one of initiate and observe the cycle,
   at least two theme definitions wherein each theme definition comprises an identifier, at least one control board in communication with the user interface having at least one processor and memory,
   a software framework in the memory having, a content provider for acquiring a dataset from at least one source of data, at least one binding object, at least one user interface control object wherein the at least one binding object and the at least one user interface control object are directly or indirectly related,
   at least one source of information about a dataset having data wherein the at least one binding object and the at least one source of information about a dataset arc directly or indirectly related in the memory, and
   a memory location to store a selected theme identifier wherein the software framework can change the relationship between the at least one binding object and the at least one source of information in response to a runtime change to the value of the memory location that stores the theme identifier resulting in a graphical transformation of the user interface wherein the related objects of the at least one binding object enable the transformation to be made at runtime.

### Toolkit for Creating a Dynamic User Interface for an Appliance

1. An appliance development toolkit to enable creation of a dynamic user interface for an appliance, the toolkit comprising:
   access to a user interface domain data model,
   access to an appliance user domain data model,
   a model instance editor configured to create at least one instance of user interface domain data derived from the user interface domain data model, to create at least one instance of appliance user domain data derived from the appliance user domain data model, and to associate at least one user interface element from the at least one instance of the user interface domain data with at least one appliance user element of the at least one instance of the appliance user domain data in a first association, and
   a model instance converter for creating content including a portion of the at least one instance of user interface domain data, a portion of the at least one instance of appliance user domain data, and a map of the first association,
   wherein the content is in a builder file that an appliance, having a graphical user interface with which a user can control and observe operation of the appliance, can use at runtime to dynamically render the graphical user interface.
2. The appliance development toolkit of claim 1 wherein the content also includes other information related to the appliance user domain data from which the graphical user interface will be rendered.
3. The appliance development toolkit of claim 1 wherein the at least one user interface element is directly associated with the at least one appliance user element.
4. The appliance development toolkit of claim 3 wherein the association is bi-directional wherein each of the at least one user interface and at least one appliance user elements includes a reference to the other.
5. The appliance development toolkit of claim 3 wherein the association is uni-directional wherein only one of the at least one user interface and at least one appliance user elements includes a reference to the other.
6. The appliance development toolkit of claim 1 wherein the at least one user interface element is indirectly associated with the at least one appliance user element through at least one intermediate binding object.
7. The appliance development toolkit of claim 3 further comprising access to control system domain data wherein the the editor is configured to associate at least one element of data from the control system domain data with the at least one appliance user element in a second association, and wherein the content further includes a map of the second association.
8. The appliance development toolkit of claim 7 wherein the map of the second association is used to select one of a control algorithm or parameter thereof and a cycle of operation or parameter thereof based on the selection of information associated with the at least one element of the at least one instance of the appliance user domain data on the graphical user interface.
9. An appliance development toolkit to enable creation of a dynamic user interface for an appliance, the toolkit comprising:
   access to a user interface domain data model,
   and access to source identification domain data,
   a model instance editor configured to create at least one instance of user interface domain data derived from the user interface domain data model, and to associate at least one element from the at least one instance of the user interface domain with at least a portion of the source identification domain data in an association, and
   a model instance converter for creating content including a portion of the at least one instance of user interface domain data, a portion of the source identification domain data, and a map of the association,
   wherein the content is in a builder file that an appliance, having a graphical user interface with which a user can control and observe operation of the appliance, can use at runtime to render information on the graphical user interface associated with the portion.
10. An appliance development toolkit to enable creation of content for a user interface for an appliance, the toolkit comprising:
   access to at least one of appliance user domain data and source identification domain data
   an editor configured to create at least one instance of a domain object associated with one of the appliance user domain data and the source identification domain data, and to arrange other data, not from the appliance user domain data or the source identification domain data, with the at least one instance into a collection,
   a first converter to observe the collection and create renderable content having a first portion associated with the at least one of appliance user domain data and the source identification domain data, and a second portion associated with the other data.
11. The appliance development toolkit of claim 10 further comprising a viewer for rendering the content.
12. The appliance development toolkit of claim 10 further comprising a second converter to observe the collection and create the content in a form compatible with the appliance.
13. The appliance development toolkit of claim 12 wherein the form is at least one of a relational database, html, and xml.
14. The appliance development toolkit of claim 10 wherein the other data includes user entered text.
15. The appliance development toolkit of claim 10 wherein the other data includes user entered data from the ASCII code.
16. The appliance development toolkit of claim 12 wherein the other data includes markup language and tags wherein at least one of the first and second converters is configured to interpret at least a portion of the markup language and tags.
17. The appliance development toolkit of claim 16 wherein the markup language and tags include at least one element for one of bolding, italicizing, setting a font, setting a font size, setting color, indenting, creating a table, referencing a resource outside the editor, paragraphing, and pagination.
18. The appliance development toolkit of claim 12 wherein the other data includes markup language and tags and wherein at least one of the first and second converters is configured to include at least a portion of the markup language and tags into the content.
19. The appliance development toolkit of claim 10 wherein the other data includes markup language and tags, and wherein the first converter is configured to create content for at least one content target and to omit at least a portion of the markup language and tags from the content wherein the portion is incompatible with the at least one content target.
20. The appliance development toolkit of claim 19 wherein the at least one content target is an appliance configured to perform a physical operation on an article having a graphical user interface and software for rendering content on the graphical user interface wherein the software cannot render the markup language and tags.
21. The appliance development toolkit of claim 10 further comprising a viewer wherein the other data includes markup language and tags and wherein the viewer displays the renderable content in response, in part, to the elements in the markup language and tags.
22. An appliance development toolkit to enable creation of a dynamic user interface for an appliance, the toolkit comprising:
   a user interface domain data model having animation resource identifiers and user interface control identifiers,
      an editor configured to create at least one instance of user interface control data derived from the user interface domain data model, and to create a map for associating the at least one instance with at least one animation resource identifier, and
   a converter for creating content based on the at least one instance of user interface control data and the map for associating the at least one instance with the at least one animation resource identifier,
   wherein the content is in a builder file that an appliance, having a graphical user interface with which a user can control and observe operation of the appliance, can use at runtime to dynamically render the graphical user interface with animations based on an animation resource associated with the at least one animation resource identifier.
23. The appliance development toolkit of claim 22 further comprising a viewer for rendering the content.
24. The appliance development toolkit of claim 22 further comprising a second converter to create the content in a form compatible with the appliance.
25. The appliance development toolkit of claim 24 wherein the form is at least one of a relational database, html, and xml.
26. The appliance development toolkit of claim 22 wherein the at least one user interface control has at least two properties and wherein the animation resource identifier includes a sub identifier for an output and a sub identifier for an input wherein the toolkit enables the association of one of the at least two properties with one of the sub identifier for an output an a sub identifier for an input and the other of the at least tow properties with the other of the sub identifier for an output an a sub identifier for an input.

### Toolkit for Creating a Themable Dynamic User Interface for an Appliance

1. An appliance development toolkit to enable creation of a dynamic user interface for an appliance, the toolkit comprising:
   access to user interface control data,
   an editor configured to create at least one instance of user interface control data, to create a map for associating the at least one instance with at least one resource identifier in a first association, and to create a map for associating at least one theme identifier with the at least one resource identifier in a second association, and
   a converter for creating content based on the at least one instance of user interface control data, the map of the first association, and the map of the second association,
   wherein the content is in a builder file that an appliance, having a graphical user interface with which a user can control and observe operation of the appliance, can use at runtime to dynamically render the graphical user interface based on a resource associated with the at least one resource identifier in response to selection of a theme related to the at least one theme identifier.
2. The appliance development toolkit of claim 1 further comprising access to a user interface domain data model having theme identifiers related to themes, and access to resource identifiers, wherein the editor is a model instance editor and wherein the converter is a model instance converter and wherein the user interface control data is derived from the user interface domain model.
3. The appliance development toolkit of claim 1 wherein the at least one resource identifier identifies a resource including data associated with language conversion data.
4. The appliance development toolkit of claim 1 wherein the at least one resource identifier identifies a resource including data associated with graphical assets including at least one sprite file, image file, audio file, and video file.
5. The appliance development toolkit of claim 1 wherein the at least one resource identifier identifies a resource including data associated with seasons, holidays, significant days associated with a person associated with the appliance, weather, news, sports, entertainment, school, and people.
6. The appliance development toolkit of claim 1 wherein the at least one resource identifier identifies a resource including data associated with one of an user interface control animation definition and a user interface control tactile definition.
7. The appliance development toolkit of claim 1 wherein the at least one resource identifier identifies a resource including data associated with a network address of a resource having data useable for the graphical user interface.
8. The appliance development toolkit of claim 1 wherein the at least one resource identifier identifies a resource including data associated with at least one of font, font size, text style, information affecting the rendering of text, and screen position of at least one user interface control.
9. The appliance development toolkit of claim 1 wherein the at least one resource identifier identifies a resource including at least one of xml data, html data, relational database data, and data included in a binary file.
10. The appliance development toolkit of claim 1 wherein the at least one resource identifier is an identifier for access to a memory location of the appliance wherein the rendering of the graphical user interface includes using data from the memory location.
11. The appliance development toolkit of claim 1 wherein the converter is configured to export the content in the form of at least one of xml, html, relational database, text, and a binary file.
12. The appliance development toolkit of claim 1 wherein the at least one resource identifier is of the form of one of a URI, URN, URL, UUID, arbitrary alpha-numeric identifier, and a unique addressing path.
13. The appliance development toolkit of claim 1 wherein the content includes information related to appliance user domain data from which the graphical user interface will be rendered.
14. The appliance development toolkit of claim 1 wherein the at least one user interface instance is indirectly associated with the at least one resource identifier through at least one intermediate binding object.
15. The appliance development toolkit of claim 1 wherein the builder file includes at least one identifier identifying a user interface control which a builder can use at runtime to create at least one instance of the user interface control for the graphical user interface.
16. The appliance development toolkit of claim 1 wherein the builder file includes at least one identifier identifying an animation which a builder can use at runtime to create at least one instance of the animation for the graphical user interface.
17. The appliance development toolkit of claim 1 wherein the builder file includes at least one identifier identifying an animation which a builder can use at runtime to create at least one instance of the animation for the graphical user interface and at least one identifier identifying a user interface control which a builder can use at runtime to create at least one instance of the user interface control for the graphical user interface and the map of the first association wherein the builder can associate the at least one animation to the at least one user interface control and wherein the animation can affect the user interface control at runtime.
18. The appliance development toolkit of claim 17 wherein the builder file further includes the map of the second association wherein a theme manager creates a new association between the user interface control and the at least one different animation in response to the selection of a different identifier.
19. The appliance development toolkit of claim wherein the builder file includes at least one identifier identifying a resource which a builder can use at runtime to create at least one instance of the data associated with the resource for the graphical user interface and at least one identifier identifying a user interface control which a builder can use at runtime to create at least one instance of the user interface control for the graphical user interface and the map of the first association wherein the builder can associate the at least one instance of the data to the at least one user interface control and wherein the at least one instance of the data can affect the user interface control at runtime.
20. The appliance development toolkit of claim 19 wherein the builder file further includes the map of the second association wherein a theme manager creates a new association between the user interface control and the at least one different the at least one instance of the data in response to the selection of a different identifier.
21. The appliance development toolkit of claim 20 wherein the at least one resource identifier identifies a resource including data associated with language conversion data.
22. The appliance development toolkit of claim 20 wherein the at least one resource identifier identifies a resource including data associated with graphical assets including at least one sprite file, image file, audio file, and video file.
23. The appliance development toolkit of claim 20 wherein the at least one resource identifier identifies a resource including data associated with seasons, holidays, significant days associated with a person associated with the appliance, weather, news, sports, entertainment, school, and people.
24. The appliance development toolkit of claim 20 wherein the at least one resource identifier identifies a resource including data associated with one of an user interface control animation definition and a user interface control tactile definition.
25. The appliance development toolkit of claim 20 wherein the at least one resource identifier identifies a resource including data associated with a network address of a resource having data useable for the graphical user interface.
26. The appliance development toolkit of claim 20 wherein the at least one resource identifier identifies a resource including data associated with at least one of font, font size, text style, information affecting the rendering of text, and screen position of at least one user interface control.
27. The appliance development toolkit of claim 19 wherein the at least one resource identifier identifies a resource including data associated with language conversion data.
28. The appliance development toolkit of claim 19 wherein the at least one resource identifier identifies a resource including data associated with graphical assets including at least one sprite file, image file, audio file, and video file.
29. The appliance development toolkit of claim 19 wherein the at least one resource identifier identifies a resource including data associated with seasons, holidays, significant days associated with a person associated with the appliance, weather, news, sports, entertainment, school, and people.
30. The appliance development toolkit of claim 19 wherein the at least one resource identifier identifies a resource including data associated with one of an user interface control animation definition and a user interface control tactile definition.
31. The appliance development toolkit of claim 19 wherein the at least one resource identifier identifies a resource including data associated with a network address of a resource having data useable for the graphical user interface.
32. The appliance development toolkit of claim 19 wherein the at least one resource identifier identifies a resource including data associated with at least one of font, font size, text style, information affecting the rendering of text, and screen position of at least one user interface control.
33. The appliance development toolkit of claim 1 wherein the editor is configured to enable creation of the resource and the converter is configured to include a portion of the data included in the resource in the content.
34. An appliance development toolkit to enable creation of a dynamic user interface for an appliance, the toolkit comprising:
   an editor configured to create at least one instance of user interface control data, to create a map for associating the at least one instance with at least one datasource identifier in a first association, and to create a map for associating at least one theme identifier with at least one resource identifier in a second association, and to create a map for associating at least one datasource identifier with the at least one resource identifier in a third association, and
   a converter for creating content based on the at least one instance of user interface control data, the map of the first association, the map of the second association, and the map of the third association,
   wherein the content is in a builder file that an appliance, having a graphical user interface with which a user can control and observe operation of the appliance, can use at runtime to dynamically render the graphical user interface based on a resource associated with the at least one resource identifier in response to selection of a theme related to the at least one theme identifier.

### Toolkit for Creating a Dynamic User Interface Builder File for an Appliance

1. An appliance development toolkit to enable creation of content for use with and to enable a dynamic user interface of an appliance, the toolkit comprising:
   access to a plurality of user interface control definitions,
   access to renderable assets or identifiers thereof,
   an editor configured to create at least one instance derived from the plurality of user interface control definitions, to associate at least one renderable asset or identifier thereof with the at least one user interface control definition instance, to create at least one locator object having addressing information for locating the renderable asset at runtime, and to associate the at least one renderable asset or identifier thereof to the at least one locator object,
   a graphical user interface for viewing and using the editor wherein information is derived from the creating and the associating, and
   at least one converter for generating a builder file from at least a portion of the information, wherein the builder file can be exported to an appliance to enable the appliance to create a dynamic user interface at runtime.
2. The appliance development toolkit of claim 1 wherein the at least one locator object is of the form of one of a URI, URN, URL, UUID, arbitrary alpha-numeric identifier, and a unique addressing path.
3. The appliance development toolkit of claim 1 wherein the at least one locator object comprises addressing information.
4. The appliance development toolkit of claim 3 wherein the addressing information is in the form of one of a URI, URN, URL, UUID, arbitrary alpha-numeric identifier, and a unique addressing path.
5. The appliance development toolkit of claim 1 wherein the converter is configured to export the builder file in the form of at least one of xml, html, relational database, text, and a binary file.
6. The appliance development toolkit of claim 5 wherein the converter is a simple converter.
7. The appliance development toolkit of claim 1 wherein the editor is configured to create at least one renderable asset where it forms part of the information.

### Appliance with User Interface Behavioral Model

1. An appliance configured to perform a cycle of operation on a physical article comprising:
   at least one control board having control software to control the cycle of operation,
   a graphical user interface in communication with the at least one control board for allowing a user to observe and interact with the appliance regarding the cycle of operation and comprising at least one instance of a user interface control,
   a binding map for associating the at least one user interface control instance or a property thereof with one of at least one locator object and at least one binding object associated with the at least one locator object wherein the the at least one locator object is associated with addressing information used to find renderable data for the at least one user interface control instance, and
   a software framework configured to run in a processor having memory in communication with the graphical user interface for acquiring the renderable data at runtime by resolving the location of the renderable data from the addressing information and retrieving the renderable data from the location for use by the graphical user interface,
   wherein the software framework dynamically renders the graphical user interface at runtime based on the associations and addressing information in the binding map.
2. The appliance of claim 1 further comprising an interface for receiving additional information in the binding map wherein the software framework can aquire new renderable data based on the additional information.
3. The appliance of claim 2 wherein the interface is a network interface for network communications.
4. The appliance of claim 1 further comprising a theme manager configured to change one of the locator object, the binding object, and the association between the at least one instance of a user interface control and the one of the the at least one locator object and the binding object to enable the software framework to dynamically re-render the graphical user interface at runtime using information resulting from the change.
5. The appliance of claim 1 wherein the theme manager initiates the change in response to the selection of a different theme.

### Meal Planning System

1. A meal planning system comprising:
   memory having appliance user domain data and control system domain data, wherein at least one instance of appliance user domain data is bound to at least one instance of control system domain data or at least one instance of other appliance user domain data, the appliance user domain data and the control system domain data being related to planning and preparing at least one meal,
   a communication path connected to the memory and connectable to a data sender
   wherein a query associated with criteria data referencing at least a portion of one of the control system domain data or the other appliance user domain data from the data sender to the memory over the communication path will return data including at least a portion of the at least one instance of appliance user domain data to the data sender so that the data sender can use the return data to affect the planning and preparing of the at least one meal.
2. The meal planning system of claim 1 further comprising a processor having a meal planning software engine, wherein the meal planning software engine is configured to interact with the memory to manage the planning and preparation of at least one meal.
3. The meal planning system of claim 2 further comprising a user interface in communication with the processor and the memory wherein a user can interact with the meal planning software engine.
4. The meal planning system of claim 1 wherein the appliance user domain data includes recipe domain data comprising at least one of ingredients, preparation instructions, purchasing instructions, and meal serving instructions.
5. The meal planning system of claim 4 wherein the other appliance user domain data includes ingredient substitution domain data comprising at least two sets each having an ingredient, a quantity, and a unit which are equivalent and substitutable with respect to the recipe domain data wherein the meal planning system can alter the meal plan when the criteria data from the data sender includes information from the other appliance user domain.
6. The meal planning system of claim 6 wherein the criteria data includes information from the ingredient substitution domain wherein the meal planning system can alter at least one of ingredients and ingredient portions associated with the at least one meal in response to the criteria data.
7. The meal planning system of claim 6 wherein the criteria data includes at least one identifier representing one of a participant of a meal, a profile of a meal participant, medical information about a participant, dietary needs of a participant, allergies of a participant, preferences of a participant, schedule of a participant, current ingredient inventory, and historical information.
8. The meal planning system of claim 1 wherein the criteria data includes at least one of the number of participants of a meal, medical information, dietary needs, allergies, preferences, and schedule wherein the meal planning system can alter at least one of ingredients and ingredient portions associated with the at least one meal in response to the criteria data.
9. The meal planning system of claim 8 wherein the other appliance user domain data includes nutrition domain data comprising nutritional information.
10. The meal planning system of claim 9 wherein the criteria data includes at least one of nutritional information, medical information, dietary needs, allergies, and preferences.
11. The meal planning system of claim 9 configured to transform the meal plan in response criteria data including ingredient information and in further response to nutrition information.
12. The meal planning system of claim 6 wherein the criteria data includes ingredient inventory data including information relating to the quantity or amount of foods and ingredients related to meal planning.
13. The meal planning system of claim 1 further configured to affect one of the appliance user domain data and the control system domain data in response to the binding.
14. The meal planning system of claim 13 wherein the appliance user domain data includes schedule domain data including a portion of at least one schedule, and the control system domain data includes meal preparation plan information including duration information, wherein the affect is to change at least one of the portion and the plan to make the portion and the plan compatible with respect to schedule and duration.
15. The meal planning system of claim 1 further comprising a cooking appliance having at least one control board connected to the communication path, wherein the at least a portion of the at least one appliance user instance is returned to the control board so that the bound control system domain data will affect operation of the control board.
16. The meal planning system of claim 15 wherein elements of the at least one appliance user instance include cooking vessel identifiers.
17. The meal planning system of claim 15 wherein elements of the at least one appliance user instance include cooking outcome identifiers.
18. The meal planning system of claim 15 further comprising a processor having a meal planning software engine, wherein the meal planning software engine is configured to interact with the memory to manage the planning and preparation of at least one meal, and further comprising a graphical user interface wherein a user can interact with the meal planning engine and initiate the query.
19. The meal planning system of claim 1 wherein the at least one control system instance includes a portion of the operational capabilities of at least one appliance wherein the meal planning system can alter the meal plan in response to receiving criteria data from the data sender including information about the available appliances for use in the preparing of the at least one meal.
20. The meal planning system of claim 19 wherein the at least one control system instance includes a portion of the available appliances.
21. The meal planning system of claim 19 further comprising a graphical user interface wherein a user specifies a portion of the available appliances.
22. The meal planning system of claim 19 further comprising a communication path connectable to at least one appliance wherein a portion of the available appliances is determined using the communications path.
23. The meal planning system of claim 22 wherein the portion of the available appliances is determined using the communications path via discovery message.
24. The meal planning system of claim 19 wherein the altered meal plan is changed relative to the time domain in response to the available appliances.
25. The meal planning system of claim 19 wherein the altered meal plan is changed relative to the cycles to be used on each of the available appliances.
26. The meal planning system of claim 19 wherein the altered meal plan is changed relative to the associations between the available appliances and at least one task included in the meal plan.
27. The meal planning system of claim 26 wherein the at least one task is selected from at least one of baking, broiling, convecting, cleaning, washing, chilling, mixing, blending, chopping, frying, simmering, boiling, freezing, cooling, chilling, warming, maintaining temperature, keeping warm, and microwaving.
28. The meal planning system of claim 19 further comprising a communication path connectable to at least one appliance, wherein the meal planning system is configured to send instructions to the at least one appliance in response to the meal plan.
29. The meal planning system of claim 28 wherein the instructions are one of a cycle definition and a command container.
30. The meal planning system of claim 28 wherein the instructions are derived from the operational capabilities of the at least one appliance.
31. The meal planning system of claim 30 wherein the operational capabilities are retrieved from the at least one appliance via network message.
32. An appliance user domain data system to enable at least one appliance user domain related application comprising:
   memory having appliance user domain data and control system domain data, wherein at least one instance of appliance user domain data is bound to at least one instance of control system domain data or at least one instance of other appliance user domain data, the appliance user domain data and the control system domain data being related to planning and preparing at least one user domain related activity,
   a communication path connected to the memory and connectable to a data sender
   wherein a query associated with criteria data referencing at least a portion of one of the control system domain data or the other appliance user domain data from the data sender to the memory over the communication path will return return data including at least a portion of the at least one instance of appliance user domain data to the data sender wherein the data sender can use the return data to affect the planning and preparing of the at least one domain related activity.
33. The appliance user domain data system of claim 32 wherein the domain related activity is one of shopping, buying household goods, cooking, laundry, cleaning, and storage.

## Claims

1. An appliance (12) configured to perform a cycle of operation on a physical article comprising at least one control board having control software to control the cycle of operation,
a graphical user interface (64) in communication with the at least one control board for allowing a user to observe and interact with the appliance (12) regarding the cycle of operation, and
a software framework (104) configured to run in a processor having memory in communication with the graphical user interface (64), **characterized by**:
the software framework (104) having theme definitions, access to a builder content information containing information with which the software framework (104) associates a theme definition with at least one resource (46), and a theme manager configured to change at least one theme to at least one different theme in response to a user selection of a theme definition or sensing of the information by at least one sensor,
wherein the software framework (104) dynamically renders the graphical user interface at runtime based on the at least one resource in response to the user selection of theme or the sensing so that a user can cause the control board to control the cycle of operation via the selected theme in the graphical user interface (64).

2. The appliance of claim 1 wherein the graphical user interface (64) further comprises at least one instance of a user interface control (62A) and wherein the builder content information further contains information with which the software framework (104) creates the at least one instance of user interface control (62A).

3. The appliance of claim 2 wherein the at least one instance comprises at least one property and the builder content information further comprises information from which the software framework (104) associates the at least one property with the at least one resource (46) to affect visualization of the at least one instance of a user interface control (62A) in the graphical user interface (64) in response to selection of the theme.

4. The appliance of claim 2 wherein the software framework (104) lazy loads the at least one resource contemporaneously with the activation of a user interface control (62A).

5. The appliance of claim 1 wherein the software framework is further configured to manage the memory of the processor in response to the selection of the theme.

6. The appliance of claim 5 wherein the management of the memory includes at least one of overwriting memory in use with the at least one different resource, allocating memory associated with the at least one resource, and deallocating memory associated with the at least one resource.

7. The appliance of claim 1 wherein the information includes an identifier of at least one of a person, a consumable, an article, or a consumable holder.

8. The appliance of claim 1 wherein the at least one sensor is a virtual sensor; or a virtual sensor which is a time observer, or a date observer; or is configured to sense a consumable, an article, or a person; or is a software agent configured to sense appliance control information, or is a virtual sensor which is in communication with a social network; or is a virtual sensor which is in communication with a remote data source connected via a network.

9. The appliance of claim 8 wherein the appliance control information includes at least one of information associated with the cycle of operation, a selected cycle of operation, cycle modifiers or selections thereof, cycle time, delay time, cycle duration, temperature, speed, energy usage, resource usage, water usage, waste heat capture, resource recycling, waste recycling, or at least one cycle outcome.

10. The appliance of claim 8 wherein the virtual sensor senses at least one of the weather, significant days, birthdays, anniversaries, and financial market conditions and wherein the graphical user interface displays information signifying the at least one of the weather, significant days, birthdays, anniversaries, or financial market conditions in response to one of the selected theme and the information.

11. The appliance of claim 8 wherein the rendering of the user interface changes in response to the communication with a social network.

12. The appliance of claim 8 wherein the virtual sensor is in communication with a calendar application wherein data from the calendar application is acquired from the virtual sensor to affect the rendering.

13. The appliance of claim 8 further comprising:
at least two theme definitions wherein each theme definition comprises an identifier,
wherein the software framework (104) has access to a content provider for acquiring a dataset from at least one source of data, at least one binding object and at least one user interface control object wherein the at least one binding object and the at least one user interface control object are directly or indirectly related, and
wherein the software framework (104) can change the relationship between the at least one blinding object and the at least one source af information in response to a runtime change to the theme identifier value of the memory via the theme manager, resulting in a graphical transformation of the user interface wherein the relationships with the at least one binding object enable the transformation to be made at runtime.
